(19) 

Europäisches
Patentamt
European
Patent Office
Office européen
des brevets

(11) **EP 4 692 895 A1**

(12) **EUROPEAN PATENT APPLICATION**
published in accordance with Art. 153(4) EPC

(43) Date of publication:
**11.02.2026 Bulletin 2026/07**

(21) Application number: **24779725.1**

(22) Date of filing: **19.03.2024**

(51) International Patent Classification (IPC):
**G02B 27/01** $^{(2006.01)}$ **B60K 35/23** $^{(2024.01)}$

(52) Cooperative Patent Classification (CPC):
**B60K 35/23; G02B 27/01**

(86) International application number:
**PCT/JP2024/010707**

(87) International publication number:
**WO 2024/203600 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.03.2023 JP 2023049499**

(71) Applicant: **Toray Industries, Inc.
Tokyo 103-8666 (JP)**

(72) Inventors:
• **MATSUI Hisato
Otsu-shi, Shiga 520-8558 (JP)**
• **MATSUO Yuji
Otsu-shi, Shiga 520-8558 (JP)**
• **UTO Takayuki
Otsu-shi, Shiga 520-8558 (JP)**

(74) Representative: **Mewburn Ellis LLP
Aurora Building
Counterslip
Bristol BS1 6BX (GB)**

(54) **HEAD-UP DISPLAY**

(57) An object of the present invention is to provide a head-up display (HUD) that can suppress double images in a wide range of configurations. The present invention proposes an HUD including a light source projecting an image; a projected image display member on which the image from the light source is projected; and a polarization control layer, wherein the polarization control layer is arranged between the light source and the projected image display member, and has a function of changing a polarization state of a light emitted from the light source, a polarized light component (referred to as a "S-polarized light component" for convenience) which is a S-polarized light with respect to the incidence plane when the projected image display member serves as a reflective surface and a polarized light component (referred to as a "P-polarized light component" for convenience) which is a P-polarized light with respect to the incidence plane when the projected image display member serves as a reflective surface satisfy the following formulas (1) and (2), and the projected image display member has an average reflectance from 5% to 100% at the wavelength range from 400 to 700 nm when a linear polarized light containing only the P-polarized light component is incident at an incident angle of 60°, and a transmittance from 50% to 100% for visible light when a natural light is incident at an incident angle of 0°.

$$\text{Sratio2} < \text{Sratio1} \qquad \text{formula (1)}$$

$$\text{Pratio2} \geq 0.51 \qquad \text{formula (2)}$$

where Sratio1 is a ratio of the S-polarized light component to the light emitted from the light source [(intensity of S-polarized light component)/(intensity of S-polarized light component + intensity of P-polarized light component)], Sratio2 is a ratio of the S-polarized light component to the light incident on the projected image display member [(intensity of S-polarized light component)/(intensity of S-polarized light component + intensity of P-polarized light component)], and Pratio2 is a ratio of the P-polarized light component to the light incident on the projected image display member [(intensity of P-polarized light component)/(intensity of S-polarized light component + intensity of P-polarized light component)].

EP 4 692 895 A1

**(Cont. next page)**

Fig. 2

## Description

Technical Field

The present invention relates to a head-up display suitable for use in transport equipment and buildings.

Background Art

In a head-up display that projects images onto a projected image display member such as laminated glass and displays the projected image superimposed on the background viewed through the projected image display member, double images caused by reflections from two surfaces, namely the inner and outer surfaces, of the projected image display member, have become an issue.

To address this issue, a method has been proposed in which a polarized reflective film is placed in a laminated glass to allow a P-polarized light image to be incident at the Brewster's angle of the laminated glass, thereby eliminating the double images (Patent Document 1). As another method to solve this issue, a method has been proposed in which a film that transmits light in the frontal direction and reflects only a P-polarized light in an oblique direction is placed in a laminated glass, and a P-polarized light image is made to be incident at the Brewster's angle of the laminated glass, thereby eliminating the double images (Patent Document 2).

Citation List

Patent Document

Patent Document 1: WO 2005/017600
Patent Document 2: WO 2019/198635

Summary of Invention

Technical Problem

However, since a light source installed in a conventional head-up display is designed to allow an image produced by light with a large amount of S-polarized light component to be incident on glass, it is not easy to eliminate double images even when the methods described in Patent Documents 1 and 2 are used. Furthermore, even when a light source is designed such that an image produced by light with a large amount of P-polarized light component is incident on the glass, there are various shapes of automobiles and laminated glass, and it is not easy to design a light source for each combination. In light of the above, an object of the present invention is to provide a head-up display that can suppress double images in a wide range of configurations.

Solution to Problem

The present invention aims to solve the above problems. That is, the present invention is a head-up display comprising: a light source projecting an image; a projected image display member on which the image from the light source is projected; and a polarization control layer, wherein the polarization control layer is arranged between the light source and the projected image display member, and has a function of changing a polarization state of light emitted from the light source, a polarized light component which is S-polarized light with respect to the incidence plane (this polarized light component is referred to as "S-polarized light component" for convenience) when the projected image display member serves as a reflective surface and a polarized light component which is P-polarized light with respect to the incidence plane (this polarized light component is referred to as a "P-polarized light component" for convenience) when the projected image display member serves as a reflective surface satisfy the following formulas (1) and (2), and the projected image display member has an average reflectance of 5% or more and 100% or less at wavelength range from 400 nm to 700 nm when a linear polarized light containing only the P-polarized light component is incident at an incident angle of 60°, and a transmittance of the visible light of 50% or more and 100% or less when a natural light is incident at an incident angle of 0°. It should be noted that:

$$\text{Sratio2} < \text{Sratio1} \qquad \text{formula (1)}$$

$$\text{Pratio2} \geq 0.51 \qquad \text{formula (2)}$$

where Sratio1 is a ratio of the S-polarized light component to the light emitted from the light source [(intensity of S-polarized light component)/(intensity of S-polarized light component + intensity of P-polarized light component)], Sratio2 is a ratio of the S-polarized light component to the light incident on the projected image display member [(intensity of S-polarized light component)/(intensity of S-polarized light component + intensity of P-polarized light component)], and Pratio2 is a ratio of the P-polarized light component to the light incident on the projected image display member [(intensity of P-polarized light component)/(intensity of S-polarized light component + intensity of P-polarized light component)].

The head-up display can also be in the following aspects and transport equipment and buildings can also be provided as shown below.

(1) A head-up display comprising: a light source projecting an image; a projected image display member on which the image from the light source is projected; and a polarization control layer, wherein the polarization control layer is arranged between the light source and the projected image display member, and has a function of changing a polarization state of light emitted from the light source, a polarized light component which is a S-polarized light with respect to the incidence plane (this polarized light component is referred to as a "S-polarized light component" for convenience) when the projected image display member serves as a reflective surface and a polarized light component which is a P-polarized light with respect to the incidence plane (this polarized light component is referred to as a "P-polarized light component" for convenience) when the projected image display member serves as a reflective surface satisfy the following formulas (1) and (2), and the projected image display member has an average reflectance of 5% or more and 100% or less at the wavelength range from 400 nm to 700 nm when a linear polarized light containing only the P-polarized light component is incident at an incident angle of 60°, and a transmittance of the visible light of 50% or more and 100% or less when natural light is incident at an incident angle of 0°.

$$\text{Sratio2} < \text{Sratio1} \qquad \text{formula (1)}$$

$$\text{Pratio2} \geq 0.51 \qquad \text{formula (2)}$$

where Sratio1 is a ratio of the S-polarized light component to the light emitted from the light source [(intensity of S-polarized light component)/(intensity of S-polarized light component + intensity of P-polarized light component)], Sratio2 is a ratio of the S-polarized light component to the light incident on the projected image display member [(intensity of S-polarized light component)/(intensity of S-polarized light component + intensity of P-polarized light component)], and Pratio2 is a ratio of the P-polarized light component to the light incident on the projected image display member [(intensity of P-polarized light component)/(intensity of S-polarized light component + intensity of P-polarized light component)].
(2) The head-up display according to (1), wherein the projected image display member comprises at least a transparent substrate and a reflective layer.
(3) The head-up display according to (2), wherein the projected image display member is a unit further including an adhesive layer and a hard coat layer, in which a transparent substrate, an adhesive layer, a reflective layer, and a hard coat layer are laminated in this order.
(4) The head-up display according to (2) or (3), wherein the reflective layer includes at least one of a multilayer laminated film consisting of 51 or more layers of different types of thermoplastic resins layered alternately, a metal layer, and a hologram layer.
(5) The head-up display according to any one of (1) to (4),

wherein the following relation is satisfied:

$$\text{Rp20} \leq \text{Rp40} < \text{Rp60} < \text{Rp70}$$

where Rp20, Rp40, Rp60, and Rp70 are the average reflectance (%) in a wavelength range from 400 nm to 700 nm when the linear polarized light containing only the P-polarized light component is incident on the projected image display member at angles of 20°, 40°, 60° and 70°, respectively, and
a variation in azimuth angle of the Rp60 is 10% or less.

(6) The head-up display according to any one of (1) to (5),

wherein for orientation axes on a surface of the display unit at points C, X1, X2, Y1, and Y2, the maximum angle among those formed by these orientation axes is 0° or more and 30° or less,

where the point C is the center of the projected image display member,

the point X1 is a midpoint between the point C and an upper end of an intersection line between a plane that includes the vertical direction and is orthogonal to the surface of the projected image display member at the point C and the surface of the projected image display member, the intersection line passing through the point C, the point X2 is a midpoint between the point C and a lower end of the same intersection line as that described for the point X1,

the point Y1 is a midpoint between the point C and a left end of an intersection line between a plane that includes the horizontal direction and is orthogonal to the surface of the projected image display member at the point C and the surface of the projected image display member, the intersection line passing through the point C, and the point Y2 is a midpoint between the point C and a right end of the same intersection line as that described for the point Y1.

(7) The head-up display according to (6), wherein in the projected image display member, an area (area A, nm·%), surrounded by optical spectra which are an optical spectrum at the wavelength range from 400 to 700 nm obtained by making the linear polarized light containing only the P-polarized light component incident at an incident angle of 60° along an incidence plane including an orientation axis at the point C, when a tangent plane including the point C serves as a reflective surface; and an optical spectrum at the wavelength range from 400 to 700 nm obtained by making the linear polarized light containing only the P-polarized light component incident at an incident angle of 60° along the incidence plane including an axis orthogonal to the orientation axis at the point C when a tangent plane including the point C serves as a reflective surface, satisfies the following relation:

$$1,000 \leq \text{area A} \leq 4,500.$$

(8) The head-up display according to (6) or (7), wherein in the image display unit, for each of the points C, X1, X2, Y1, and Y2, when an angle is determined, which is formed by an orientation axis at the point and an intersection line between the surface of the projected image display member and a plane that includes the horizontal direction and is orthogonal to the surface of the projected image display member at the point, the intersection line passing through the point, the maximum angle is 20° or less.

(9) The head-up display according to any one of (6) to (8), wherein in the projected image display member, an in-plane retardation determined for each of the points C, X1, X2, Y1, and Y2 is 3,000 nm or more and 10,000 nm or less, and a variation (standard deviation/average) in the values at these five points is 0.1 or less.

(10) The head-up display according to any one of (6) to (9), wherein in the projected image display member, an angle formed by an orientation axis at the point C of the projected image display member and an intersection line between a plane including a direction of electric field's oscillation of the P-polarized light component and a tangent plane including the point C is 70° or more and 90° or less.

(11) The head-up display according to any one of (1) to (10), wherein the polarization control layer includes either or both of a polarizing plate and a retardation plate.

(12) The head-up display according to any one of (1) to (11), wherein the polarization control layer has a polarizing plate, and an angle formed by a transmission axis of a polarizing plate and an intersection line between a plane including a direction of electric field's oscillation of the P-polarized light component and a surface of the polarizing plate on an incidence plane when the projected image display member serves as a reflective surface is 15° or less, and the light emitted from the light source is a light including at least one selected from the group consisting of a linear polarized light having an oscillating plane that forms a dihedral angle from -85° to -16° or from 16° to 85° with the plane including a direction of electric field's oscillation of the P-polarized light component on the incidence plane when the projected image display member serves as a reflective surface, an elliptical polarization, and a circular polarization.

(13) The head-up display according to any one of (1) to (11), wherein the polarization control layer has a λ/2 retardation plate, the light emitted from the light source is a linear polarized light, and the polarization control layer is placed to satisfy the following relation:

$$\theta_L/2 - 5 \, (°) < \theta_{\lambda/2} \, (°) < \theta_L/2 + 5 \, (°)$$

where $\theta_L$ (°) is a dihedral angle formed by an oscillating plane of the linear polarized light and the plane including a direction of electric field's oscillation of the P-polarized light component on the incidence plane when the projected image display member serves as a reflective surface, and

$\theta_{\lambda/2}$ (°) is an angle formed by a main orientation axis of the λ/2 retardation plate and an intersection line between a plane including the direction of electric field's oscillation of the P-polarized light component and a surface of the λ/2 retardation plate on the incidence plane when the projected image display member serves as a reflective surface.

(14) The head-up display according to any one of (1) to (11), wherein the polarization control layer has a λ/4 retardation plate, and the light emitted from the light source is a light including either elliptical polarization or a circular polarization, and satisfies the following condition 1 or condition 2:

Condition 1: The light emitted from the light source is an elliptical polarization or a circular polarization in which an electric field vector of an oscillating plane of the light rotates counterclockwise from the light source toward the projected image display member, and the head-up display is placed such that an angle formed by the main orientation axis of the polarization control layer and an intersection line between the surface of the polarization control layer and a plane including a direction of electric field's oscillation of the P-polarized light component on the incidence plane when the projected image display member serves as a reflective surface is in the range of 45° ± 15°;

Condition 2: The light emitted from the light source is an elliptical polarization or a circular polarization in which an electric field vector of an oscillating plane of the light rotates clockwise from the light source toward the projected image display member, and the head-up display is placed such that an angle formed by the main orientation axis of the polarization control layer and an intersection line between the surface of the polarization control layer and the plane including a direction of electric field's oscillation of the P-polarized light component on the incidence plane when the projected image display member serves as a reflective surface is in the range of - 45° ± 15°.

(15) The head-up display according to any one of (1) to (14), wherein the Sratio2 is 0.2 or less.

(16) The head-up display according to any one of (1) to (15), further including a case that houses the light source, the case having an aperture window with a transparent cover fitted therein through which a light from the light source passes.

(17) The head-up display according to (16), wherein the polarization control layer is laminated on the transparent cover.

(18) The head-up display according to (16), wherein the transparent cover has a function of the polarization control layer.

(19) The head-up display according to (16) to (18), wherein the transparent cover further has a heat shielding function.

(20) A transport equipment including the head-up display according to any one of (1) to (19), wherein the light source and the projected image display member are arranged such that a part or all of the light emitted from the light source toward the projected image display member is incident at an angle of 50° to 75° with respect to a tangent plane that is tangent to the center of the surface of the projected image display member.

(21) A transport equipment including the head-up display according to any one of (1) to (19), wherein θ2 (°), an incident angle of the light emitted from the light source with respect to a tangent plane that is tangent to the center of the surface of the projected image display member, is 35° or more and 70° or less, and an angle formed by the orientation axis of the projected image display member at the point C and the intersection line between a plane including a direction of electric field's oscillation of the P-polarized light component and the surface of the projected image display member is 70° or more and 90° or less.

(22) A building comprising the head-up display according to any one of (1) to (19). Advantageous Effects of Invention

According to the present invention, by controlling the polarized light emitted from the light source to increase the percentage of the P-polarized light components in the image projected onto the projected image display member, it is possible to suppress double images in a wide range of configurations of head-up displays, and it is also possible to obtain transport equipment and buildings equipped with such head-up displays.

Brief Description of Drawings

FIG. 1 is a side view showing an example of a (part of) vehicle using a head-up display of the present invention.
FIG. 2 is a side view showing an example of a (part of) vehicle using a head-up display of the present invention.
FIG. 3 is a schematic view showing an example of a cross section of a projected image display member included in a head-up display of the present invention.
FIG. 4 is a schematic view illustrating the effect of mounting a head-up display of the present invention.
FIG. 5 is a schematic view illustrating an azimuth angle of a projected image display member included in a head-up display of the present invention.

FIG. 6 is a graph showing the incident angle dependence of reflectance of a conventional transparent plastic film for P-polarized and S-polarized incident light having a wavelength of 550 nm.

FIG. 7 is a graph showing the incident angle dependence of reflectance of a conventional light-reflecting multilayer film for P-polarized and S-polarized incident light having a wavelength of 550 nm.

FIG. 8 is a graph showing the incident angle dependence of reflectance of a multilayer film including a reflective layer in the projected image display member constituting the head-up display of the present invention for P-polarized and S-polarized incident light having a wavelength of 550 nm.

FIG. 9 is a schematic view for explaining the arrangement of a $\lambda/2$ retardation plate and the control of the polarization direction.

FIG. 10 is a schematic view for explaining the arrangement of a $\lambda/4$ retardation plate and the control of the polarization direction.

FIG. 11 is a schematic view for illustrating an evaluation of head-up displays in Examples.

FIG. 12 is a diagram for explaining the process of setting point C.

FIG. 13 is a diagram for explaining the process of setting points Y1 and Y2.

FIG. 14 is a diagram for explaining a process for determining an angle at point C formed by the orientation axis and the intersection line between the surface of the projected image display member and the plane including the horizontal direction and orthogonal to the surface of the projected image display member at the point C.

FIG. 15 is a diagram for explaining points X1, X2, Y1, and Y2.

FIG. 16 is an explanatory diagram for explaining a method of determining the area A in an aspect.

FIG. 17 is an explanatory diagram for explaining a method of determining the area A in another aspect.

FIG. 18 is a diagram for explaining a process of determining the area A when a curved portion exists in spectrum A or spectrum B.

FIG. 19 is a diagram for explaining the principle of generation of a double image (ghost image).

Description of Embodiments

In the present invention, an image is projected from a light source onto a projected image display member, and the driver visually recognizes the reflected light from the projected image display member. In this regard, the reflective surface, incidence plane, P-polarized light component, and S-polarized light component used to explain the present invention are to be understood as follows, respectively, unless otherwise noted. That is,

Reflective surface (also referred to as boundary surface): a surface of a projected image display member facing a light source;

Incidence plane: a plane perpendicular to the reflective surface, and including a light (optical axis) incident onto the projected image display member from the light source and the light (optical axis) reflected by the surface of the projected image display member;

P-polarized light component: a component (vector) of a light (polarized light) whose electric field oscillates within the incidence plane; and

S-polarized light component: a component (vector) of a light (polarized light) whose electric field oscillates perpendicular to the incidence plane.

Further, while the head-up display of the present invention has a polarization control layer between a light source and a projected image display member, the direction of electric field's oscillation in a light emitted from a light source, a light incident on a polarization control layer, and a light emitted from a polarization control layer may be explained using the direction of oscillation of the P-polarized light component or the S-polarized light component, that is, explained based on the direction of oscillation thereof, regardless of the incidence plane when the surface of the layer serves as a reflective surface.

Hereinafter, the head-up display of the present invention will be specifically described. The head-up display of the present invention is a head-up display including: a light source projecting an image; a projected image display member on which the image from the light source is projected; and a polarization control layer, wherein the polarization control layer is arranged between the light source and the projected image display member, and has a function of changing a polarization state of a light emitted from the light source, a polarized light component which is a S-polarized light with respect to the incidence plane (this polarized light component is referred to as a "S-polarized light component" for convenience) when the projected image display member serves as a reflective surface and a polarized light component which is a P-polarized light with respect to the incidence plane (this polarized light component is referred to as a "P-polarized light component" for convenience) when the projected image display member serves as a reflective surface satisfy the following formulas (1) and (2), and the projected image display member has an average reflectance of 5% or more and 100% or less at wavelength range from 400 nm to 700 nm when a linear polarized light containing only the P-polarized light component is incident at an incident angle of 60°, and a transmittance of the visible light of 50% or more and 100% or less when a natural light is incident at an incident angle of 0°.

$$\text{Sratio2} < \text{Sratio1} \quad \text{formula (1)}$$

$$\text{Pratio2} \geq 0.51 \quad \text{formula (2)}$$

where Sratio1 is a ratio of the S-polarized light component to the light emitted from the light source [(intensity of S-polarized light component)/(intensity of S-polarized light component + intensity of P-polarized light component)], Sratio2 is a ratio of the S-polarized light component to the light incident on the projected image display member [(intensity of S-polarized light component)/(intensity of S-polarized light component + intensity of P-polarized light component)], and Pratio2 is a ratio of the P-polarized light component to the light incident on the projected image display member [(intensity of P-polarized light component)/(intensity of S-polarized light component + intensity of P-polarized light component)].

Below, embodiments of the present invention will be described, and the present invention should not be construed as being limited to the embodiment including the following examples, and naturally various changes may be made within a scope of achieving an object of the present invention without departing from the gist of the invention. In addition, for the purpose of simplifying the explanation, some of the explanations will be given using as an example the head-up display having a projected image display member including a multilayer film having a configuration in which two types of different thermoplastic resin layers are alternately multilayered, which is one of the preferred embodiments of the present invention. However, it is understood that the same applies to a head-up display including a multilayer film using three or more types of thermoplastic resin layers.

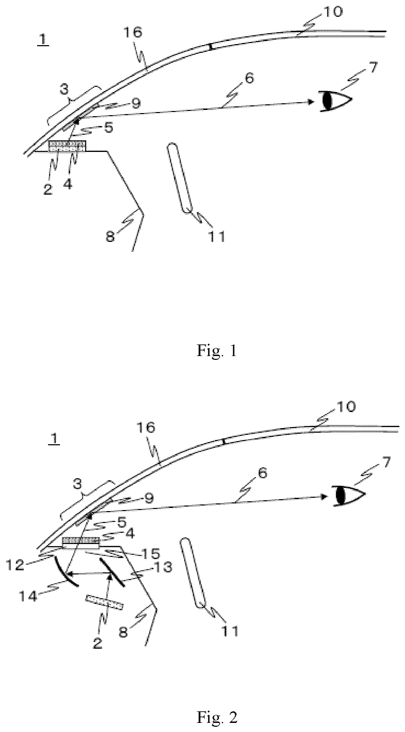

The head-up display of the present invention needs to include a light source projecting an image; a projected image display member on which the image from the light source is projected; and a polarization control layer. Aspects of the head-up display of the present invention will be specifically described. FIG. 1 is a side view showing an example of a (part of) vehicle using a head-up display of the present invention. In the head-up display 1, a light source 2 is provided on a dashboard 8, and a polarization control layer 4 is provided above the light source 2. The light (image) 5 (hereinafter also referred to simply as image 5) emitted from the light source 2 has its polarization state controlled by the polarization control layer 4, so that the intensity of the light that becomes the S-polarized light component is reduced, and the light is then incident on the projected image display member 3. The image 5 incident on the projected image display member 3 is reflected by the projected image display member 3 (the reflective layer 9 that mainly constitutes the projected image display member 3) and is visually recognized by the user 7 (the image reflected by the projected image display member and visually recognized by the user is represented by the reference numeral 6). The projected image display member 3 in the head-up display of the aspect shown in FIG. 1 has a configuration in which a reflective layer 9 is laminated on the surface of a transparent substrate 16, and in this aspect, the image is reflected on a part (that is, a portion on which the reflective layer 9 is laminated) of the transparent substrate 16 (the same applies to the head-up display shown in FIG. 2, which will be described later).

When the light emitted from the light source contains a large amount of S-polarized light component, reflection becomes strong at three locations: the surface of the projected image display member on the viewer's side, the surface opposite to the viewer's side (surface of the projected image display member), and the reflective layer, and three lights with shifted optical paths are emitted on the viewer's side, causing the projected image to appear multiplexed and be visually recognized as multiple images. Therefore, the configuration that suppresses the amount of S-polarized light component contained in the light source through the polarization control layer 4 is important in terms of suppressing the visibility of multiple images when an image is projected onto a projected image display member. On the other hand, when the P-polarized light component is incident at an incident angle around the Brewster's angle, almost no reflection occurs on the front and back surfaces of the projected image display member, and the only reflection that occurs on the projected image display member is due to the reflective layer 9, which is a constituent of the projected image display member, so the image formed by the light emitted from the light source can be clearly recognized visually.

FIG. 2 shows a side view of another example of a (part of) vehicle using a head-up display of the present invention. In the head-up display 1, a light source 2 is placed inside a dashboard 8, and light (image 5) emitted from the light source 2 is reflected by a plane mirror 13 and a concave mirror 14 and passes through a transparent cover 12, and the image 5 passes through an aperture window 15 on the top of the dashboard 8. The aperture window 15 is covered with a transparent cover 12, and when the light (image 5) passes through the polarization control layer 4 laminated on the transparent cover 12, it is controlled to satisfy formulas (1) and (2), so that the light intensity of the S-polarized light component contained in the image 5 is reduced and it is incident on the projected image display member 3. The image 5 incident on the projected image display member 3 is reflected by the projected image display member 3 (the reflective layer 9 that mainly constitutes the projected image display member 3) and is visually recognized by the user 7 (the image reflected by the projected image display member and visually recognized by the user is represented by the reference numeral 6).

As described above, the head-up display of the present invention can reduce double images by controlling the polarized light component of the light emitted from the light source with the polarization control layer, thereby suppressing the intensity of the S-polarized light component of light incident on the projected image display member. The head-up display of the aspect shown in FIG. 2 may also be configured such that the polarization control layer 4 is used as the transparent cover 12. Note that in the head-up display of the aspect shown in FIG. 1 and FIG. 2, the reference numeral 10 indicates a part of a vehicle, and the reference numeral 11 indicates a steering wheel.

The head-up display of the present invention may also be configured such that a transparent cover 12 has a heat shielding function, in an aspect shown in FIG. 2. This heat shielding function is to prevent near-infrared rays included in sunlight, etc. from entering the inside of the case and raising the temperature of the light source. To impart this function to the transparent cover 12, it is preferable that the transparent cover 12 have a band with a transmittance of 30% or less over at least a wavelength of 100 nm in the wavelength range from 850 nm to 2,600 nm. Examples of the method to impart the heat shielding function include a method of adding a heat shielding material to the inside of the transparent cover 12, and a method of forming a coating layer which includes a heat shielding material added onto the surface of the transparent cover 12. Examples of the heat shielding material include tin-doped indium oxide (ITO), antimony-doped tin oxide (ATO), lanthanum hexaboride (LaB6), cesium tungsten oxide (CWO), and phthalocyanine compounds.

As an aspect of the heat shielding function, polarized light absorption function or polarized light reflection function may be imparted to the transparent cover 12. These functions are to prevent the temperature of the light source from increasing due to entrance of light in the wavelength range from visible light to near-infrared light, which is included in sunlight, etc., into the inside of the case. To impart this function to the transparent cover 12, it is preferable that the transparent cover 12 have at least a band with a transmittance of 30% or less on the absorption or reflection axis of the S-polarized light component over a wavelength of 100 nm in the wavelength range from 400 nm to 2,600 nm. Examples of the material having a polarized light absorption function include a polarizing plate, and examples of the method of imparting the polarized light absorption function to the transparent cover 12 include a method of using a polarizing plate as the transparent cover 12, a method of laminating a polarizing plate on the transparent cover 12, and a method in which the transparent cover includes a dichroic dye. As dichroic dyes in this case, it is preferable to select dichroic dyes represented by anthraquinone dyes, azo dyes, and thiazole dyes. On the other hand, examples of the material having a polarized light reflection function include a wire-grid type polarized reflective plate with metallic wires unidirectionally arranged on a transparent cover 12, and a polarized reflective film obtained by alternately laminating and unidirectionally stretching two different types of thermoplastic resins (e.g., JP 2009-37235 A). Examples of the method of imparting the polarized light reflection function to the transparent cover 12 include a method of using a wire-grid type polarized reflective plate or a polarized reflective film as the transparent cover 12, a method of laminating a wire-grid type polarized reflective plate or a polarized reflective film on the transparent cover 12.

When the transparent cover 12 has a polarized light absorption function or a polarized light reflection function, it is preferable that the oscillating plane of the main polarized light component irradiated from the image and the oscillating plane of the polarized light component transmitted by the polarized light absorption or polarized light reflection function imparted to the transparent cover coincide with each other, from the viewpoint of suppressing a decrease in the intensity of the light (image 5) from the light source. Furthermore, the image 5 immediately after being projected from the light source 2 is linear polarized light, and it is more preferable to align the direction of the transmission axis of the polarizing plate, wire-grid type polarized reflective plate, or polarized reflective film with the direction of the linear polarized light of the image 5.

<Light Source>

Examples of the light source (e.g., light source 2 in the head-up display of the aspect shown in FIG. 1 or 2) used for the head-up display of the present invention include liquid crystal projectors, laser projectors, DLP (Digital Light Processing) projectors, LCOS (Liquid crystal on silicon) projectors, liquid crystals, organic ELs, micro LEDs, miniLEDs, and light emission devices provided with them. The light (image) emitted from the light source 2 may be projected directly onto the projected image display member 3, or it may be projected onto the projected image display member after being reflected by a mirror, collected through a lens, diffused, or passed through a polarized reflective unit. This mirror is preferably a cold mirror that reflects only visible light. With a normal mirror that reflects light ranging from visible light to infrared rays, when sunlight that has entered the projected image display device is reflected by the mirror and irradiated to the light source, the infrared rays cause a rise in temperature. However, a cold mirror does not reflect infrared rays, so it is possible to suppress the rise in temperature of the light source 2. The polarized reflective unit reflects a polarized light in one azimuth direction relative to its surface (reflection axis azimuth) and transmits a polarized light in a direction orthogonal to that direction (transmission axis azimuth), thereby reducing by approximately half the amount of a light, such as sunlight that enters from the outside and causes a rise in temperature inside the projected image display device. On the other hand, by adjusting the direction of the oscillating plane of the polarized light from the light source to align the azimuth of the transmission axis of the polarized reflective unit, the attenuation of the brightness of the light emitted from the light source can be suppressed.

\<Projected image display member\>

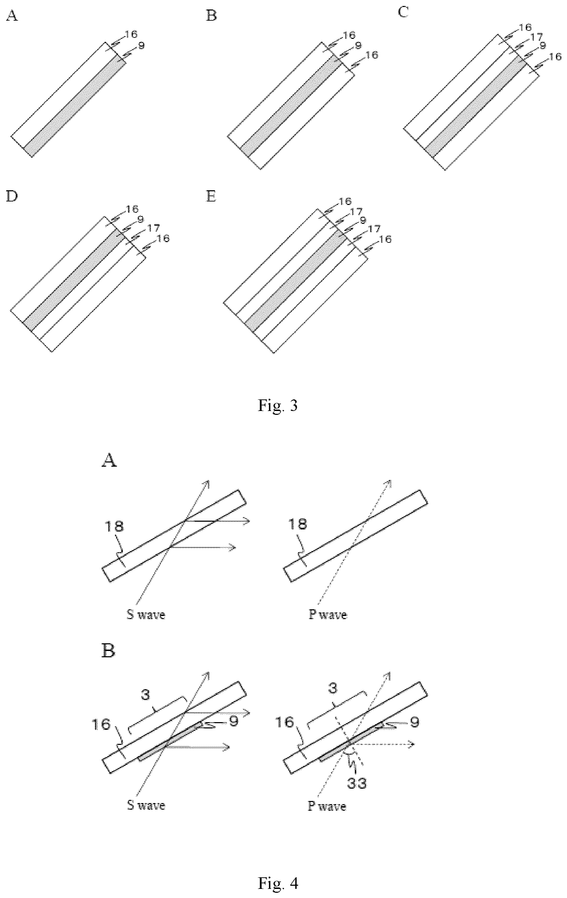

Specific examples of the aspect of the projected image display member included in the head-up display of the present invention will be described with reference to drawings. The projected image display member included in the head-up display of the present invention preferably has a configuration including at least a transparent substrate and a reflective layer. Specific examples of such an aspect include a configuration including one transparent substrate 16 and one reflective layer 9 (FIG. 3A), a configuration including a reflective layer 9 between two transparent substrates 16 (FIG. 3B), a configuration including a reflective layer 9 and one adhesive layer 17 between two transparent substrates 16 (FIG. 3C, FIG. 3D), and a configuration including a reflective layer 9 and two adhesive layers 17 between two transparent substrates 16 (FIG. 3E).

Examples of materials that can be used as the transparent substrate include glass and transparent resins, and the thickness thereof is preferably 1 mm or more in order to impart bearing properties. Examples of the glass that can be used includes plate glass, tempered glass, and laminated glass. Preferred examples of the transparent resin include polyethylene terephthalate, polycarbonate, acrylic, polyvinyl chloride, polyethylene, polypropylene, polymethylpentene, and copolymers thereof, and acrylonitrile-butadiene-styrene copolymers. These transparent resins may be a single resin type or a mixture of more than one types. In the aspect including more than one transparent substrates as shown in FIGS. 3B to 3E, these transparent substrates may be the same or different from each other.

Examples of the component that form the adhesive layer include vinyl acetate resins, vinyl chloride-vinyl acetate copolymers, ethylene-vinyl acetate copolymers, polyvinyl alcohol, polyvinyl butyral, polyvinyl acetal, polyvinyl ether, nitrile rubbers, styrene-butadiene rubbers, natural rubbers, chloroprene rubbers, polyamides, epoxy resins, polyurethanes, acrylic resins, celluloses, polyvinyl chloride, polyacrylate ester, and polyisobutylene. These components (adhesives) may be used alone or in combination of more than one types. If necessary, an adhesive modifier, a plasticizer, a heat stabilizer, an antioxidant, a UV absorber, an antistatic agent, a lubricant, a coloring agent, a crosslinking agent, or the like may be added. Examples of the forms of these adhesives before processing include liquid, gel, lump, powder, and film. Methods of curing the adhesive layer include solvent volatilization, moisture curing, heat curing, mixing with a curing agent, anaerobic curing, UV curing, thermofusion/cooling, and pressure-sensitive. Examples of lamination methods include lamination molding, injection molding, vacuum molding, pressure molding, combined vacuum and pressure molding, and autoclave molding. Base materials can be produced by using heating, pressure, and the above-mentioned method of curing the adhesive layer. The adhesive layer referred to here includes not only those that develop adhesiveness by curing the adhesive layer components, but also those whose adhesive layer components are in a semisolid or semi-liquid tacky state and develop adhesiveness in response to pressure.

The projected image display member used in the head-up display of the present invention is required to have an average reflectance of 5% or more and 100% or less at the wavelength range from 400 nm to 700 nm when a linear polarized light containing only a P-polarized light component is incident at an incident angle of 60°. The average reflectance (%) can be determined by measuring the reflectance of the linear polarized light containing only the P-polarized light component in the wavelength range from 400 to 700 nm at an incident angle of 60° with a spectrophotometer in 1 nm increments and calculating the average value (detailed measurement conditions are described below). For general transparent substrates such as transparent glass and transparent plastic film, the reflectance of the P-polarized light component decreases as the incident angle is gradually increased from 20° with respect to the normal of the film surface, and the reflectance becomes 0% at an angle known as the Brewster's angle. Therefore, it is difficult for ordinary transparent substrates to transmit a linear polarized light from the normal direction with respect to the substrate surface and to reflect a polarized light (P-polarized light) whose electric field oscillates in the direction perpendicular to the incidence plane on which the polarized light is incident obliquely. On the other hand, from the viewpoint of improving image display performance, the higher average reflectance of the linear polarized light containing only the P-polarized light component with the wavelength range from 400 nm to 700 nm incident at an incident angle of 60°, is more preferable, and the average reflectance is preferably 20% or more.

In the projected image display member used in the present invention, in order to attain an average reflectance of the linear polarized light containing only the P-polarized light component at wavelength range from 400 nm to 700 nm incident at an incident angle of 60° being 5% or more, the projected image display member preferably employs a configuration including a transparent substrate and a reflective layer. In a more preferable aspect, the reflective layer includes at least one of a multilayer laminated film consisting of 51 or more layers of different types of thermoplastic resins layered alternately as described below are laminated, a metal layer, and a hologram layer. The upper limit of the average reflectance of the linear polarized light containing only the P-polarized light component at the wavelength range from 400 nm to 700 nm incident at an incident angle of 60° is not particularly limited, but is 100% from the viewpoint of feasibility.

In the projected image display member, which has a reflective layer laminated on a part of the transparent substrate, like the head-up display in the aspects of FIG. 1 and FIG. 2, in order to bring the visibility of the background in the region on which the reflective layer is laminated close to that in the region on which the reflective layer is not laminated, the upper limit of the average reflectance of the linear polarized light containing only the P-polarized light component at wavelength range from 400 nm to 700 nm incident at an incident angle of 60°, is preferably 50%, and more preferably 45%, in the projected image display member used in the present invention. By setting the average reflectance of the linear polarized light containing only the P-polarized light component to the upper limit or less, users of the head-up display can use the head-up display without feeling uncomfortable about the difference in visibility between the region on which the reflective layer is laminated and the region on which the reflective layer is not laminated.

In the head-up display of the present invention, the surface of the projected image display member is required to have a transmittance of 50% or more and 100% or less in the visible light wavelength range when a natural light is incident at an incident angle of 0°. Here, the phrase, "the surface of the projected image display member has a transmittance of 50% or more and 100% or less in the visible light wavelength range when a natural light is incident at an incident angle of 0°," specifically indicates that the average transmittance of the natural light at wavelength range from 400 to 700 nm incident perpendicularly to the surface of the projected image display member is 50% or more and 100% or less. When the transmittance of light in the visible light region with wavelength range from 400 to 700 nm is high, the projected image display member has transparency similar to that of transparent glass or transparent plastic film. Therefore, when the background is observed through the projected image display member of this aspect, good visibility of the background can be obtained. From the viewpoints described above, the transmittance is preferably 70% or more, more preferably 80% or more, and still more preferably 90% or more. When the transmittance is 80% or more, the user can visually recognize the background without noticing the presence of the projected image display member, and when the transmittance is 90% or more, this effect becomes more prominent. The upper limit of the transmittance is 100%, but from the viewpoint of feasibility, an upper limit of about 99% is practical. In addition, high transmittance of the light in the visible light region of the wavelength range from 400 to 700 nm suppresses the reflection of surrounding scenery, other than images projected from the light source, on the projected image display member, and also provides good visibility of the background when the background is observed through the projected image display member.

An example of the specific aspect in which the transmittance of the visible light wavelength range when a natural light is incident at an incident angle of 0° on the surface of the projected image display member is 50% or more and 100% or less is an aspect of a configuration in which the projected image display member of the present invention includes a transparent substrate and a reflective layer, the reflective layer including at least one of a multilayer laminated film consisting of 51 or more layers of different types of thermoplastic resins layered alternately as described below are laminated, a metal layer, and a hologram layer. Details of the multilayer film, metal layer, and hologram layer will be described below. The transmittance of the light incident perpendicularly on the surface of the projected image display member can be determined by measuring the transmittance of the light at the wavelength range from 400 to 700 nm at an incident angle of 0° with a spectrophotometer in 1 nm increments and calculating the average value (detailed measurement conditions are described below).

<Polarization Control Layer>

In the head-up display of the present invention, a polarization control layer is placed between the light source and the projected image display member, and the light emitted from the light source has a function of changing the polarization state, so that the light emitted toward the projected image display member is required to have its polarization state changed by passing through the polarization control layer and be incident on the projected image display member. Examples of the polarization control layer that can be used in the head-up display of the present invention include a polarizing plate and a retardation plate. That is, the head-up display of the present invention controls the polarized light of the light emitted from the light source to increase the intensity of the P-polarized light component of the light incident on the projected image display member and decrease the intensity of the S-polarized light component, and from the viewpoint of suppressing visibility of a double image and suppressing reduction in visibility when wearing polarized sunglasses, the polarization control layer preferably includes either or both of a polarizing plate and a retardation plate. Polarized sunglasses contain a large amount of light in which electric field oscillates in a direction close to the S-polarized light component of the light contained in sunlight, which is reflected by water surfaces or external objects, specifically light in which electric field oscillates in a direction parallel to the horizontal plane, causing glare. Therefore, polarized sunglasses are often designed to block such light.

Examples of the polarizing plate that can be used for the head-up display of the present invention include a polyvinyl alcohol film impregnated with iodine or a dichroic dye and uniaxially stretched, having both surfaces laminated with a protective film, a wire-grid type polarized reflective plate including metal wires arranged unidirectionally on a transparent substrate, and a polarized reflective film including two types of different thermoplastic resins alternately laminated, which are unidirectionally stretched (e.g., JP 2009-37235 A). By using a polarizing plate as the polarization control layer, the direction of the light passing through the polarizing plate is controlled to be in the direction of the transmission axis of the polarizing plate. Therefore, it is preferable to place the polarizing plate such that its transmission axis direction coincides with intersection line between the surface of the polarizing plate and a plane that contains the direction of electric field's oscillation of the P-polarized light with respect to the incidence plane when the projected image display member serves as the reflective surface.

Examples of the retardation plate that can be used in the head-up display of the present invention include a λ/2 retardation plate having a retardation of 240 nm or more and 320 nm or less at a wavelength of 560 nm, and a λ/4 retardation plate having a retardation of 100 nm or more and 180 nm or less at a wavelength of 560 nm.

The retardation plate preferably contains a thermoplastic resin or liquid crystal as a main component, and the thermoplastic resin preferably contains any one of polyvinyl alcohol, polycarbonate, cycloolefin, and polymethyl methacrylate as a main component. It is preferable that polyvinyl alcohol, polycarbonate, cycloolefin, and polymethyl methacrylate be stretched in the form of a film or sheet in at least one direction to impart birefringence.

Ethylenically unsaturated group such as an acryloyl group, a methacryloyl group, and a styryl group, and cationic polymerizable groups such as an epoxy group and an oxetane group are preferred as liquid crystals. The shape of the liquid crystal may be rod-like, disk-like, or the like. When the main component of the retardation plate is liquid crystal, it is preferable to disperse the liquid crystal in a matrix, and then apply it onto a base material or a multilayer film for unidirectional orientation. Examples of the orientation method include a rubbing method in which a roller is pressed and then rotated, and a photo-orientation method in which a light such as an ultraviolet light or a visible light is irradiated as a linear polarized light. The amount of retardation of the retardation plate can be controlled by the stretching ratio for unidirectional stretching, the rotation speed and rubbing time of the rubbing roller, the irradiation intensity and irradiation time when irradiating a light as a linear polarized light, and the thickness of the thermoplastic resin or liquid crystal, or the like.

Further, the thickness of the retardation plate is not particularly limited, but preferably 1 μm to 200 μm, for example. When the retardation plate contains a thermoplastic resin as a main component, the thickness is more preferably 5 μm to 100 μm, and when the retardation plate contains liquid crystals as a main component, the thickness is more preferably 1 μm to 20 μm. In addition, to impart bearing properties, it is also preferable to laminate a transparent substrate with retardation close to 0 nm and the retardation plate.

Since the λ/2 retardation plate can change the direction of electric field's oscillation of a linear polarized light, it is preferable to use a λ/2 retardation plate when the light emitted from the light source toward the projected image display member contains only the S-polarized light components that oscillate in the direction orthogonal to the incidence plane when the projected image display member serves as a reflective surface. An example of polarization conversion from an S-polarized light component to a P-polarized light component (or polarization conversion from a P-polarized light component to an S-polarized light component) by a λ/2 retardation plate will be described. When a light passes through a λ/2 retardation plate with a retardation of 280 nm at a wavelength of 560 nm such that the angle formed by the oscillating plane of the S-polarized light component and the plane including the main orientation axis of the λ/2 retardation plate is 45°, the direction of oscillation of the electric field of the light changes by 90°. This conversion efficiency is maximum at an angle of 45° with the λ/2 phase difference plate, and the effect decreases as the angle deviates from 45°. Therefore, the angle formed by the oscillating plane of the S-polarized light component and the plane including the orientation axis of the λ/2 retardation plate is preferably in the range of 15° to 75° or 105° to 165°, and more preferably in the range of 30° to 60° or 120° to 150°.

Since the λ/4 retardation plate can convert the circular polarization or the elliptical polarization to the linear polarized light, the λ/4 retardation plate is preferably used when the light emitted from the light source contains either the circular polarization or the elliptical polarization. An example of polarization conversion from a circular polarization to a P-polarized light component by a λ/4 retardation plate will be described. When a circular polarization passes through a λ/4 retardation plate with a retardation of 140 nm at a wavelength of 560 nm, the circular polarization is converted into a linear polarized light, and an angle formed by the main orientation axis of the λ/4 retardation plate and the direction of the intersection line between the oscillating plane of the polarized light and the surface of the λ/4 retardation plate is an azimuth of 45°. Therefore, it is preferable to place the λ/4 retardation plate so that the azimuth of 45° with respect to its main orientation axis is the P-polarized light component.

The head-up display of the present invention is required to satisfy the following formula (1), where Sratio1 is a ratio of the S-polarized light component to the light emitted from the light source [(intensity of S-polarized light component)/(intensity of S-polarized light component + intensity of P-polarized light component)], and Sratio2 is a ratio of the S-polarized light component to the light incident on the projected image display member [(intensity of S-polarized light component)/(intensity of S-polarized light component + intensity of P-polarized light component)].

$$\text{Sratio2} < \text{Sratio1} \qquad \text{formula (1)}$$

By satisfying the formula (1), in the head-up display of the present invention, the light intensity of the polarized light component that becomes an S-polarized light with respect to the incidence plane when the surface of the projected image display member serves as a reflective surface is reduced. Therefore, double images can be suppressed. The intensity ratio of the S-polarized light component contained in the light emitted by the light source being Sratio2 <Sratio1 is achieved by using the polarization control layer mentioned above.

The head-up display of the present invention is required to satisfy the following formula (2), where Pratio2 is a ratio of the P-polarized light component to the light incident on the projected image display member [(intensity of P-polarized light component)/(intensity of S-polarized light component + intensity of P-polarized light component)]. When Pratio2 is 0.51 or more, it is possible to suppress reduction in visibility when wearing polarized sunglasses and double images. The Pratio2 being 0.51 or more can be attained by using the polarization control layer mentioned above to increase the P-polarized light component in the light incident on the projected image display member.

$$Pratio2 \geq 0.51 \qquad formula\ (2)$$

Next, the effects of mounting the head-up display on prevention of the double image, etc., will be explained with reference to the drawings. As shown in FIG. 4, the projected image display member (reference numeral 18, in FIG. 4A) using the glass or transparent plastic film according to the conventional technology is designed such that the projected image display member reflects the S-polarized light component and transmits the P-polarized light component. For this reason, a light mainly composed of the S-polarized light component is used for a light incident on the projected image display member. The double image is mainly generated when a light is reflected on each of the surface of the projected image display member 18 on the viewer's side and the surface opposite to the viewer's side and the spatial positions of the front and back surfaces of the projected image display member are different, which causes the optical paths of the lights to be displaced and the image appears to be a double image. In addition, the reduction in visibility when wearing polarized sunglasses occurs because the projected image reflected by the front and back surfaces of the projected image display member originates from the S-polarized light component, and when the projected image is viewed through polarized sunglasses, which absorb the S-polarized light component, the light of the projected image is absorbed by the polarized sunglasses.

On the other hand, the present invention is designed such that the light incident on the projected image display member contains a large amount of the P-polarized light component, making it possible to maintain the luminance of the projected image even when wearing polarized sunglasses.

The projected image display member used in the head-up display of the present invention (reference numeral 3 in FIG. 4B (a configuration in which a reflective layer 9 is laminated on a transparent substrate 16)) has the characteristic that the projected image display member reflects a P-polarized light component, and therefore a light containing a large amount of the P-polarized light component can be used as a light for a projected image incident on the display surface of the projected image display member. For the reasons described above, the P-polarized light component is reflected only by the reflective layer 9 in the projected image display member 3 and is not reflected by the surface of the transparent base material on the side opposite to the viewer's side, thereby reducing the problem of double images. In addition, since the P-polarized light component passes through polarized sunglasses, the reduction in visibility of the projected image caused by the polarized sunglasses is also reduced. From the viewpoint described above, the intensity ratio of the P-polarized light component is required to be 51% or more, and more preferably 80% or more, with the upper limit being approximately 99.99% from the viewpoint of polarization control accuracy. In the projected image display device of the present invention, when the intensity ratio of the P-polarized light component is 51% or more, the incident angle 33 of the light that forms the image is preferably 30° or more, more preferably in the range of 50° to 75°.

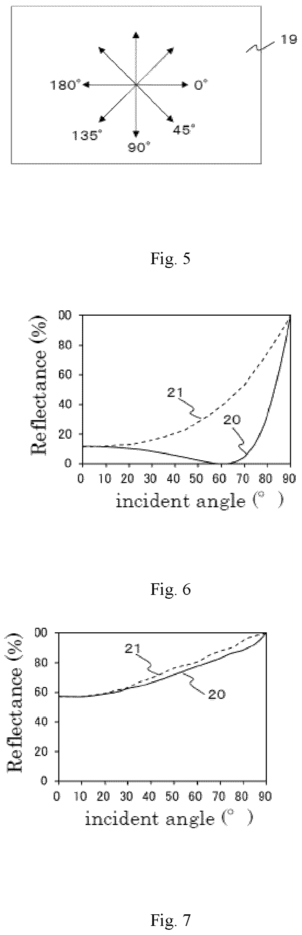

FIG. 6 is a graph (one example) showing the angle dependence of the reflectance of the P-polarized light and the S-polarized light when a light beam with a wavelength of 550 nm is incident from the air onto a conventional transparent plastic film (a typical transparent substrate) at different incident angles. Here, an example with a wavelength of 550 nm is shown, but other visible light wavelengths have relations generally similar to that shown in FIG. 6. In FIG. 6, reference numerals 20 and 21 denote the reflectance of the P-polarized light and the reflectance of the S-polarized light, respectively. As shown in FIG. 6, the reflectance of the P-polarized light decreases when the incident angle is 30° or more, and decreases significantly when the incident angle is in the range of 50° to 75°. Therefore, in a configuration in which a reflective layer is provided on a transparent substrate, by making a light containing a large amount of the P-polarized light components incident on the projected image display member at an incident angle in the range from 50° to 75°, reflection does not occur on the surface of the transparent support that constitutes the projected image display member, but occurs only on the reflective layer 9, thereby greatly suppressing double images.

In the head-up display of the present invention, it is preferable that the projected image display member is a unit further including an adhesive layer and a hard coat layer, wherein a transparent substrate, an adhesive layer, a reflective layer, and a hard coat layer, are laminated in this order. By attaching the reflective layer to the transparent substrate via an adhesive layer, it becomes easy to impart the characteristic of an average reflectance of 5% or more and 100% or less at the wavelength range from 400 nm to 700 nm when light that is a P-polarized light component is incident on the projected image display member such that an incident angle is 60° with respect to a glass surface such as window glass of an existing buildings or automobile glass. Further, inclusion of a hard coat layer can suppress scratches on the reflective layer. As the hard coat layer, for example, a urethane acrylate layer having a crosslinked structure can be used.

The projected image display member used in the present invention preferably satisfies the following relation:

$$Rp20 \leq Rp40 < Rp60 < Rp70$$

where Rp20, Rp40, Rp60, and Rp70 are the average reflectance (%) in a wavelength range from 400 nm to 700 nm when linear polarized light containing only the P-polarized light component is incident on the projected image display member at angles of 20°, 40°, 60° and 70°, respectively. Such an aspect is effective in an aspect that does not have an angle corresponding to the Brewster's angle. Therefore, with the projected image display member of this aspect, the reflectance of the P-polarized light component contained in the light incident obliquely can be relatively higher than the reflectance of the P-polarized light component contained in the light incident from the front to the projected image display member, and when a light containing a large amount of the P-polarized light component is used as a light source irradiating an image through the polarization control layer, the image can be projected more clearly. The average reflectance of the linear polarized light containing only the P-polarized light component in the wavelength range from 400 to 700 nm can be determined by measuring the reflectance of the P-polarized light component in this band with a spectrophotometer in 1 nm increments and calculating the average value (detailed measurement conditions are described below).

One example of a method for satisfying the above-described relation: Rp20 ≤ Rp40 < Rp60 < Rp70 is an aspect including a multilayer laminated film consisting of 51 or more layers of different types of thermoplastic resins layered alternately, which will be described in detail later.

The projected image display member used in the present invention preferably has a variation in azimuth angles of Rp60 of 10% or less, from the viewpoint of maintaining the same level of display performance such as brightness of information regardless of the azimuth from which the image is projected. The azimuth angle used herein refers to each azimuth angle (0°, 45°, 90°, 135°, 180°), taking an angle (determined clockwise from the reference), formed by a certain direction with respect to the direction on the viewer's right (reference direction), as 0°, when the viewer is in a longitudinal direction of the projected image display member 19 as shown in FIG. 5. The variation in the azimuth angle refers to the difference between the maximum and minimum values of the average reflectance determined for each azimuth angle from the average reflectance at each azimuth angle (Rp60 (0°), Rp60 (45°), Rp60 (90°), Rp60 (135°), Rp60 (180°) respectively) measured at the above azimuth angles (0°, 45°, 90°, 135°, 180°). From the above viewpoint, it is preferable that the variation in azimuth angle at an incident angle of 60°, i.e., Rp60, is as small as possible, and the lower limit is 0%, i.e., no variation at all in azimuth angle.

Rp60 (0°), Rp60 (45°), Rp60 (90°), Rp60 (135°), and Rp60 (180°) can be measured with a spectrophotometer by making a light containing only the P-polarized light component incident at an incident angle 60° for each azimuth angle onto the projected image display member, measuring reflectance in 1 nm increments in the wavelength range from 400 to 700 nm, and determining the average value. Here, five azimuth angles: 0°, 45°, 90°, 135°, and 180°, clockwise based on the azimuth angle in the long side direction of the projected image display member 19 taken as 0°, are adopted as the azimuth angle. When the variation in azimuth angle of Rp60 is less than 10%, the display performance such as brightness of the information can be maintained at the same level regardless of the azimuth from which the image is projected.

In order to reduce the variation in azimuth angle of Rp60, for example, the reflective layer included in the projected image display member of the present invention is a multilayer film described below in which two or more different thermoplastic resin layers are alternately laminated such that 51 or more layers are laminated, and the unevenness in refractive index in the in-plane direction of the multilayer film is reduced. To reduce the unevenness in the refractive index in the in-plane direction of the film, specifically, the film is stretched uniformly across the entire surface so as to reduce the difference in the orientation state between the longitudinal direction and the width direction of the film during the biaxial stretching of the film, for example. This effect is one of the features of the projected image display member of the present invention, which is difficult to achieve with the polarized reflective film of the prior art.

In the projected image display member included the head-up display of the present invention, the reflective layer preferably includes at least one of a multilayer laminated film consisting of 51 or more layers of different types of thermoplastic resins layered alternately, a metal layer, and a hologram layer. When the reflective layer includes at least one of the multilayer film, a metallic layer, and a holographic layer, it becomes easier to achieve optical characteristics where the average reflectance of the light at wavelength range from 400 nm to 700 nm, the light containing only the P-polarized light component incident at the incident angle of 60° on the projected image display member used in this invention, is 5% or more and 100% or less.

In the head-up display of the present invention, for orientation axes on a surface of the projected image display member at points C, X1, X2, Y1, and Y2, the maximum angle among those formed by these orientation axes is 0° or more and 30° or less, where the point C is the center of the projected image display member, the point X1 is a midpoint between the point C and an upper end of an intersection line between a plane that includes the vertical direction and is orthogonal to the surface of the projected image display member at the point C and the surface of the projected image display member, the intersection line passing through the point C, the point X2 is a midpoint between the point C and a lower end of the same intersection line as that described for the point X1,

the point Y1 is a midpoint between the point C and a left end of an intersection line between a plane that includes the horizontal direction and is orthogonal to the surface of the projected image display member at the point C and the surface of the projected image display member, the intersection line passing through the point C, and
the point Y2 is a midpoint between the point C and a right end of the same intersection line as that described for the point Y1.

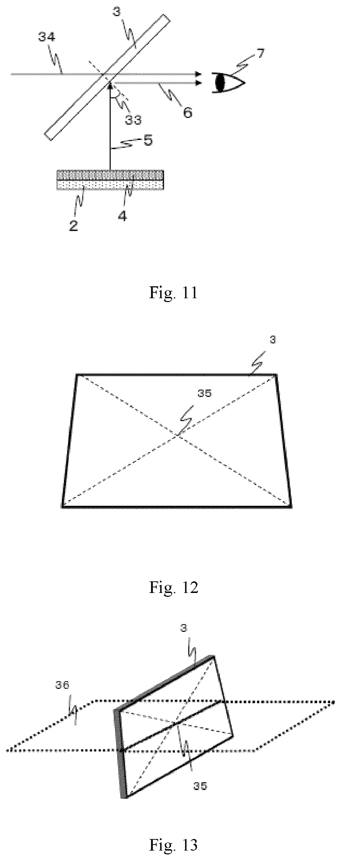

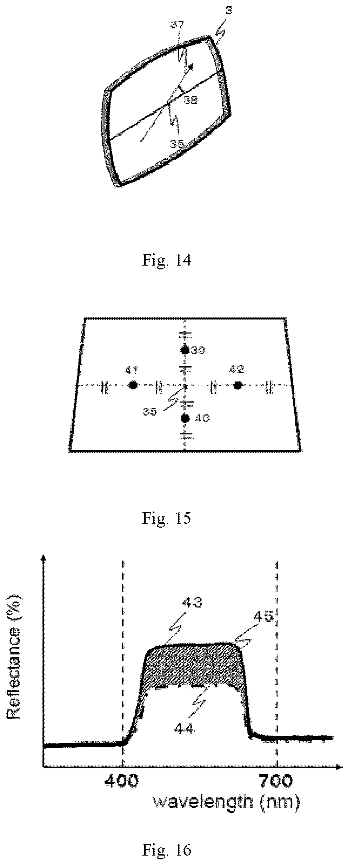

First, how to determine the point C and the reference axis C will be specifically described with reference to the drawings. The projected image display member is often used after being cut out or shaped as a film having a rectangular outer edge. When the outer edge of the projected image display member is rectangular, the intersection of the diagonals is point C (reference numeral 35), as shown in FIG. 12. When the outer edge is other than rectangular, the center of gravity of the shape formed by the outer edge is regarded as the point C. As shown in FIG. 13, an intersection line 37 (reference axis C) is assumed between the surface of the projected image display member 3 and a horizontal plane (reference numeral 36) passing through the point C, and the intersection point between the outer edge of the display unit and the intersection line 37 is the left end or right end, and the midpoint between the left end or right end and the point C is point Y1 or point Y2, respectively. Similarly, an intersection line is assumed between the surface of the projected image display member 3 and a vertical-plane passing through the point C, and the intersection point between the outer edge of the display unit and the intersection line is the upper end or bottom end, and the midpoint between the upper end or bottom end and the point C is point X1 or point X2, respectively (see, FIG. 15).

In this specification, the orientation axis means the direction with the highest refractive index when a refractive index ellipsoid is determined in a plane parallel to the surface of the projected image display member. The orientation axis is determined at each of points C, X1, X2, Y1, and Y2, and the angle formed by these orientation axes is determined. The angle may be determined with respect to a reference axis. For example, for the point C, the angle 40 with respect to the intersection line 37 is determined as shown in FIG. 15. Next, the angle formed by a straight line parallel to the intersection line and passing through each of points X1, X2, Y1, and Y2 and the orientation axis determined at each point is determined, thereby making it possible to determine the angle between the orientation axes at any two points. For example, when the angle between the intersection line 37 and the orientation axis at the point C is +10° and the angle between the intersection line 37 and the orientation axis at the point X1 is -5° (the upper end side of the projected image display member is positive), the angle between the orientation axis at the point C and the orientation axis at the point X1 is determined to be 15°.

The angle between the two axes can be either acute or obtuse, and the angle between the orientation axes is determined as an angle within the range of 0 to 90°. When the orientation axes are parallel, the angle is 0°. A specific method for determining the orientation axis is as described in the examples section.

In the head-up display of the present invention, the amount of the P-polarized light component contained in the light incident on the projected image display member satisfies formula (2). However, even when such light is incident on the projected image display member, a misalignment of the orientation axis at any point on the surface of the projected image display member or unevenness in the retardation may change the polarization direction of the light incident on the projected image display member (i.e., the intensity ratio of the P-polarized light component to the S-polarized light component may change). That is, even when linear polarized light containing only the P-polarized light component is incident, there may be a case where a light containing the S-polarized light component is generated. The light of the S-polarized light component produced in this way is reflected on the surface of the transparent image display unit opposite to the viewer's side, which may cause the same phenomenon as the generation of the double image described above. This phenomenon tends to be more pronounced when there is a pair of orientation axes that form an angle of nearly 45°. Therefore, it is advantageous in terms of suppressing the generation of the double image to set the maximum angle among the angles formed by the orientation axes to be 0° or more and 30° or less. It is preferable that the projected image display member is placed such that the angle between the orientation axis at the point C and the intersection line 37 is 0°.

As the method of setting the maximum angle among the angles formed by the orientation axes at the points C, X1, X2, Y1, and Y2 to be 0° or more and 30° or less, it is preferable to produce the material that performs the reflection function in the projected image display member (for example, a reflective layer represented by the multilayer film described below) by adjusting the production conditions thereof, including the stretching ratio between the longitudinal direction and the width direction, the stretching speed in the width direction, and the stretching magnification in the heat treatment step, to the preferred conditions described below. In other words, when obtaining a film-like projected image display member, it is convenient to prepare it by stretching a softened material, but it is desirable to select stretching conditions that minimize the occurrence of uneven stretching in the central part and the gripped parts (edge parts) during stretching.

In the head-up display of the present invention, an area (area A, nm·%) of a region (main surrounding region) surrounded by optical spectra which are an optical spectrum (optical spectrum A) at the wavelength range from 400 to 700 nm obtained by making the linear polarized light containing only the P-polarized light component incident at an incident angle of 60° along an incidence plane including an orientation axis at the point C, when a tangent plane including the point C serves as a reflective surface; and an optical spectrum (optical spectrum B) at the wavelength range from 400 to 700 nm obtained by making the linear polarized light containing only the P-polarized light component incident at an incident angle of 60° along the incidence plane including an axis orthogonal to the orientation axis at the point C when a tangent plane including the point C serves as a reflective surface, preferably satisfies the following relation:

$$1,000 \leq \text{area A} \leq 4,500.$$

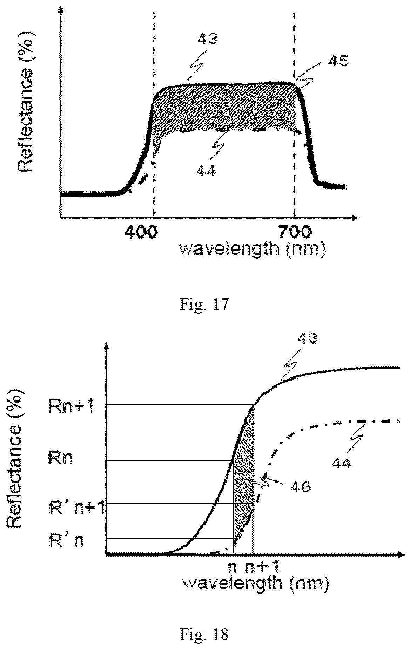

The method for determining area A is explained in detail with reference to FIGS. 16 and 17. In FIGS. 16 and 17, reference numeral 43 denotes spectrum A, reference numeral 44 denotes spectrum B, and reference numeral 45 denotes the main surrounding region.

For each of the spectra A and B, the projected image display member as a sample is placed on a sample stage of a spectrophotometer, a light beam is incident at a predetermined incident angle, and the reflected light is passed through a polarizing plate to obtain a spectrum in the wavelength range from 400 to 700 nm. In this case, when the sample is placed on the sample stage, the relation between the incidence plane and the orientation axis of the sample is adjusted to determine which of the spectrum A or the spectrum B is to be obtained, and the absorption axis of the polarizing plate is adjusted to extract the linear polarized light which contains only the P-polarized light component from the light from the light source and make it incident on the sample. When the wavelength of the incident light has a pitch width (for example, when the reflectance is determined every 1 nm) due to the specification of the spectrophotometer, as shown in FIG. 18, the area of the relevant pitch width portion is calculated by trapezoidal approximation, and the areas of all the pitch width portions are totalized to calculate the area A (see mathematical formula (A) where A is area A).

[Math. 1]

$$A = \int_a^b \{ \left( R_n - R'_n \right) + \left( R_{n+1} - R'_{n+1} \right) \}/2 \ dn \qquad (A)$$

By using a projected image display member with an area A (nm·%) of 1,000 or more and 4,500 or less and making the direction indicated by the intersection line between the P-polarized light component of the light incident on the projected image display member and the projected image display member parallel to the orientation axis direction of the projected image display member, both the visibility of the background and the clarity of the image can be made even more pronounced. On the other hand, the difference in orientation between the two orthogonal directions is moderately suppressed, which is also advantageous in that the image is less likely to become dark even when viewed from an oblique angle and reflections of the surrounding scenery are reduced. In other words, such a projected image display member is a suitable material for a head-up display that projects images over a wide range and at a wide viewing angle.

Among the components constituting the projected image display member of the present invention, a reflective layer (e.g., the multilayer film described below) which has a reflective function for the P-polarized light incident from the oblique direction transmits almost all the P-polarized light incident perpendicularly, while the reflectance increases as the incident angle becomes larger due to oblique incidence. This property can be achieved by the fact that more than one types of thermoplastic resins layers that constitute the multilayer film exhibit different crystalline nature through the stretch film formation step, resulting in film properties such that the difference in refractive indexes occur in the in-plane and the vertical-plane directions. In particular, the multilayer film that can be preferably used in the head-up display of the present invention has an alternating laminate structure of two types of thermoplastic resin layers as described below, and it is preferable that one of the thermoplastic resin layers is a crystalline thermoplastic resin layer and the other is a microcrystalline or amorphous thermoplastic resin layer. By preparing the multilayer film of this aspect, and then designing it such that the difference in the average in-plane refractive index of the different thermoplastic resin layers constituting the multilayer film is small, the material can be made highly transparent to the light incident perpendicularly while suppressing the light reflection. On the other hand, by designing such that the difference in refractive index between the two types of thermoplastic resin layers increases as the incident angle increases when the light is incident from an oblique direction, the oblique light can be reflected.

In a case of a stretched film that exhibits crystalline nature, unless a special polymer (such as polystyrene) is used that exhibits a negative birefringence state, in which the film is oriented vertically by stretching, the refractive index generally tends to increase in the orientation axis direction due to the alignment of the crystalline phase of the resin, and decreases in the direction perpendicular to the in-plane orientation direction and in the thickness direction as a reaction. Since the refractive index change differs depending on the in-plane oscillation direction of the reflective layer or incident angle of the P-polarized light of the light irradiated from the light source through the polarization control layer and the inclination direction of the projected image display member, the in-plane refractive index in the oscillation direction of the P-polarized light corresponding to the polarized light irradiated surface and the refractive index in the thickness direction will differ depending on the inclination direction of the projected image display member. As a result, the wavelengths of the interference reflect, as well as the in-plane average difference in refractive index of the two alternating multilayer polymer layers, differ slightly, resulting in a spectrum with a high reflectance when inclined toward the orientation axis, which has a particularly high refractive index, and a spectrum with a low reflectance when inclined in a direction perpendicular to the orientation axis, as shown in FIG. 17, depending on the inclination axis direction. This phenomenon (spectral shift) is caused by the shift change in the interference reflect light wavelengths.

In the present invention, the area A (nm·%) of the projected image display member is more preferably in the range of 2,000 or more and 4,500 or less.

To control the area A within the preferred numerical range described above, it is effective to use the projected image display member using the multilayer film as a reflective layer as described below. In terms of controlling the area A within the above-mentioned preferred numerical range, it is preferable that the multilayer film as a reflective layer has difference in in-plane refractive index of the thermoplastic resin layers of 0.06 or less and difference in refractive index in a direction perpendicular to the film surface between two adjacent thermoplastic resin layers (difference in vertical-plane refractive index) of 0.12 or less. In addition, the multilayer structure includes two types of resin layers alternately laminated such that 51 or more layers are laminated. In addition, it is desirable to employ the method described below for the preparation thereof.

More specifically, when producing a multilayer film, it is necessary to make the orientation state more uniform at the width direction position during the width direction stretching step. In the general biaxially stretched films, a bow-like orientation toward the longitudinal direction (bowing phenomenon) occurs due to the effect of the difference in shrinkage force caused by the temperature difference during the preheating step and the heat treatment step. Therefore, the orientation state (refractive index state) of the obtained film will be different between the central part in the width direction and the end parts in the width direction. To reduce the bowing phenomenon and improve the orientation uniformity at the width direction position, it is necessary to suppress the shrinkage force in the longitudinal direction during stretching, and it is preferable to apply a stepwise temperature gradient in the stretching step for this purpose. By applying a temperature gradient in the stretching step, the effect of shrinkage based on the Poisson's ratio in the longitudinal direction that occurs during stretching in the width direction and the effect of the difference in thermal shrinkage force caused by the temperature difference between the preheating and heat treatment steps before and after the stretching step can be reduced, thereby enhancing the orientation uniformity of the resulting film in the width direction. In this case, the temperature gradient is set within a temperature range from the glass transition temperature of the resin having the highest glass transition temperature in the multilayer film to the crystallization temperature. Further, it is preferable that a temperature gradient of two or more stages exists before the heat treatment temperature is reached.

However, simply reducing the shrinkage force in the above-mentioned stretching step may result in a change in orientation in the width direction due to the shrinkage force caused by the temperature difference before and after the heat treatment step. Therefore, as a method of reducing the shrinkage force after the stretching step and further improving the orientation uniformity in the width direction, it is preferable to use a method of lowering the heat treatment temperature to reduce the shrinkage force toward the stretching step in the longitudinal direction, or a method of providing a longer intermediate region from the stretching step to the heat treatment step to provide a temporary constant temperature or low temperature region (region exhibiting a temperature lower than the stretching temperature + 30°C), thereby improving stiffness of the film. By increasing the stiffness of the film, the influence of shrinkage in the longitudinal direction caused by the reaction of stretching in the width direction based on Poisson's ratio can be reduced, and the bowing phenomenon described above can be further reduced.

In the former method of reducing the heat treatment temperature, crystallization by heat fixation may not proceed sufficiently, and the heat shrinkage rate may increase at the expense of the retardation and orientation angle uniformity. Therefore, it is preferable to suppress the shrinkage force in the longitudinal direction and then slightly stretch the multilayer film in the heat treatment step to put it in a tensed state. By adopting such a measure, shrinkage in the opposite direction (the direction to the cooling step) due to the temperature difference with the cooling step after the heat treatment step can be induced, and bowing in the direction of the stretching step that remained before the heat treatment step can be reduced, resulting in a more uniform orientation in the width direction of the multilayer film. At this time, the magnification of the slight stretching (magnification of additional stretching ratio in heat treatment) is 3% or more and 18% or less, more preferably 5% or more and 10% or less. By setting the magnification of slight stretching within the above range, it is possible to achieve a suitable balance between the orientation uniformity in the width direction and the heat shrinkage rate in the width direction at high temperatures, so that when the resulting multilayer film is used for the projected image display member, both image display performance and good appearance can be achieved.

In the projected image display member used in the present invention, for each of the points C, X1, X2, Y1, and Y2, when an angle is determined, which is formed by an orientation axis at the point and an intersection line between the surface of the projected image display member and a plane that includes the horizontal direction and is orthogonal to the surface of the projected image display member at the point, the intersection line passing through the point, the maximum angle is 20° or less, from the viewpoint of suppressing generation of multiple images. The smaller maximum value is more preferable. By setting the angle formed by the direction of electric field's oscillation of the P-polarized light component and the orientation axis in the projected image display member within a certain range over a wider area on the surface of the projected image display member plane, a head-up display is obtained on which multiple images are less likely to be visible across the entire surface. From the above viewpoint, the maximum value of the orientation angle is preferably smaller, more preferably 15° or less, even more preferably 10° or less, and particularly preferably 5° or less. From the above viewpoint, the smaller the maximum value of the orientation angle, the more preferable it is. However, from the viewpoint of feasibility, it is understood that the lower limit is 0.1°.

Such a projected image display member can be achieved, for example, by making the projected image display member using the multilayer film discussed below as the reflective layer. In particular, it is effective to design the conditions for producing the multilayer film, such as the stretching ratio of the longitudinal direction to the width direction, the stretching speed in the width direction, and the stretching ratio in the heat treatment step, to the preferred conditions described below. In the configuration of the multilayer film, it is effective to have an alternating multilayer structure in which the outermost layers on both sides are the same layer, and the main component of the thermoplastic resin layer that is not positioned on the outermost surface is an amorphous thermoplastic resin. These methods can be used in combination as appropriate.

In the projected image display member used for the head-up display of the present invention, an in-plane retardation determined for the points C, X1, X2, Y1, and Y2 is 3,000 nm or more and 10,000 nm or less, and a variation (standard deviation/average) in the values at these five points is 0.1 or less. By controlling the in-plane retardation at each point and its variation within the above range, it is possible to suppress the iridescent irregularities that may be visible to an observer when the observer wears the polarized sunglasses for the purpose of preventing glare. Furthermore, since the variation in retardation affects the visual recognition of iridescent irregularities, it is preferable that the variation in the in-plane retardation is small.

That is, by setting the in-plane retardation to 3,000 nm or more, the phase change of the polarized light wave becomes finer, so that color unevenness becomes less noticeable. The retardation of the projected image display member is mainly caused by the phase of the reflective layer that constitutes the projected image display member, and a value close to 10,000 nm indicates a large difference in refractive index between the orientation axis direction and the direction perpendicular to the orientation axis. By keeping the in-plane retardation at 10,000 nm or less, the image display performance at a wide viewing angle are improved, unlike the case where a uniaxially stretched film is used as the light reflecting material. From the above viewpoint, the in-plane retardation is more preferably 3,000 nm or more and 5,000 nm or less. From the same viewpoint, the retardation variation is preferably 0.05 or less, and it is even more preferable to satisfy these requirements simultaneously.

In order to set the in-plane retardation at each of the aforementioned points of the projected image display member to 3,000 nm or more and 10,000 nm or less, or within the above-described preferred range, and to set the variation at these five points to 0.1 or less or within the above-described preferred range, it is preferable to use the projected image display member utilizing the multilayer film described below as the reflective layer. More specifically, among the preferred stretching conditions described below for the sequential biaxial stretching film production of a multilayer film, the stretching ratio is set within a preferred range, and a temperature gradient is provided in a step of stretching in the width direction, a temporary low temperature region is provided before the heat treatment step, and the film formation process is performed in which slight stretching is performed in the heat treatment step, whereby the above requirements can be easily achieved.

In the head-up display of the present invention, an angle formed by an orientation axis at the point C of the projected image display member and an intersection line between a plane including a direction of electric field's oscillation of the P-polarized light component and a tangent plane including the point C is 70° or more and 90° or less. By setting the angle between the intersection of the plane containing the direction of electric field's oscillation of the P-polarized light component and the tangent plane containing point C and the orientation axis at point C of the projected display member at 70° or more, the average visible light reflectance of the P-polarized light reflected by the reflective layer of the projected image display member is relatively low compared to a case where the angle is set to different value. Thus, the reflection of the surrounding environment, in which the light source is located, on the projected image display member can be reduced. The image from the light source can be made clearer by increasing the luminance of the light emitted by the light source. However, the only method to reduce the reflection of the surrounding environment is to reduce the reflective performance of the projected image display member. Therefore, such a design can be preferably used to realize a clear image display without reflections. Of course, the best image display performance can be achieved by designing the angle formed by the intersection line between the plane containing the direction of electric field's oscillation of the P-polarized light component and the tangent plane containing the point C and the orientation axis at the point C of the projected display unit to be close to 90°.

<Multilayer Film>

The projected image display member used in the present invention has a reflective layer, and preferably includes a multilayer laminated film consisting of 51 or more layers of different types of thermoplastic resins layered alternately. In the present invention, the multilayer film in which a number of layers of multiple types of thermoplastic resin layers of different compositions are laminated, and the refractive indexes of these thermoplastic resin layers differ by more than 0.01 in one of two directions, in the main orientation axis direction and its orthogonal direction at the in-plane of the film and the direction perpendicular to the film surface, is considered to have "different thermoplastic resin layers existing therein." Moreover, "alternately laminated" means that the layers composed of different thermoplastic resins are laminated in a regular arrangement in the thickness direction. The thickness direction is the direction perpendicular to the film surface. The presence or absence of a laminated configuration and the thickness of each layer can be measured by analyzing images taken with a transmission electron microscope (TEM), details of which will be described later.

A specific example of such an aspect is a multilayer film including a layer composed of a first thermoplastic resin (layer A) and a layer composed of a second thermoplastic resin (layer B), in which the layers are laminated as A(BA)n and B(AB)n (n is a natural number representing the number of repeating units, the same applies below). Another example is a multilayer film including a layer composed of a first thermoplastic resin (layer A), a layer composed of a second thermoplastic resin (layer B), and a layer composed of a third thermoplastic resin (layer C), the arrangement of which is not particularly limited but is an arrangement such that the layers are laminated in the thickness direction with a certain regularity such as C(BA)nC or C(ABC)n, C(ACBC)n. By laminating multiple thermoplastic resin layers with different refractive indexes in a regular arrangement in this manner, it is possible to develop interference reflect that reflects light in a desired wavelength bandwidth based on the relation between the difference in refractive indexes of layers and the thickness of layer.

When the number of layers in the multilayer film is 51 or more, high reflectance can be obtained in the desired wavelength bandwidth. Since the above-mentioned interference reflect can achieve a higher reflectance for light in a wider wavelength bandwidth as the number of layers increases, a multilayer film that reflects light in a desired wavelength bandwidth can be obtained by increasing the number of layers. From the above viewpoint, the number of layers of the multilayer film is preferably 401 or more, more preferably 801 or more. There is no upper limit to the number of layers. However, an increase in the number of layers leads to an increase in production costs due to the larger size of the production equipment, and a decrease in handleability due to an increase in the film thickness. Therefore, in reality, the practical range is about 10,001 layers, and preferably about 2,001 layers.

The transmittance of a visible light incident perpendicularly to the multilayer film can be increased by reducing the difference in average in-plane refractive index in the direction parallel to the film surface between the two thermoplastic resin layers. For example, when the number of layers in the multilayer film is within the above-mentioned range, it is easy to make the transmittance 50% or more if the difference in refractive index in the direction parallel to the film surface between adjacent layers is 0.06 or less, the transmittance 70% or more if the difference in refractive index is 0.04 or less, and the transmittance 80% or more if the difference in refractive index is 0.02 or less. The "difference in refractive index in the direction parallel to the film surface" refers to the absolute value of the difference in the average in-plane refractive index between adjacent thermoplastic resin layers (the difference in the average in-plane refractive index between Layer A and layer B for a case where two types of Layers are Layer A and layer B; the difference in the average in-plane refractive index between Layer A and Layer B, the difference in the average in-plane refractive index between Layer B and Layer C, and the difference in the average in-plane refractive index between Layer C and Layer A for a case where three types of layers are Layer A, Layer B, and Layer C). Note that when the three types of layers are Layer A, Layer B, and Layer C, it is desirable that all of the differences in the average in-plane refractive index between Layers A and B, Layers B and C, and Layers C and A fall within the above range. The difference in the average in-plane refractive index can be calculated as the average value of the refractive indexes in the main orientation axis direction and the direction orthogonal thereto in the film surface (the refractive index in the in-plane direction and the refractive index in the direction perpendicular to the film surface described later are values measured at a measuring laser wavelength of 633 nm, and the detailed measuring method will be described later.) For example, the average in-plane refractive index $n_{X1}$ of a certain layer can be represented by formula (B), where $n_{X1}$ is the refractive index in the orientation axis direction of the layer, and $n_{X2}$ is the refractive index in the direction orthogonal to the orientation axis within the surface of the layer.
[Math. 2]

$$n_X = (n_{X1} + n_{X2})/2 \qquad\qquad (B)$$

In order to obtain a multilayer film that has an average reflectance of 5% or more for the wavelength range from 400 nm to 700 nm when linear polarized light containing only the P-polarized light component is incident at an incident angle of 60° in a case where the film is used for a projected image display member, a method of adjusting the difference in vertical-plane refractive index and the number of layers can be used. In this case, the larger the difference in refractive index in the direction perpendicular to the film surface is and the greater the number of layers, the higher the average reflectance can be. For example, when the number of layers reaches 801 layers, it is easy to make the reflectance 10% or more if the difference in refractive index in the direction perpendicular to the film surface is greater than 0.06, more than 30% if the difference in refractive index is greater than 0.08, and more than 40% if the difference in refractive index is greater than 0.12. As a result, it becomes easy to obtain an average reflectance of more than 5% at the wavelength range from 400 nm to 700 nm when the linear polarized light containing only the P-polarized light component is incident at an incident angle of 60°. Even when the difference in refractive index has not reached the above level, the number of layers can be further increased to increase the relevant reflectance to reach the above level. The refractive index in the direction perpendicular to the film surface is hereinafter also referred to as the vertical-plane refractive index.

Examples of the method to adjust the reflection wavelength of the multilayer film within a wavelength range from 400 to 700 nm include adjusting the number of the difference in vertical-plane refractive index of the multilayer of the two thermoplastic resin layers, number of multilayer, distribution of layer thickness, and film formation conditions (e.g., stretching ratio, stretching speed, stretching temperature, heat treatment temperature, heat treatment time).

In the projected image display member of the present invention, when the multilayer film includes two types of alternating thermoplastic resin layers, with Layer A composed of a first thermoplastic resin and Layer B composed of a second thermoplastic resin, it is preferable that the Layer A contains a crystalline thermoplastic resin and the Layer B contains an amorphous thermoplastic resin as a main component, or the Layer B contains a crystalline thermoplastic resin having a melting point lower than that of the thermoplastic resin which is a main component of the Layer A by 20°C. It is preferable that the Layer A contains a crystalline thermoplastic resin as a main component and the Layer B contains an amorphous thermoplastic resin as a main component, or the Layer B contains as a main component a crystalline thermoplastic resin having a melting point lower than that of the thermoplastic resin which is a main component of the Layer A by 20°C.

The main component referred to here is a component that is contained in an amount of 70% by mass or more and 100% by mass or less, taking the total amount of all components constituting the layer as 100% by mass. The difference in vertical-plane refractive index between the Layer A and the Layer B is preferably larger, because the reflectance becomes higher and a smaller number of laminate layers is required. It is preferable that the layer thickness distribution be such that the optical thicknesses of the adjacent Layers A and B satisfy the following formula (C). It is preferable that the crystalline thermoplastic resin in the Layer A and the amorphous thermoplastic resin in the Layer B are both polyester resins. The thermoplastic resin exhibiting crystalline nature referred to here is a thermoplastic resin having a heat of fusion of crystal ΔHm of 3 J/g or more, calculated from the peak area of the melting peak in a differential scanning calorimetry chart of 2ndRUN, which is obtained by heating from 25°C to 300°C at a heating rate of 20 °C/min in accordance with JIS K7122 (2012) (1stRUN), holding that state for 5 minutes, then rapidly cooling to a temperature of 25°C or less, and then heating again from room temperature to a temperature of 300°C at a temperature rising rate of 20°C./min. On the other hand, the thermoplastic resin exhibiting amorphous nature refers to a thermoplastic resin that exhibits a heat of fusion of crystal ΔHm of less than 3 J/g, as measured in the same manner.

[Math. 3]

$$\lambda = 2\left(n_A d_A + n_B d_B\right)$$

(C)

where λ is a reflection wavelength, $n_A$ is a vertical-plane refractive index of layer A, $d_A$ is a thickness of the layer A, $n_B$ is a vertical-plane refractive index of the layer B, and $d_B$ is a thickness of the layer B.

Examples of the preferable distribution of the layer thickness includes: a distribution in which the layer thickness is constant from one side to the opposite side of the surface of the multilayer film; a distribution in which the layer thickness increases or decreases from one side to the opposite side of the surface of the multilayer film; a distribution in which the layer thickness increases from one side to the center of the surface of the multilayer film, then decreases; a distribution in which the layer thickness decreases from one side to the center of the surface of the multilayer film, and then increases; or a combination thereof. As for the preferable way that the layer thickness distribution changes, the thickness changes continuously, for example, linearly, at equal ratio, or in difference sequence, or the thickness of about 10 to layers, having almost the same layer thickness, changes stepwise are preferable.

Both superficial layers of the multilayer film can preferably be provided with a protective layer having a thickness of 1% or more of the thickness of the multilayer film itself, and the thickness of each protective layer is preferably 4% or more of the total thickness of the multilayer film. A thicker protective layer leads to suppression of flow marks during film formation, improvement of the accuracy of the actual layer thickness of each layer with respect to the design, suppression of deformation of the thin layer film in the multilayer film during and after the step of lamination with other films and molded products, and resistance to pressurization. The upper limit of the thickness of the protective layer is 20% from the viewpoint of ensuring a multilayer component necessary for exhibiting interference reflect while suppressing an increase in the thickness of the multilayer film. The thickness of the multilayer film constituting the projected image display member of the present invention is not particularly limited, but preferably from 20 $\mu$m to 300 $\mu$m, for example. A thickness of 20 $\mu$m or more enhances elasticity of the multilayer film and ensures good handling properties. A thickness of 300 $\mu$m or less prevents the elasticity of the multilayer film from excessively increasing and improves moldability.

Functional layers such as a primer layer, a hard coat layer, an abrasion resistant layer, a scratch resistant layer, an antireflection layer, a color correction layer, a UV absorbing layer, a light stabilizing layer, a heat absorbing layer, a printing layer, a gas barrier layer, an adhesive, etc. may also be formed on at least one surface of the multilayer film. These layers may be single layer configuration of multilayer configuration, and one layer may have a plurality of functions. In addition, additives such as a UV absorber, a light stabilizer (HALS), a heat absorber, a crystal nucleating agent, and a plasticizer may be included in the multilayer film. These ingredients can also be used in combination to the extent that the effect of the invention is not impaired.

Examples of the thermoplastic resins used in the multilayer film that can be used as the reflective layer of the projected image display member used in the present invention include linear polyolefins such as polyethylene, polypropylene, poly(4-methylpentene-1), and polyacetal, alicyclic polyolefins that are ring-opening metathesis polymers of norbornenes, addition polymers, addition copolymers with other olefins, biodegradable polymers such as polylactic acid and polybutyl succinate, polyamides such as nylon 6, nylon 11, nylon 12, and nylon 66, aramid, polymethyl methacrylate, polyvinyl chloride, polyvinylidene chloride, polyvinyl alcohol, polyvinyl butyral, ethylene vinyl acetate copolymer, polyacetal, polyglycolic acid, polystyrene, styrene copolymerized polymethyl methacrylate, polycarbonate, polyesters such as polypropylene terephthalate, polyethylene terephthalate, polybutylene terephthalate, and polyethylene-2,6-naphthalate, polyether sulfones, polyether ether ketones, modified polyphenylene ethers, polyphenylene sulfides, polyether imides, polyimides, polyarylates, tetrafluoroethylene resins, trifluoroethylene resins, trifluorochloroethylene resins, tetrafluoro-oethylene-hexafluoropropylene copolymers, and polyvinylidene fluoride. Among them, polyester is particularly preferably used from the viewpoints of intensity, heat resistance, transparency, and versatility. They may be copolymers, or mixtures of two or more resins.

The polyester refers to a resin having a molecular structure in which dicarboxylic acid units and diol units are connected by ester bonds. The polyester is preferably a polyester having aromatic dicarboxylic acid units or aliphatic dicarboxylic acid units and diol units as main constituent units. For a dicarboxylic acid unit, the main constituent unit referred to here is a dicarboxylic acid unit that is included in an amount more than 50 mol% and 100 mol% or less, taking the total dicarboxylic acid units constituting the polyester as 100 mol%. The main constituent unit in the diol unit can be interpreted in the same way.

Examples of aromatic dicarboxylic acids constituting the polyester include terephthalic acid, isophthalic acid, phthalic acid, 1,4-naphthalenedicarboxylic acid, 1,5-naphthalenedicarboxylic acid, 2,6-naphthalenedicarboxylic acid, 4,4'-diphenyldicarboxylic acid, 4,4'-diphenyletherdicarboxylic acid, and 4,4'-diphenylsulfonedicarboxylic acid. Examples of aliphatic dicarboxylic acid include adipic acid, suberic acid, sebacic acid, dimer acid, dodecanedioic acid, cyclohexanedicarboxylic acid, and ester derivatives thereof. Among them, terephthalic acid and 2,6-naphthalenedicarboxylic acid are preferable, which exhibit a high refractive index. These acid components may be used alone or in combination of two or more kinds. Furthermore, oxyacids such as hydroxybenzoic acid or the like may be partially copolymerized.

Examples of the diol component include ethylene glycol, 1,2-propanediol, 1,3-propanediol, neopentyl glycol, 1,3-butanediol, 1,4-butanediol, 1,5-pentanediol, 1,6-hexanediol, 1,2-cyclohexanedimethanol, 1,3-cyclohexanedimethanol, 1,4-cyclohexanedimethanol, diethylene glycol, triethylene glycol, polyalkylene glycol, 2,2-bis(4-hydroxyethoxyphenyl)propane, isosorbate, and spiroglycol. Among them, ethylene glycol is preferably used. These diol components may be used alone or in combination of two or more kinds.

The thermoplastic resin that is the main component of each layer of the multilayer film of the present invention is preferably selected from, for example, polyethylene terephthalate and polymers thereof, polyethylene naphthalate and copolymers thereof, polybutylene terephthalate and copolymers thereof, polybutylene naphthalate and copolymers thereof, polyhexamethylene terephthalate and copolymers thereof, and polyhexamethylene naphthalate and copolymers thereof, among the above-mentioned polyesters.

In addition, various additives such as antioxidants, heat stabilizers, weather stabilizers, ultraviolet absorbers, organic lubricants, pigments, dyes, organic or inorganic fine particles, fillers, antistatic agents, and nucleating agents can be added to the thermoplastic resin alone or in combination to the extent that the properties of the resin are not deteriorated.

The multilayer film that can be used as a reflective layer of the projected image display member of the present invention has a configuration in which a layer (layer A) composed of a first thermoplastic resin and a layer (layer B) composed of a second thermoplastic resin are alternately laminated, and it is preferable that the first thermoplastic resin is mainly composed of a crystalline polyester and the second thermoplastic resin is mainly composed of a polyester containing a structure derived from naphthalene dicarboxylic acid, and it is more preferable that the first thermoplastic resin is polyethylene terephthalate. Polyester containing a structure derived from naphthalene dicarboxylic acid has a high refractive index and can be entirely or partially amorphous polyester. The term "first thermoplastic resin" referred to here means the entire resin components constituting the Layer A, and the term "second thermoplastic resin" referred to here means the entire resin components constituting the Layer B. The phrase "Layer A is mainly composed of the crystalline polyester" means that 60% by mass or more and 100% by mass or less of crystalline polyester is contained in the first thermoplastic resin. The phrase "Layer B is mainly composed of polyester containing a structure derived from naphthalene dicarboxylic acid" means that 10% by mass or more and 100% by mass or less of polyester containing a structure derived from naphthalene dicarboxylic acid is contained in the second thermoplastic resin.

Which of the two types of thermoplastic resin layers alternately laminated to be the Layer A is determined by comparing the vertical-plane refractive indexes. More specifically, the layer having a relatively smaller vertical-plane refractive index is referred to as the Layer A, and the thermoplastic resin constituting this layer is referred to as a "first thermoplastic resin". When the second thermoplastic resin is mainly composed of polyester containing a structure derived from naphthalene dicarboxylic acid, it becomes easy to increase both the in-plane refractive index and the vertical-plane refractive index. When the first thermoplastic resin is mainly composed of crystalline polyester and the second thermoplastic resin is mainly composed of polyester containing a structure derived from naphthalene dicarboxylic acid, it becomes easy to make in-plane refractive index difference in the direction parallel to the film surface of the multilayer film of the both layers 0.06 or less and vertical-plane refractive index difference in the direction perpendicular to the film surface 0.06 or more.

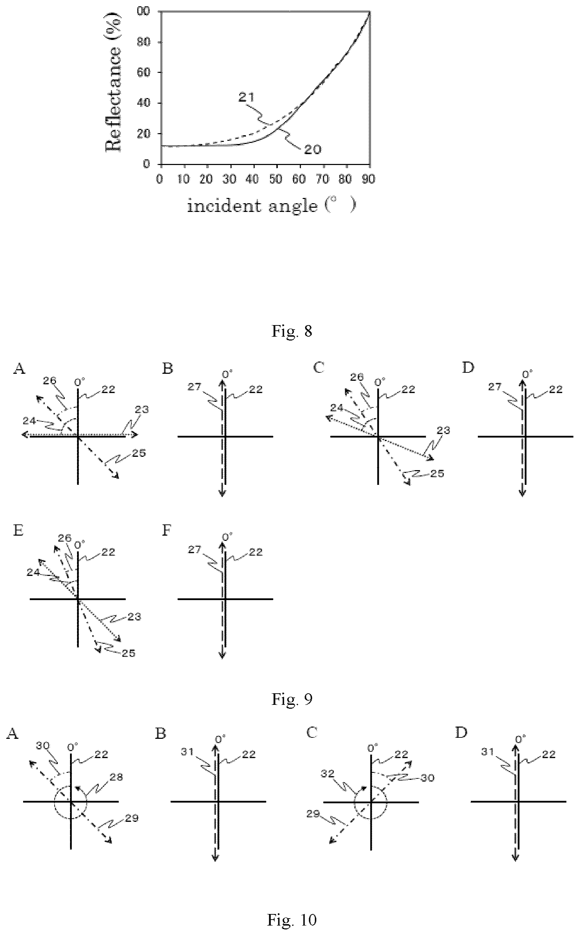

It is generally known that when a natural light is incident on a flat medium, the reflection characteristics (incident angle dependence of reflectance) of the P-polarized light component and the S-polarized light component are different from each other, which will be described with reference to drawings. A graph (one example) illustrating the angular dependence of reflectance when a light (P-polarized light) containing only the P-polarized light component or a light (S-polarized light) containing only the S-polarized light component of the same intensity at the wavelength of 550 nm is incident from the air onto each film, for a conventional transparent plastic film (a typical transparent substrate) is shown in FIG. 6, for a multilayer film used as a conventional reflective film is shown in FIG. 7, and for a multilayer film contained in the reflective layer of the projected image display member used in the head-up display of the present invention is shown in FIG. 8. Here, an example with a wavelength of 550 nm is shown, but other visible light wavelengths have relation generally similar to those shown in FIGS. 6 to 8. In FIGS. 6 to 8, reference numerals 20 and 21 denote the reflectance of the P-polarized light and the reflectance of the S-polarized light, respectively.

As shown in FIG. 6, the typical transparent substrate follows the Fresnel's formulas, and the reflectance of the P-polarized light tends to decrease as the incident angle increases, reach 0%, and then increase again. On the other hand, the reflectance of the S-polarized light increases as the incident angle increases. As shown in FIG. 7, the conventional light-reflecting multilayer film has a constant reflectance for both the P-polarized light and the S-polarized light at an incident angle of 0°, resulting in low transmittance. Furthermore, as the incident angle increases, the reflectance of both the P-polarized light and the S-polarized light increases. As shown in FIG. 8, the multilayer film included in the reflective layer of the projected image display member included in the head-up display of this invention has characteristics the reflectance for both the P-polarized light and the S-polarized light is low (transmittance is high) at the incident angle of 0° and the reflectance for both the P-polarized light and the S-polarized light increases as the incident angle increases. By using a multilayer film having such optical characteristics for the reflective layer of the projected image display member of the present invention, it is possible to obtain good visibility of the background when the background is observed through the projected image display member from a direction perpendicular to the surface of the projected image display member, and good display performance of the projected image when a P-polarized light image is projected onto the surface of the projected image display member.

<Metal Layer>

In the projected image display member, the reflective layer preferably includes a metal layer. The metal layer referred to here is a layer in which 80% by mass or more and 100% by mass or less of all components constituting the layer are metals or compounds thereof. Suitable materials for the metal layer include Ag, Au, Cu, Al, and alloys containing them. The preferred film thickness of these metal layers is, for example, from 5 nm to 30 nm, and by setting the thickness in the range from 5 nm to 30 nm, it becomes easy to make the average reflectance of the linear polarized light containing only the P-polarized light component at the wavelength range from 400 nm to 700 nm incident at an incident angle of 60° 5% or more and 99% or less, and to set the transmittance of the visible light incident perpendicularly to 50% or more. A reflective layer including a metal layer is preferably formed on a transparent substrate or film, and examples of the method of forming the reflective layer include vapor deposition and sputtering. It is also preferable to include one or more dielectric layers on one or both sides of the metal layer to protect the metal layer from scratches, oxidation/nitridation, rust, etc., or to control the reflectance spectrum of linear polarized light containing only the P-polarized light components at the wavelength range from 400 nm to 700 nm. Suitable materials for the dielectric layer include oxides of Zn, Ti, Nb, Zr, In, Si, Sb, and Sn, and nitrides of Zr and Si. The thickness of the dielectric layer is preferably in the range from 5 nm to 150 nm.

<Hologram Layer>

In the projected image display member, the reflective layer preferably includes a hologram layer. A hologram layer is a layer in which an interference fringe is recorded. In the hologram layer of the present invention, interference fringes corresponding to blue wavelength (e.g., 460 nm), green wavelength (e.g., 550 nm), and red wavelength (e.g., 650 nm) are recorded, and when the image is projected from the light source onto the hologram layer to generate diffraction by interference fringes corresponding to blue wavelength, green wavelength, and red wavelength, the user can visually recognize the image. As for characteristics of the hologram, there are a reflection hologram and a transmission hologram. Moreover, from the viewpoint of increasing the diffraction efficiency, a volume hologram is preferred.

An example of a method of producing a hologram layer is a method including forming a layer containing a photopolymerizable monomer, a matrix polymer, and a photopolymerization initiator on a transparent substrate or film; and irradiating laser beams corresponding to blue wavelength, green wavelength, and red wavelength from two directions: the direction in which it is desirable to record the laser beams and the direction in which it is desirable to diffract the laser beams, to form interference fringes in the matrix polymer; and, if necessary, curing the matrix polymer with heat or ultraviolet ray. As a method of controlling the diffraction efficiency of the hologram layer, by changing the size of the refractive index modulation in the hologram layer and the thickness of the hologram layer, it becomes easy to make the average reflectance at the wavelength range from 400 nm to 700 nm 5% or more and 100% or less when the linear polarized light containing only the P-polarized light component is incident at the incident angle of 60°, and to make the transmittance of the visible light 50% or more when a natural light is incident at the incident angle of 0°.

The head-up display of the present invention preferably has Sratio2 of 0.2 or less (in other words, Pratio2 of 0.8 or more). By setting the Sratio2 to 0.2 or less, the light intensity of the S-polarized light incident on the projected image display member is reduced and the effect of suppressing the double image is improved. The method of setting the Sratio2 to 0.2 or less depends on the combination of the polarized light surface of the light emitted from the light source and the polarizing plate or the retardation plate used as the polarization control layer, and examples thereof are as shown below. Note that the lower limit of the Sratio2 is not particularly limited, but is theoretically 0.

In the head-up display of the present invention in which the polarization control layer has a polarizing plate, it is preferable that an angle formed by a transmission axis of a polarizing plate and an intersection line between a plane including a direction of electric field's oscillation of the P-polarized light component and a surface of the polarizing plate on an incidence plane when the projected image display member serves as a reflective surface is 15° or less, and the light emitted from the light source is a light including at least one selected from a linear polarized light having an electric field oscillating plane that forms a dihedral angle from -85° to -16° or from 16° to 85° with the plane including a direction of electric field's oscillation of the P-polarized light component on the incidence plane when the projected image display member serves as a reflective surface, an elliptical polarization, and a circular polarization. In the head-up display of this aspect, the counterclockwise direction when viewed from the light source toward the projected image display member is defined as the positive side of the azimuth angle. However, when the projected image display member or the light source has a curvature, the azimuth angle at which the light beam of the image emitted from the center of the light source becomes P-polarized light when it is incident on the projected image display member is set to 0°. By adopting such an aspect, double images can be suppressed by controlling the polarized light of the image emitted from the light source (more specifically, by increasing the intensity of the P-polarized light and decreasing the intensity of the S-polarized light in the intensity of the light incident on the projected image display member). In addition, it is possible to suppress the decrease in visibility when wearing polarized sunglasses that absorb the S-polarized light.

In the head-up display of the present invention in which the polarization control layer is a λ/2 retardation plate, it is preferable that the polarization control layer is placed to satisfy the following relation:

$$\theta_L/2 - 5\ (°) < \theta_{\lambda/2}\ (°) < \theta_L/2 + 5\ (°)$$

where $\theta_L$ (°) is a dihedral angle formed by an oscillating plane of the linear polarized light and the plane including a direction of electric field's oscillation of the P-polarized light component on the incidence plane when the projected image display member serves as a reflective surface, and

$\theta_{\lambda/2}$ (°) is an angle formed by a main orientation axis of the λ/2 retardation plate and an intersection line between the plane including a direction of electric field's oscillation of the P-polarized light component and a surface of the λ/2 retardation plate on the incidence plane when the projected image display member serves as a reflective surface. In the head-up display of this aspect, the counterclockwise direction when viewed from the light source toward the projected image display member is defined as the positive side of the azimuth angle. However, when the projected image display member or the light source has a curvature, the azimuth angle at which the light beam of the image emitted from the center of the light source becomes P-polarized light when it is incident on the projected image display member is set to 0°. By adopting such an aspect, double images can be suppressed by controlling the polarized light of the image emitted from the light source (more specifically, by increasing the intensity of the P-polarized light component and decreasing the intensity of the S-polarized light component in the light incident on the projected image display member). In addition, it is possible to suppress the decrease in visibility when wearing polarized sunglasses that absorb the S-polarized light. From the above viewpoint, an aspect where $\theta_{\lambda/2}$ (°) $= \theta_{\lambda/2}$ is particularly preferred.

Hereinafter, a head-up display in which the polarization control layer is a $\lambda/2$ retardation plate will be described with reference to FIG. 9. FIG. 9 is a diagram for explaining the azimuth angle $\theta_L$ 24 of the direction of electric field's oscillation 23 having the maximum intensity among the light emitted from the light source, taking the direction of electric field's oscillation 22 of the P-polarized light component as 0°, the azimuth angle $\theta_{\lambda/2}$ 26 of the main orientation axis 25 of the $\lambda/2$ retardation plate, and the direction of electric field's oscillation 27 after the direction of electric field's oscillation 23 having the maximum intensity among the light emitted from the light source passes through the $\lambda/2$ retardation plate. Here, for example, the wavelength of the image emitted from the light source is 560 nm, and the retardation of the $\lambda/2$ retardation plate at the wavelength of 560 nm is 280 nm. FIG. 9A and FIG. 9B show the direction of electric field's oscillation 27 after passing through the $\lambda/2$ retardation plate when $\theta_L$ 24 is 90° and $\theta_{\lambda/2}$ 26 is 45°; FIG. 9C and FIG. 9D show the direction of electric field's oscillation 27 after passing through the $\lambda/2$ retardation plate when $\theta_L$ 24 is 67.5° and $\theta_{\lambda/2}$ 26 is 33.75°; and FIG. 9E and FIG. 9F show the direction of electric field's oscillation 27 after passing through the $\lambda/2$ retardation plate when $\theta_L$ 24 is 45° and $\theta_{\lambda/2}$ 26 is 22.5°. In FIG. 9, when viewing from the light source (not shown) to the projected image display member (not shown), the leftward rotation is the positive angle side. As shown in FIG. 9, $\theta L/2 = \theta \lambda/2$ is the most preferable condition because the direction of electric field's oscillation 27, which is the direction of electric field's oscillation 23 having the maximum intensity among the light emitted from the light source, after passing through the $\lambda/2$ retardation plate, coincides with the direction of electric field's oscillation of the P-polarized light component when the projected image display member is used as the reflective surface. Therefore, it is preferable to place the $\lambda/2$ retardation plate so as to satisfy $\theta L/2 - 5(°) < \theta \lambda/2(°) < \theta L/2 + 5(°)$. By placing the $\lambda/2$ retardation plate in this way, it becomes easy to set Sratio2 to 0.2 or less, thereby improving the effect of suppressing double images.

In the head-up display of the present invention, when the polarization control layer is a $\lambda/4$ retardation plate, it is preferable that the light emitted from the light source is light containing either or both of elliptical polarization and circular polarization, and that the following condition 1 or condition 2 is satisfied.

Condition 1: The light emitted from the light source is an elliptical polarization or a circular polarization in which an electric field vector of an oscillating plane of the light rotates counterclockwise from the light source toward the projected image display member, and the head-up display is placed such that an angle formed by the main orientation axis of the polarization control layer and an intersection line between the surface of the polarization control layer and the plane including a direction of electric field's oscillation of the P-polarized light component on the incidence plane when the projected image display member serves as a reflective surface is in the range of 45° ± 15°;

Condition 2: The light emitted from the light source is an elliptical polarization or a circular polarization in which an electric field vector of an oscillating plane of the light rotates clockwise from the light source toward the projected image display member, and the head-up display is placed such that an angle formed by the main orientation axis of the polarization control layer and an intersection line between the surface of the polarization control layer and the plane including a direction of electric field's oscillation of the P-polarized light component on the incidence plane when the projected image display member serves as a reflective surface is in the range of - 45° ± 15°.

In the head-up display of this aspect, the direction on the projected image display surface is defined as 0°, which coincides with the direction of electric field's oscillation of the P-polarized light component on the projected image display member surface when the projected image display member serves as the reflective surface, and the counterclockwise direction when viewed from the light source toward the projection image display member is defined as the positive side of the azimuth angle. However, when the projected image display member or the light source has a curvature, the azimuth angle at which the light beam of the image emitted from the center of the light source becomes P-polarized light when it is incident on the projected image display member is set to 0°. By adopting such an aspect, double images can be suppressed by controlling the polarized light of the image emitted from the light source (more specifically, by increasing the intensity of the P-polarized light component and decreasing the intensity of the S-polarized light component in the light incident on the projected image display member). In addition, it is possible to suppress the decrease in visibility when wearing polarized sunglasses that absorb the light of the S-polarized light component.

Hereinafter, a head-up display in which the polarization control layer is a $\lambda/4$ retardation plate will be described with reference to FIG. 10. FIG. 10 is a diagram for explaining the azimuth angle of the linear polarized light or the azimuth angle of the elliptical polarization with the highest light intensity after the elliptical polarization (or circular polarization) passes through the $\lambda/4$ retardation plate for the relation between the main orientation axis 29 of the $\lambda/4$ retardation plate and its azimuth angle 30, when the light emitted from the light source is an elliptical polarization (or circular polarization) and its rotation direction (when viewed from the light source toward the projected image display member) is counterclockwise 28 and clockwise 32, where the direction on the projected image display surface is defined as 0°, which coincides with the direction of electric field's oscillation of the P-polarized light component on the projected image display member surface when the projected image display member serves as the reflective surface, and the counterclockwise direction when viewed from the light source toward the projection image display member is defined as the positive side of the angle.

Here, for example, the wavelength of the image emitted from the light source is 560 nm, and the retardation of the $\lambda/4$ retardation plate at the wavelength of 560 nm is 140 nm. FIG. 10A and FIG. 10B show the azimuth angle of the elliptical polarization with the highest light intensity after the elliptical polarization (or circular polarization) of the light emitted from the light source passes through the $\lambda/4$ retardation plate in a case where the image emitted from the light source is counterclockwise and the azimuth angle 30 of the main orientation axis 29 of the $\lambda/4$ retardation plate is 45°, and the azimuth angle of the linear polarized light, respectively, when viewed from the light source toward the projected image display member; and FIG. 10C and FIG. 10D show the azimuth angle of the elliptical polarization with the highest light intensity after the elliptical polarization (or circular polarization) of the light emitted from the light source passes through the $\lambda/4$ retardation plate in a case where the image emitted from the light source is clockwise and the azimuth angle 30 of the main orientation axis 29 of the $\lambda/4$ retardation plate is 45°, and the azimuth angle of the linear polarized light, respectively, when viewed from the light source toward the projected image display member.

FIG. 10 shows that in a case where the image emitted from the light source is counterclockwise, the most preferable condition is that the azimuth angle 30 of the main orientation axis 29 of the $\lambda/4$ retardation plate is 45°, because the azimuth angle of the elliptical polarization with the highest light intensity after the elliptical polarization (or circular polarization) of the image emitted from the light source passes through the $\lambda/4$ retardation plate or the azimuth angle of the linear polarized light coincides with the azimuth angle of the P-polarized light, and in a case where the polarized light of the emitted light is clockwise, the most preferable condition is that the azimuth angle 30 of the main orientation axis 29 of the $\lambda/4$ retardation plate is -45°, because the azimuth angle of the elliptical polarization with the highest light intensity after the elliptical polarization (or circular polarization) of the light emitted from the light source passes through the $\lambda/4$ retardation plate or the azimuth angle of the linear polarized light coincides with the azimuth angle of the P-polarized light. Therefore, it is preferable to place the $\lambda/4$ retardation plate such that the azimuth angle of the main orientation axis of the $\lambda/4$ retardation plate is 45° $\pm$ 15° in a case where the polarized light of the light emitted from the light source is counterclockwise when the projected image display member is viewed from the light source, and the azimuth angle of the main orientation axis of the $\lambda/4$ retardation plate is -45° $\pm$ 15° in a case where the polarized light emitted from the light source is clockwise when the projected image display member is viewed from the light source, where the azimuth angle to be P-polarized light with respect to the projected image display member is 0° and the positive angle is counterclockwise when the projected image display member is viewed from the light source. By placing the $\lambda/4$ retardation plate in this way, it is easy to set Sratio2 to 0.2 or less, which can enhance the effect of suppressing double images.

Examples of the head-up display of the present invention include a glasses-type display worn on a head, and displays used indoors or outdoors or on windows of buildings or automobiles to project information while transmitting through the background.

Hereinafter, transport equipment of the present invention will be described. The transport equipment of the present invention is equipped with the head-up display of the present invention. Preferred examples of the transport equipment include automobiles, railway vehicles, and aircraft. In particular, an automobile equipped with the head-up display used as the projected image display member of the present invention on one or more of the windshield, side window, and rear window is preferred. It is also preferred that the transport equipment is equipped with the head-up display, wherein a portion of the light emitted from the light source toward the projected image display member is incident on the projected image display member at an angle of at least 50° to 75° to the normal of the projected image display member. By adopting such an aspect, it is possible to suppress the double image, and the visibility of the image for the driver is improved.

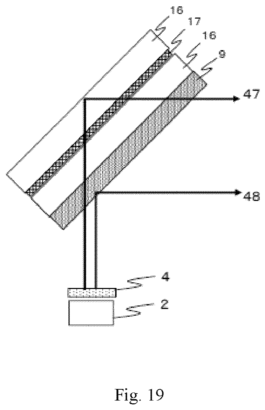

Further, it is preferable that an incident angle θ2, which is an incident angle of the light emitted from the light source with respect to a tangent plane that is tangent to the center of the image display surface of the projected image display member, is 35° or more and 70° or less, and an angle formed by the orientation axis of the projected image display member at the point C and the intersection line between the plane including a direction of electric field's oscillation of the P-polarized light component and the surface of the projected image display member is 70° or more and 90° or less. In a case where the projected image display member is a type of laminating a reflective layer 9 to the transparent substrate 16 as shown in FIG. 19, since the reflective layer 9 (multilayer film) is laminated on the surface of the projected image display member facing the light source, only the ghost image 47, which is generated on the outermost surface opposite the side where the image is incident, is visible as the multiple image. In this case, since the luminance of the ghost image depends on the amount of light passing through the reflective layer, under the incident angle conditions other than Brewster's angle, the ghost image can be reduced by adding a light absorbing material to the unit constituting the projected image display member or by increasing the reflectance of the reflective layer. As an example of adding a light absorbing material to the projected image display member, glass that absorbs visible light and becomes colored such as green glass can be used, or a material with an absorption spectrum in the visible light band can be added as described below.

Specifically, when the incident angle $\theta 2$ of the light emitted from the light source relative to the tangent plane at the center of the image display surface of the projected image display member is set within the range of 35° or more and 70° or less, the multiple image can be suppressed and the main image reflected from the reflective layer can be made clear. Of course, since bringing the incident angle closer to the Brewster's angle reduces the reflection by the surface of the transparent substrate and facilitates the visual recognition of the multiple image, $\theta 2$ is more preferably 45° or more and 65° or less. By setting $\theta 2$ to 35° or more, sufficient reflection from the reflective layer can be obtained, and the amount of the P-polarized light component reflected on the surface of the transparent substrate is reduced, and therefore the multiple image is less likely to be visually recognized. On the other hand, by setting $\theta 2$ to 70° or less, the sudden increase in the reflectance of the P-polarized light is suppressed and the contrast ratio of the ghost image relative to the main image is kept low, and therefore the multiple image is less likely to be visually recognized. Since $\theta 2$ corresponds to the light from the image projector to the incident angle, the above-described effect can be achieved by placing the image projector and the projected image display member to form the above angle such that the light from the image projector reaches the position of the observer's eyes.

An example of the method to reduce the visibility of the multiple image is to add a visible light absorber in intermediate layer of the laminated glass used for laminating the reflective layer that constitutes the projected image display member. As visible light absorbers, dyes and pigments that exhibit absorption spectra at wavelength range from 400 to 800 nm can be used among those that can be dispersed in the thermoplastic resin. The visible light absorber can be used alone or in combination of two or more kinds. For example, heat ray absorbing agents are sometimes used to suppress the rise in temperature inside a vehicle due to solar radiation, and examples of the heat ray absorbing agent that has an absorption spectrum in the visible light absorption band include CWO-based and ITO-based heat ray absorbing agents. Also, dyes, pigments, etc. can be selected as colorants. In addition, since the head-up display of the present invention mainly irradiates the P-polarized light onto the projected image display member to display the image, it is sufficient to absorb only the P-polarized light, and the dichroic dye can also be selected as such a material.

By adding such visible light absorbers in high concentrations, the amount of light involved in the ghost image 49 can be further reduced and the effects of the multiple image can be improved. On the other hand, an excess of visible light absorber may reduce the visible light transmittance of the projected image display member and degrade the scenery visibility of the projected image display member. Therefore, it is preferable that the visible light absorber be added at an addition concentration that does not impair the average transmittance of visible light incident perpendicularly to the projected image display member to the adhesive layer of the projected image display member which constitutes the transparent display system of the present invention.

The projected image display member which constitutes the head-up display in the present invention may be affected by the retardation or the orientation axis direction of the reflective layer 9 (multilayer film), such that the light emitted from the light source through the polarization control layer passes through the reflective layer, causing the intensity of the P-polarized light component to decrease compared to before the passage and the intensity of the S-polarized light component to increase compared to before the passage. Therefore, it is effective for the ghost image reduction to reduce the influence of the S-polarized light, which is not dependent on the incident angle of the light incident on the projected image display member from the light source through the polarization control layer with respect to the reflective surface, but reflects on the surface of the transparent substrate on the viewer's side and on the side opposite to the viewer. For this reason, when adding a visible light absorber in the intermediate film of the laminated glass, it is preferable to choose the dichroic dyes represented by iodine, anthraquinone dyes, azo dyes, and thiazole dyes, which have a light transmission axis and a light absorption axis and can absorb only specific polarized waves, rather than visible light absorbers such as dyes and pigments, which reduce transmittance uniformly regardless of the polarized wave.

When using the dichroic dye described above as a visible light absorber, it is preferable that the angle formed by the direction of the light transmission axis of the visible light absorber and the intersection line between the direction of oscillation of the P-polarized light component contained in the light emitted through the polarization control layer and the projected image display member is 0° or more and 5° or less. By making the intersection line between the oscillation direction of the P-polarized light component contained in the light emitted through the polarization control layer and the projected image display member closer to parallel with the light transmission axis direction of the light absorber, it is possible to cut the S-polarized light component contained in the light transmitted through the reflective layer due to the retardation or orientation angle of the reflective layer of the multilayer film, etc. that can be used in the transparent display system of the present invention. As a result, the amount of light of the ghost image that is generated by being reflected on the outermost back surface of the projected image display member can be reduced, thereby minimizing the multiple image that is visually recognized by the observer. In addition, a sheet containing such a dichroic dye can also be attached and inserted as a material constituting the projected image display member through an optical adhesive or the like.

Hereinafter, buildings of the present invention will be described. The building of the present invention is equipped with the head-up display of the present invention. It is desirable for use in building windows, transparent signage and spatial presentation in buildings.

Hereinafter, the method of producing the multilayer film for the reflective layer constituting the projected image display member of the present invention will be specifically described with an example. When the multilayer film for the reflective layer constituting the projected image display member of the present invention has the above-mentioned configuration, the multilayer structure of 51 or more layers can be produced by the following method. First, from two extruders, an extruder A corresponding to a layer A and an extruder B corresponding to a layer B, a resin mainly composed of the crystalline polyester as the first thermoplastic resin and a resin mainly composed of polyester containing a structure derived from naphthalenedicarboxylic acid as the second thermoplastic resin are supplied in a molten state. The molten thermoplastic resin from each flow path is laminated in 51 or more layers using a known multi-layer laminating equipment such as multi-manifold type feedblock and a square mixer, or a comb type feedblock alone. The molten laminate is then melt extruded into a sheet using a T-type die or the like, and then cooled and solidified on a casting drum to obtain an unstretched multilayer film. As a method for improving the multilayer accuracy of the layers A and B, the methods described in JP 2007-307893 A, JP 4,691,910 B, and JP 4,816,419 B are preferred. It is also preferable to dry the thermoplastic resin used for the layer A and the thermoplastic resin used for the layer B, if necessary.

Next, the unstretched multilayer film is stretched and heat treated. The known sequential biaxial stretching method or simultaneous biaxial stretching method is preferred as the stretching method. The stretching temperature in each direction is preferably in the range from the glass transition temperature of the higher one of the main components of the layers A and B that constitute the multilayer film to the glass transition temperature + 80°C or less. The glass transition temperature of the resin and the melting point can be measured in accordance with JIS-K-7122 (2012), and the details of the measurement method are described below.

The case of sequential biaxial stretching is described below. In the case of sequential biaxial stretching, it is preferable to perform stretching in the longitudinal direction followed by stretching in the width direction. Stretching in the longitudinal direction referred to here is the first-axis stretching to give the cast sheet the molecular orientation of the longitudinal direction, and is usually applied by differential peripheral speed of the rolls. Stretching to the longitudinal direction may be carried out in one stage using a pair of rolls, or in multiple stages using multiple pairs of rolls. The stretching ratio varies depending on the type of resin that constitutes the multilayer film, but a ratio of 2.0 to 8.0 times is usually preferred, and when polyethylene terephthalate is used as any of the resins that constitute the multilayer film, a ratio of 2.5 to 6.0 times is particularly preferably used. In a case where a thermoplastic resin including polyethylene terephthalate or polyethylene naphthalate as a basic backbone is used for any of the crystalline thermoplastic resins that constitute the film, in order for the optical spectrum when the P-polarized light is incident from the direction inclined at 60° from the normal of the film surface toward the orientation axis and the optical spectrum when the P-polarized light is incident from the direction inclined at 60° toward the direction perpendicular to the orientation axis to have a desired area A without overlapping with each other, the stretching ratio in the longitudinal direction of 2.7 to 3.5 times is preferably used, which is lower than the conditions for stretching in the width direction described later.

The uniaxially stretched film thus obtained may be subjected to a surface treatment such as corona treatment, flame treatment, or plasma treatment as necessary, and then easy adhesive layer imparted with functions such as easy slippage, easy adhesion, and antistatic properties may be applied by in-line coating. In the inline coating step, the easy adhesive layer may be applied to one side of the multilayer film, or to both sides of the multilayer film simultaneously or one side at a time in sequence.

The uniaxially stretched film is then stretched in the width direction. Stretching in the width direction refers to the second-axis stretching to give the sheet the orientation in the width direction, and is usually performed using a tenter while being transported with both ends of the sheet held with clips. The stretching ratio varies depending on the type of resin that constitutes the multilayer film. In general, however, the stretching ratio is preferably 2.0 to 8.0 times. When polyethylene terephthalate or polyethylene naphthalate is used for any of the crystalline thermoplastic resins that constitute the multilayer film, the stretching ratio of 2.5 to 6.0 times is particularly preferably used. Regarding the stretching speed, it is preferable to stretch at a high speed in order to increase the orientation in the width direction, and the maximum stretching speed in the stretching step is preferably 20 %/sec or more.

When polyethylene terephthalate or polyethylene naphthalate is used for any of the crystalline thermoplastic resin which constitutes the multilayer film, it is preferable to apply a stretching at 3.5 to 6.0 times in the width direction, after applying a stretch at the former's preferred magnification in the longitudinal direction, in order to adjust the area A within the preferred range. By strongly stretching the film in the width direction, uniform optical spectrum, retardation, and orientation axis can be obtained over a wide area of the film surface.

The multilayer film biaxially stretched in this way is further heat-treated in a tenter at a temperature equal to or more than the stretching temperature and equal to or less than the melting point, and then uniformly and gradually cooled to room temperature and wound up. In this case, in order to achieve a more uniform orientation state of the multilayer film, it is preferable to use gently gradient temperature conditions for the stretching and heat treatment steps. The temperature gradient is set within a temperature range from the glass transition temperature of the thermoplastic resin having the highest glass transition temperature to the crystallization temperature of the resin having the highest crystallization temperature in the multilayer film. Further, it is preferable that a temperature gradient of two or more stages exists before the heat treatment temperature is reached.

As a method of reducing the shrinkage force after the stretching step and further improving the orientation uniformity in the width direction, it is preferable to use a method of lowering the heat treatment temperature to reduce the shrinkage force toward the stretching step in the longitudinal direction, or a method of providing a longer intermediate region from the stretching step to the heat treatment step to provide a temporary constant temperature or low temperature region (region exhibiting a temperature the stretching temperature + 30°C or less), thereby improving stiffness of the film. In addition, it is also preferable to suppress the shrinkage force in the longitudinal direction and then slightly stretch the multilayer film in the heat treatment step to put it in a tensed state. From the viewpoint of achieving both a balance of thermal shrinkage and orientation while taking into account the processability for the projected image display member, the slight stretching ratio is 3% or more and 18% or less, more preferably 5% or more and 10% or less.

If necessary, in order to impart a low orientation angle and thermal dimensional stability to the sheet, a relaxation treatment may be applied in the longitudinal direction and/or the width direction while slowly cooling the multilayer film in the cooling step after the heat treatment step. Furthermore, in order to adjust the heat shrinkage rate at low temperatures, it is also preferable to perform slight stretching in the section during this slow cooling step where the film temperature is equal to or higher than the temperature at which the heat shrinkage rate is to be adjusted. It is also preferable to increase the tension (draw) in the winding step after slow cooling to perform pseudo slight stretching. These methods may be combined as appropriate.

To improve the visibility of the image display over a wide range in the invention when polyethylene terephthalate or polyethylene naphthalate is used for any of the thermoplastic resins that constitute the laminate film, the ratio of the stretching ratio in the width direction to the stretching ratio in the longitudinal direction (stretching ratio in width direction/stretching ratio in longitudinal direction, or stretching ratio in longitudinal direction/stretching ratio in width direction, whichever is greater than 1) is 1.15 or more and 3.00 or less. When the stretching ratio is 1.15 or more, the difference in refractive index in the orientation direction and the direction perpendicular to it will be sufficient and the orientation in the width direction will be more uniformly. Therefore, when the image is displayed over a wide area, the multiple image is partially less visible. When the stretching ratio is 3.00 or less, the orientation in a particular direction is not too strong, which reduces problems, for example, reduced film-forming properties such as film tearing and poor appearance during processing due to high heat shrinkage rate in the stretching direction. A more preferable stretching ratio that can achieve both orientation uniformity and processability is 1.30 or more and 2.00 or less, and even more preferably 1.40 or more and 2.00 or less.

It is also preferable to carry out simultaneous biaxial stretching using a tenter. The case where simultaneous biaxial stretching is performed will be described. The unstretched multilayer film cast on a cooling roll is introduced into a simultaneous biaxial tenter, where it is conveyed while both ends in the width direction are held with clips, and stretched simultaneously and/or stepwise in the longitudinal and width directions. The stretching in the longitudinal direction is achieved by increasing the distance between the clips on the same side, and the stretching in the width direction is achieved by increasing the distance between the rails on which the clips run to increase the distance between opposing clips. The tenter clips used in the present invention to perform the stretching and heat treatment are preferably driven by a linear motor method. Other methods include the pantograph method and the screw method, among which the linear motor method is superior in that the degree of freedom of individual clips allows the stretching ratio to be changed freely.

It is also preferable to perform heat treatment after stretching. The heat treatment temperature is preferably in the range from the stretching temperature to the melting point of the thermoplastic resin which is the main component of the layer A minus 10°C, and after the heat treatment, it is also preferable to perform a cooling step at a temperature in the range equal to or less than the heat treatment temperature minus 30°C. It is also preferable to shrink (relax) the film in the width direction and/or the longitudinal direction during the heat treatment step or the cooling step to reduce the heat shrinkage rate of the film. The relaxation rate is preferably in the range of 1% to 10%, and more preferably in the range of 1% to 5%. Finally, the film is wound up on a winder to produce the multilayer film of the present invention.

The method of producing the projected image display member of the present invention will be described below using the configuration shown in FIG. 3E as an example. The transparent substrate 16 and the reflective layer 9 are laminated with an adhesive layer 17 interposed therebetween. An adhesive coating liquid composed of a crosslinking agent, a solvent, and an adhesive material such as an acrylic compound or a silicone compound is applied to the surface of the reflective layer 9 or the surface of the transparent substrate 16. As a coating method, continuous or batch coating methods can be used. Examples of the continuous coating method include a method in which a coating liquid is applied on a conveying film using a die or gravure roll, and a method in which a coating liquid is dropped using a fountain and then spread with a metaling bar. Examples of the batch-type coating method include a method in which a coating liquid is dropped by a dropper or the like and spread by a metaling bar. Subsequently, the solvent is volatilized by heating after application. The heating temperature at this time is preferably from the boiling point of the solvent minus 10°C to the boiling point of the solvent plus 50°C, and particularly preferably from the boiling point of the solvent to the boiling point of the solvent plus 30°C. Furthermore, after the solvent is volatilized, the adhesive layer is formed by UV curing by irradiation with ultraviolet ray or thermal curing to cure a curable material by heating. It is preferable to perform the irradiation with ultraviolet ray under reduced pressure or in an atmosphere where oxygen is removed such as nitrogen atmosphere, to enhance hardness. The intensity of the ultraviolet irradiation is preferably such that the integrated light quantity is 100 mJ/cm$^2$ to 1,500 mJ/cm$^2$. In the heating conditions for thermal curing, temperature is preferably from 120°C to 200°C. From the viewpoint of imparting sufficient adhesive strength, the thickness of the adhesive layer is preferably 5 μm or more and 100 μm or less. After the adhesive layer 6 is formed as described above, the transparent substrate 16 and the reflective layer 9 are adhered to each other. Examples of the adhesion method include various molding methods such as lamination molding, vacuum molding, pressure molding, and combined vacuum and pressure molding. After laminating the transparent substrate 16 and the reflective layer 9, the surface of the reflective layer 9 on the side where the transparent substrate 16 is not laminated can be adhered to the remaining transparent substrate 16 in a similar manner, thereby producing a projected image display member having the configuration shown in FIG. 3E.

EXAMPLES

The projected image display member of the present invention will be described in more detail below using Examples. However, the projected image display member of the present invention is not limited to the following aspects.

[Methods of measuring physical properties and evaluating effect]

The methods for measuring the properties and evaluating the effects are as follows.

(1) Number of multilayers in multilayer film, thickness of superficial layer, thickness of layers inside multilayer film

A sample was cut in a cross-section parallel to the thickness direction (perpendicular to the film surface) using the microtome and observed with a transmission electron microscope (TEM) to determine the number of the multilayers in the multilayer film, the thickness of the superficial layer, and the thickness of the internal layer of the multilayer film. The cross-sectional photographs were taken using a transmission electron microscope JEM1400Plus (manufactured by JEOL Ltd.) at an acceleration voltage of 100kV. The thickness of the superficial layer of the multilayer film was measured on the resulting TEM images using Image-Pro ver. 10 image processing software. The image analysis process was carried out in a perpendicular thick profile mode, where the relation between the thickness direction position and the average brightness of the region sandwiched between two lines in the width direction was read as numerical data, and a five-point moving average numerical processing was carried out on the position (nm) and brightness data using the spreadsheet software "Excel" (registered trademark) (Microsoft Office 365 version 2202). Furthermore, the resulting data of periodically changing brightness was differentiated, the maximum and minimum values of the differential curve were read using a VBA (Visual Basic for Applications) program, and the layer thickness was calculated by taking the distance between the adjacent values as the layer thickness of one layer. This operation was carried out for each image, and the layer thickness was calculated for all layers to determine the layer thickness inside the multilayer film.

(2) Transmittance of vertically incident visible light

Using a standard configuration (solid measurement system) of a spectrophotometer (U-4100 Spectrophotometer) manufactured by Hitachi, Ltd., the transmittance at wavelength range from 400 to 700 nm at an incident angle of 0° was measured in 1 nm increments, and the average transmittance was determined (measurement conditions: slit, 2 nm (visible)/automatic control (infrared); gain. 2; scanning speed, 600 nm/min). When the projected image display member has a curved surface rather than a flat surface, the axis that is perpendicular to the plane tangent to the projected image display member at the point of measurement is taken as the incident angle being 0°.

(3) Rp20, Rp40, Rp60, Rp70

A angle variable reflection unit and a Glan-Taylor polarizer were attached to a spectrophotometer (U-4100 Spectrophotometer) manufactured by Hitachi, Ltd., and a light containing only the P-polarized light component was incident on the sample at incident angles θ = 20°, 40°, 60°, and 70°. The reflectance in the wavelength range from 380 to 780 nm was measured in 1 nm increments for each incident angle. From the resulting reflectance spectra, Rp20, Rp40, Rp60, and Rp70 were determined as the average reflectance of light containing only the P-polarized light component in the wavelength range from 400 nm to 700 nm for the incident angles 20°, 40°, 60°, and 70°. In the light of the installation orientation in the head-up display, the inclination directions of 20°, 40°, 60°, and 70° were directions along the main orientation axis of the film for the multilayer film and the metal layer film, and the long side direction for the projected image display member.

(4) Rp60 (0°), Rp60 (45°), Rp60 (90°), Rp60 (135°), Rp60 (180°), and azimuth angle variation

The supplied angle variable reflection unit and Glan-Taylor polarizer were attached to a spectrophotometer (U-4100 Spectrophotometer) manufactured by Hitachi, Ltd., and a light containing only the P-polarized light component was extracted for the projected image display member, and the reflectance in the wavelength range from 400 to 700 nm was measured in 1 nm increments at the incident angle $\theta$ = 60° for five azimuth angle directions; 0°, 45°, 90°, 135°, and 180°, clockwise based on the azimuth angle 0° in the long side direction of the sample. Rp60 (0°), Rp60 (45°), Rp60 (90°), Rp60 (135°), and Rp60 (180°) were determined as the average reflectance of the linear polarized light containing only the P-polarized light component in the wavelength range from 400 nm to 700 nm. Furthermore, the difference between the maximum and minimum values of the obtained Rp60 (0°), Rp60 (45°), Rp60 (90°), Rp60 (135°), and Rp60 (180°) was considered as the azimuth angle variation.

(5) Calculation of area A

The supplied angle variable reflection unit and Glan-Taylor polarizer were attached to the spectrophotometer (U-4100 Spectrophotometer) manufactured by Hitachi, Ltd., and measurements were performed for a sample inclined at 60° in the main orientation axis direction measured in section (7) (to obtain spectrum A) and a sample inclined at 60° in a direction perpendicular to the main orientation axis direction (to obtain spectrum B). The linear polarized light containing only the P-polarized light component was extracted from the light source with the Glan-Taylor polarizer and made incident on the sample to obtain optical spectra in the wavelength range from 395 to 705 nm contained in the reflected light, and the area of the region surrounded by both optical reflection spectra was calculated to obtain the area A (nm %).

(6) In-plane refractive index and vertical-plane refractive index of outer most layer (layer A) of multilayer film

The refractive index was measured using a prism coupler SPA-400 manufactured by Sailon Technology, Inc. at a measurement laser wavelength of 633 nm. The in-plane refractive index and the vertical-plane refractive index were determined in the main orientation axis direction of the film and in the direction perpendicular to the main orientation axis direction. The refractive index of the vertical-plane was the average value of the value measured from the main orientation axis direction and the value measured from the direction perpendicular to the main orientation axis direction. The refractive index obtained here indicates the refractive index of layer A.

(7) Angle formed by orientation axis of projected image display member at point C and intersection line between surface of the projected image display member and plane including main orientation axis direction and direction of electric field's oscillation of P-polarized light component

The orientation degree was measured using a molecular orientation meter MOA-7015 manufactured by current Oji Scientific Instruments Co., Ltd., and the direction with the highest orientation degree was designated as the main orientation axis direction. Using the orientation axis (main orientation axis direction) at the point C and the intersection between the surface of the projected image display member and the plane including the direction of electric field's oscillation of the P-polarized light component, angles formed by them were calculated (designated as "angle formed by electric field oscillating plane of P-polarized light - orientation axis at point C" in Table).

(8) In-plane the retardation of projected image display member and its variation, orientation angle measurement (orientation angle variation)

The retardation measuring device (KOBRA-WPR) manufactured by the Oji Scientific Instruments Co., Ltd. was used. For a windshield-size projected image display member as described below, the measurement sample was marked at the following five measurement points (points C, X1, X2, Y1 and Y2) and then, for each measurement point, cut out in a size of 7 cm in the horizontal direction (Y axis, long side direction) and 5 cm in the direction parallel to the surface of the projected image display member and perpendicular to the Y-axis (X-axis, short side direction) such that the desired measurement point was centered. For the five measurement samples obtained corresponding to respective measurement points, the samples were placed on a stage for setting a large sample at the bottom of the device, and the horizontal direction of the measurement sample was aligned with the direction of the angle of 0° set in the device, and the angle (orientation angle) indicated by the orientation axis of the measurement sample and the in-plane retardation at 587 nm when light was incident perpendicularly were determined. The angles were measured in representation of -90° to 90° with respect to the direction of 0° (counterclockwise was taken as +). The retardation was measured at five points: the center of the sample corresponding to point C, the midpoints between the central point and the ends in the long side direction corresponding to points X1 and X2, and the midpoints between the central points and the ends in the short side direction corresponding to points Y1 and Y2, and then the standard deviation of the five measurement results was then divided by the average value to calculate the variation in retardation as a percentage. Among the orientation angles measured at the aforementioned points C, X1, X2, Y1 and Y2, the orientation angle with the largest absolute value was taken as the maximum value (in the table, "MAX value") among the five points, and the orientation angle with the smallest absolute value was taken as the minimum value (in the table, "MIN value"). Furthermore, the angle formed by the orientation axes at the two points showing the MAX and MIN values was calculated as variation. However, in the calculation of variation, when the maximum and minimum values were deflected between 90° and -90°, measurement was performed again in representation of 0° to 180°, and the difference in the orientation axis was calculated from the difference between the maximum and minimum values. For the measurement points of the projected image display member, a long side direction corresponds to a right-to-left direction (point Y1 is on the left) and a short side direction corresponds to an up-and-down direction (point X1 is upper).

(9) Glass transition temperature and melting point of resin

Five milligrams of resin pellets were weighed on an electronic balance, sandwiched between aluminum pans, and measured using a DSCvesta Smart Loader manufactured by Rigaku Corporation, in accordance with JIS-K-7122 (2012), by raising the temperature from 25°C to 300°C at a rate of 20 °C/min. The glass transition temperature (Tg) and the melting point (Tm) were obtained from the DSC data obtained.

(10) Refractive index of thermoplastic resin

The refractive index was measured using a prism coupler SPA-400 manufactured by Sailon Technology, Inc. The thermoplastic resin pellets that had been vacuum dried at 70°C for 48 hours were melted at 280°C, then pressed with a press and quenched to produce a sheet having a thickness of 200 $\mu$m, and the resulting sheet was used to measure the refractive index of the thermoplastic resin.

(11) Refractive index of layer B in multilayer film

Since the layer B is an internal layer of the multilayer film, the refractive index was measured using the prism coupler SPA-400 manufactured by Sailon Technology, Inc., not for the multilayer film, but for the film of the layer B resin alone, which was produced under the same stretching and heat treatment conditions as those for the multilayer film. The wavelength of the laser used for the measurement was 633 nm. The in-plane refractive index was determined as the average of the values obtained on both sides of the film in the main orientation axis direction and in the direction perpendicular to the main orientation axis direction. The vertical-plane refractive index was determined as the average of the values obtained on both sides of the film for the average of the values measured from the main orientation axis direction and the direction perpendicular to the main orientation axis direction.

(12) Verification of refractive index of layer B of multilayer film

An optical simulation of the reflectance was performed using the layer thickness of the multilayer film obtained in the section (1), the refractive index of the layer A of the multilayer film obtained in the section (6), and the refractive index of the layer B obtained in the section (11). The result of the optical simulation was compared with the reflectance measured in the section (3). When the difference between the two was within $\pm$3%, the refractive index of the layer B obtained in the section (11) was considered to be the refractive index of the layer B of the multilayer film. Optical simulations were performed using the characteristic matrix method for optical thin films (Mitsunobu Kobiyama (2006) Design of Thin-FilmOptical Filters, Optronics Co., Ltd.) by performing calculations with a VBA program.

(13) IV (intrinsic viscosity)

The IV was calculated from the solution viscosity measured using an Ostwald viscometer at the temperature of 25°C after dissolved using orthochlorophenol as a solvent at the temperature of 100°C for 20 minutes.

(14) Pencil hardness

The multilayer film of the projected image display member was tested for its surface on which the multilayer film was laminated or its surface on which the metal layer film was laminated using HEIDON-14DR manufactured by Shinto Scientific Co., Ltd. in accordance with JIS-K5600-5-4 (1999). The test was performed using pencils with hardness ranging from 6H to 6B as specified in JIS-K5600-5-4 (1999) under conditions of a load of 750 g, a pencil tip moving speed of 30 m/min, and a moving distance of 10 mm, to determine the highest hardness at which scratches were not visually recognized.

(15) Evaluation of head-up display

As a projected image display member, a glass laminate including a multilayer film attached onto an A4-size float glass described below was used. A display (SP-133CM) manufactured by DreamMaker Co., Ltd. was used as a light source, and the projected image display member was placed at the angle ($\theta2$) shown in the table relative to the light source (when $\theta2 = 60°$, the light emitted vertically from the light source has an incident angle of 60° relative to the normal direction to the surface of the projected image display member). The azimuth angle at which the light becomes the P-polarized light with respect to the projected image display member is defined as 0° (counterclockwise direction when viewed from the light source toward the projected image display member is positive azimuth angle), and the counterclockwise and clockwise rotation directions of elliptical polarization or circular polarization are defined with respect to the view from the light source toward the projected image display member. The light source was of a type that emitted the linear polarized light, and the azimuth angle of the linear polarized light was controlled by rotating the light source. When the light emitted from the light source was to be circular polarization, a $\lambda/4$ retardation plate was placed above the light source to generate the circular polarization. In this case, the configuration with the $\lambda/4$ retardation plate placed above the light source was considered as a light source. For the light source emitting the linear polarized light or the circular polarization, any of the polarizing plate, the $\lambda/2$ retardation plate, or the $\lambda/4$ retardation plate (details will be described below) was placed as a polarization control layer above the light source, and the light emitted from the light source toward the projected image display member was passed through the polarization control layer to change the polarization state to make the light incident on the projected image display member. Alternatively, the light emitted from the light source was made directly incident on the center point C of the projected image display member without placing the polarization control layer. A green lattice image was used as the image emitted from the light source. FIG. 11 is a schematic view of the evaluation configuration. The images projected onto the projected image display member were visually evaluated for each item according to the following criteria (note that although the detailed configuration of the projected image display member 3 is not shown in FIG. 11, the projected image display members in each of Examples and Comparative Examples have the configuration shown in Table 3). In FIG. 11, the reference numerals 2 to 7, 33, and 34 represent the light source, the projected image display member, the polarization control layer, the image (light) emitted from the light source, the image reflected by the projected image display member and visually recognized by the user, the user, the incident angle of the light which forms the image, and the light that provides information on the surrounding scenery, respectively.

(Evaluation criteria for display performance of projected images)

A: The projected image was very bright.
B: The projected image was bright.
C: The projected image was not visible.

(Double image visibility of projected images)

A: The double image was not visible.
B: The double image was observed to the extent that it did not affect the image visibility.
C: The double image beyond criterion B was observed.
The double image referred to here means the phenomenon in which a projected image appears to be split into two or more parts, images that appears not only double, but also triple or more are called double images.
D: Visibility of the double image was not evaluated because the projected image was not visible.

(Evaluation criteria for visibility of background)

A: The background was clearly visible.
B: The background appeared dark without practical concern.
C: The background appeared dark beyond criterion B, or the background was not visible.

(16) Evaluation of wide range display of head-up display

As the projected image display member, an automobile's windshield size projected image display member was prepared, as described later. A display manufactured by DreamMaker Co., Ltd. (SP-133CM) was used as the light source, and the light source, a polarization control layer, and a projected image display member were placed as shown in the table. The position of the display was translated so that the image was projected at positions corresponding to points C, X1, X2, Y1, and Y2 on the projected image display member, and the image was visually evaluated by a user in front of the point C and judged according to the following criteria.

(Double image visibility of projected images)

A: The image was clearly visible with no double image across the entire display range.
B: The double image was observed in a part of the display range to the extent that it did not affect the image display performance.
C: The double image was observed in the most part of the display range to the extent that it did not affect the image display performance.
D: The double image beyond criteria B and C was visually recognized in a part of or entire display range.
E: The projected image was not recognized across the entire display range, and the double image was not evaluated.

(17) Evaluation of iridescent unevenness in appearance

During the evaluation of (16), outdoors in clear weather, the subject fixed his/her gaze in the horizontal direction and looked at the projected image while wearing polarized sunglasses, and evaluated the degree of coloration. The evaluation criteria are as follows:

A: Coloration is barely observable.
B: Slight coloration is visible, which has no problem in practice.
C: Strong coloration is visible.

[Thermoplastic resin used for film]

The following resins were used in the production of the films used in each of Examples and Comparative Examples. All of them are thermoplastic resins, with resins A, B, C, and F being crystalline thermoplastic resins, and resins D, E, and G being amorphous thermoplastic resins.

Resin A: polyethylene terephthalate with IV = 0.65, refractive index = 1.58, Tg = 78°C, Tm = 254°C.

Resin B: polyethylene naphthalate copolymer with IV = 0.64 (polyethylene naphthalate copolymerized with 20 mol% of isophthalic acid component based on the total acid components and 5 mol% of polyethylene glycol having a molecular weight of 400 based on the total diol component) refractive index = 1.63, Tg = 85°C, Tm = 215°C.

Resin C: polyethylene terephthalate copolymer with IV = 0.64 (polyethylene terephthalate copolymerized with 20mol% of 2,6-naphthalenedicarboxylic acid component based on the total acid components) refractive index = 1.58, Tg = 90°C, Tm was not observed for the resin pellets, but Tm = 220°C for the film of the layer B resin alone, which had been stretched 3.3-fold both in the longitudinal direction and width direction at 100°C.

Resin D: polyethylene naphthalate copolymer with IV = 0.64 (polyethylene naphthalate copolymerized with 35mol% of paraxylene glycol component based on the total diol components and 8 mol% polyethylene glycol having a molecular weight of 400 based on the total diol components), refractive index1.64, Tg = 87°C, Tm was not observed.

Resin E: polyethylene terephthalate copolymer with IV = 0.73 (polyethylene terephthalate copolymerized with 33 mol% of cyclohexanedimethanol component based on the total diol component), refractive index = 1.57, Tg = 80°C, Tm was not observed.

Resin F: polyethylene naphthalate with IV = 0.64, refractive index = 1.65, Tg = 120°C, Tm = 265°C.

Resin G: polyethylene terephthalate copolymer with IV = 0.67 (polyethylene terephthalate copolymerized with 50 mol% of 2,6-naphthalenedicarboxylic acid component based on the total acid components), refractive index = 1.62, Tg = 105°C, Tm was not observed.

Resin H is a resin in which the 2,6-naphthalenedicarboxylic acid component and the terephthalic acid component in the acid component are equal, but is treated as a polyethylene terephthalate copolymer.

(Production of multilayer film and film)

A multilayer film and a film were produced as follows. The film formation conditions are shown in Table 1, and the evaluation results are shown in Table 2.

(Multilayer film 1)

The resin A was used as the thermoplastic resin constituting the layer A, and the resin B was used as the thermoplastic resin constituting the layer B. Each of the resin A and the resin B was melted in an extruder at 280°C, passed through five FSS-type leaf disc filters, and then alternately merged in 201-layer feedblocks (layer A, 101 layers; layer B, 100 layers) which were designed such that the reflection wavelength of the linear polarized light containing only the P-polarized light component at an incident angle of 60° when the film served as a reflective surface fell within 400 nm to 800 nm, while being metered using a gear pump such that the discharge ratio (multilayer ratio) was resin A/resin B = 1.2. Then, the melted laminate was fed to a T-die to be formed into a sheet, and then rapidly cooled and solidified on a casting drum whose surface temperature was maintained at 25°C while applying an electrostatic voltage of 8 kV with a wire, to obtain an unstretched multilayer film. The unstretched multilayer film was stretched longitudinally at a temperature of 90°C and a stretching ratio of 3.3 times, and both sides of the film were subjected to a corona discharge treatment in air. On both sides of the resin, an easy adhesive layer-forming coating liquid was applied, which was prepared by mixing (polyester resin with a glass transition temperature of 18°C) and (polyester resin with a glass transition temperature of 82°C) at 50 parts by mass/50 parts by mass and further mixing 3 parts by mass of silica particles having an average primary particle size of 100 nm with respect to the mixed resin. The average particle size of the primary particles referred to here is a value measured by dynamic light scattering method. The resulting uniaxially stretched multilayer film was then guided to a tenter with both ends in the width direction held by clips, and the film was preheated at a preheating temperature of 90°C, and then transversely stretched at a stretching temperature of 100°C and a stretch ratio of 3.6. In the stretching step, the clip gap was set such that the film was stretched at a uniform speed along the film transport flow, and the maximum stretching speed was 9%/sec. Between the stretching step and the heat treatment step, an intermediate region adjusted to 160°C was provided through which the film was passed, and then the multilayer film after transverse stretching was subjected to heat treatment at 220°C. In this case, no additional stretching was carried out in the heat treatment step. Thereafter, the film was subjected to 3% relaxation in the width direction (denoted as "Rx" in the table) and cooled at 100°C to obtain a multilayer film having a thickness of 20 μm (both superficial layers have a thickness of 1.0 μm). The evaluation results are shown in Table 2. The film thickness, number of multilayers, superficial layer thickness, and multilayer ratio were determined by adjusting the take-up speed of the casting drum, the number of slits in the feedblock, the slit width in the feedblock, and the discharge amount (the same applies to other examples and comparative examples below).

(Multilayer films 2, 3, and 5 to 11)

A multilayer film was obtained in the same manner as for the multilayer film 1, except that the resin of each layer, the number of layers, the superficial layer thickness , the overall thickness, the multilayer ratio, and the film-forming conditions (stretching ratios for longitudinal stretching and transverse stretching, preheating temperature and stretching temperature for transverse stretching, intermediate region temperature between stretching and heat treatment, heat treatment temperature and additional stretching ratio in the heat treatment step, relaxation treatment conditions in the width direction, and cooling temperature) were as shown in Table 1. The evaluation results are shown in Table 2. The multilayer film has a layer configuration in which the layer A and the layer B are alternately laminated, with the layer A being the outermost layer on both sides. The thickness of each layer was controlled by a feedblock designed so that the reflection wavelength of the P-polarized light at an incident angle of 60° is in the range from 400 nm to 1,000 nm.

(Multilayer film 12)

In the production of the multilayer film 11, as a stretching method during transverse stretching, a tenter stretching design was provided with which the clip gap was widened at once to attain a maximum stretching speed of 23%/sec immediately after the start of stretching. The multilayer film was obtained by the same production method as that for the multilayer film 11, except that an additional 10% stretching was applied in the heat treatment step, and the stretching ratio (tenter clip gap) in the stretching zone was adjusted such that the transverse stretching ratio was 4.1 times including said 10% additional stretching. The evaluation results are shown in Table 2.

(Multilayer film 4)

Two multilayer films 3 were attached to each other with an acrylic adhesive having a thickness of 10 μm. The evaluation results are shown in Table 2.

(Verification of refractive index of layer B)

For the multilayer films 1 to 3 and 5 to 12, for verification of the refractive index of the layer B of the multilayer film in section (10), the optical simulation results were compared with the reflectance measured in section (3), and the difference between the two was ±3% or less in all cases. Therefore, the refractive index of the layer B obtained in section (9) was regarded as the refractive index of the layer B of the multilayer film.

(Film 1)

Resin A was used as the thermoplastic resin. The resin was melted at 280°C in an extruder, passed through five FSS-type leaf disc filters, and then fed to a T-die to be formed into a sheet, and then rapidly cooled and solidified on a casting drum whose surface temperature was maintained at 25°C while applying an electrostatic voltage of 8 kV with a wire, to obtain an unstretched film. This unstretched film was stretched longitudinally at a temperature of 90°C and a stretch ratio of 3.3 times, and both sides of the film were subjected to a corona discharge treatment in air, and the easy adhesive layer-forming film coating liquid used in the production of the multilayer film 1 was applied to the treated surfaces of both sides of the film. Thereafter, the uniaxially stretched multilayer film was guided to a tenter with both ends in the width direction held by clips, and the film was transversely stretched at a preheating temperature of 90°C, a stretching temperature of 100°C, and a stretch ratio of 3.5. In the stretching step, the clip gap was set so that the film was stretched at a uniform speed along the film transport flow, and the maximum stretching speed was 9 %/sec. Between the stretching step and the heat treatment step, an intermediate region adjusted to 160°C was provided through which the film was passed, and then the film after transverse stretching was subjected to heat treatment at 230°C. In this case, no additional stretching was carried out in the heat treatment step. Thereafter, the film was subjected to 3% relaxation in the width direction and cooled at 100°C to obtain a film having a thickness of 50 μm. The evaluation results are shown in Table 2.
The multilayer film 4 is produced by bonding two of the same multilayer films 3 together using an acrylic adhesive having a thickness of 10 μm, and the conditions for film formation described herein are those of the multilayer films before being bonded together (note that the number of layers in the multilayer film 4 does not include the adhesive layer used to bond the two multilayer films together).

(Production of metal layer film 1)

A magnetron sputtering apparatus was used to laminate a ZnO layer on the film 1 with a thickness of 5 nm. The ZnO layer was laminated according to the following procedures. First, the film 1 and the ZnO layer were placed in the magnetron sputtering apparatus and the pressure was reduced to $1.0 \times 10^{-3}$ Pa, and then argon gas and oxygen gas were introduced at an oxygen gas partial pressure of 10% to reach $2.0 \times 10^{-1}$ Pa. Next, a direct current was applied to the magnetron sputtering cathode e at an input power of 3000 W to generate argon-oxygen gas plasma, and a ZnO layer having a thickness of 5 nm was formed on the surface of the film 1 by sputtering. Thereafter, a metal layer film 1 was produced by laminating an Ag layer having a thickness of 8 nm and a ZnO layer having a thickness of 5 nm in this order on the ZnO layer in the same manner. The evaluation results of the produced metal layer film 1 are shown in Table 2.

[Table 1]

[Table 1]

| | Layer A Resin | Layer B Resin | Number of layers (-) | Thickness of superficial layer — Surface facing cast drum (µm) | Thickness of superficial layer — Opposite surface (µm) | Whole thickness of film (µm) | Lamination ratio (-) | Longitudinal stretching — Temperature (°C) | Longitudinal stretching — Magnification (-) | Horizontal stretching — Preheating temperature (°C) | Horizontal stretching — Stretching temperature (°C) | Horizontal stretching — Magnification (-) | Stretching ratio (horizontal/longitudinal) (-) | Maximum stretching speed (%/sec) | Temperature in intermediate region from stretching to heat treatment (°C) | Heat treatment — Temperature (°C) | Heat treatment — Additional stretching Magnification (%) | Rx (%) | Cooling — Temperature (°C) |
|---|---|---|---|---|---|---|---|---|---|---|---|---|---|---|---|---|---|---|---|
| Multilayer film 1 | Resin A | Resin B | 201 | 1 | 1 | 20 | 1.2 | 90 | 3.3 | 90 | 100 | 3.6 | 1.09 | 9 | 160 | 220 | 0 | 3 | 100 |
| Multilayer film 2 | Resin A | Resin B | 401 | 5 | 5 | 50 | 1.5 | 90 | 3.3 | 90 | 100 | 3.6 | 1.09 | 9 | 160 | 220 | 0 | 3 | 100 |
| Multilayer film 3 | Resin A | Resin B | 801 | 5 | 5 | 110 | 1.5 | 90 | 3.3 | 90 | 100 | 3.6 | 1.09 | 9 | 160 | 220 | 0 | 3 | 100 |
| Multilayer film 4 | Resin A | Resin B | 1602 | 5 | 5 | 230 | 1.5 | 90 | 3.3 | 90 | 100 | 3.6 | 1.09 | 9 | 160 | 220 | 0 | 3 | 100 |
| Multilayer film 5 | Resin A | Resin B | 801 | 5 | 5 | 110 | 1.5 | 90 | 3.3 | 90 | 100 | 4.2 | 1.27 | 9 | 160 | 220 | 0 | 3 | 100 |
| Multilayer film 6 | Resin A | Resin C | 801 | 5 | 5 | 110 | 1.5 | 95 | 3.4 | 90 | 115 | 3.7 | 1.09 | 9 | 160 | 210 | 0 | 3 | 100 |
| Multilayer film 7 | Resin A | Resin D | 801 | 5 | 5 | 110 | 1.5 | 95 | 3.5 | 90 | 115 | 3.8 | 1.09 | 9 | 160 | 220 | 0 | 3 | 100 |

(continued)

| | Layer A | Layer B | Number of layers | Thickness of superficial layer | | Whole thickness of film | Lamination ratio | Longitudinal stretching | | Horizontal stretching | | | Stretching ratio (horizontal/longitudinal) | Maximum stretching speed | Temperature in intermediate region from stretching to heat treatment | Heat treatment | | Rx | Cooling |
| | Resin | Resin | | Surface facing cast drum | Opposite surface | | | Temperature | Magnification | Preheating temperature | Stretching temperature | Magnification | | | | Temperature | Additional stretching Magnification | | Temperature |
| | (-) | (-) | (-) | (μm) | (μm) | (μm) | (-) | (°C) | (-) | (°C) | (°C) | (-) | (-) | (%/sec) | (°C) | (°C) | (%) | (%) | (°C) |
| Film 1 | Resin A | - | 1 | - | - | 50 | - | 90 | 3.3 | 90 | 100 | 3.5 | 1.06 | 9 | 160 | 230 | 0 | 3 | 100 |
| Multilayer film 8 | Resin A | ResinE | 801 | 5 | 5 | 110 | 1.5 | 95 | 3.4 | 90 | 115 | 3.7 | 1.09 | 9 | 160 | 230 | 0 | 3 | 100 |
| Multilayer film 9 | Resin F | ResinG | 801 | 5 | 5 | 110 | 1.5 | - | - | 90 | 150 | 5.0 | -- | 9 | 160 | 150 | 0 | 3 | 100 |
| Multilayer film 10 | Resin A | ResinC | 801 | 5 | 5 | 110 | 1.5 | 95 | 3.1 | 90 | 115 | 4.1 | 1.32 | 9 | 140 | 200 | 0 | 3 | 100 |
| Multilayer film 11 | Resin A | ResinC | 801 | 5 | 5 | 110 | 1.5 | 95 | 2.9 | 90 | 115 | 4.1 | 1.44 | 9 | 140 | 200 | 3 | 3 | 130 |
| Multilayer film 12 | Resin A | ResinC | 801 | 5 | 5 | 110 | 1.5 | 95 | 2.9 | 90 | 115 | 4.1 | 1.44 | 23 | 140 | 200 | 10 | 3 | 130 |

[Table 2]

[Table 2]

[Table 2]

| | In-plane refractive index of outermost layer (Layer A) | | Vertical-plane refractive index (average) of outermost layer (Layer A) | Refractive index of Layer B | | Transmittance of light incident perpendicularly | Reflectance of P-polarized light component | | | | Variation in azimuth angle of Rp60 |
|---|---|---|---|---|---|---|---|---|---|---|---|
| | Direction of main orientation axis | Direction perpendicular to direction of main orientation axis | | In-plane refractive index (average) | vertical-plane refractive index (average) | | Rp20 | Rp40 | Rp60 | Rp70 | |
| | (-) | (-) | (-) | (-) | (- ) | (%) | (%) | (%) | (%) | (%) | (%) |
| Multilayer film 1 | 1.65 | 1.65 | 1.49 | 1.63 | 1.63 | 91 | 9 | 12 | 22 | 33 | 2 |
| Multilayer film 2 | 1.65 | 1.65 | 1.49 | 1.63 | 1.63 | 91 | 9 | 14 | 33 | 48 | 3 |
| Multilayer film 3 | 1.65 | 1.65 | 1.49 | 1.63 | 1.63 | 91 | 9 | 18 | 44 | 59 | 3 |
| Multilayer film 4 | 1.65 | 1.65 | 1.49 | 1.63 | 1.63 | 85 | 12 | 32 | 57 | 71 | 4 |
| Multilayer film 5 | 1.66 | 1.63 | 1.49 | 1.63 | 1.63 | 85 | 15 | 23 | 56 | 68 | 13 |
| Multilayer film 6 | 1.65 | 1.65 | 1.49 | 1.65 | 1.56 | 92 | 7 | 8 | 16 | 29 | 2 |
| Multilayer film 7 | 1.65 | 1.65 | 1.49 | 1.64 | 1.64 | 92 | 9 | 21 | 49 | 64 | 3 |
| Film 1 | 1.65 | 1.65 | 1.49 | - | - | 92 | 7 | 3 | 0 | 10 | 1 |
| Multilayer film 8 | 1.65 | 1.65 | 1.49 | 1.57 | 1.57 | 48 | 54 | 63 | 75 | 80 | 4 |
| Multilayer film 9 | 1.82 | 1.63 | 1.56 | 1.62 | 1.62 | 44 | 100 | 100 | 100 | 100 | 51 |
| Metal layer film 1 | - | - | - | - | - | 78 | 19 | 14 | 10 | 16 | 1 |

| | In-plane refractive index of outermost layer (Layer A) | | Vertical-plane refractive index (average) of outermost layer (Layer A) | Refractive index of Layer B | | Transmittance of light incident perpendicularly | Reflectance of P-polarized light component | | | | Variation in azimuth angle of Rp60 |
|---|---|---|---|---|---|---|---|---|---|---|---|
| | Direction of main orientation axis | Direction perpendicular to direction of main orientation axis | | In-plane refractive index (average) | vertical-plane refractive index (average) | | Rp20 | Rp40 | Rp60 | Rp70 | |
| | (-) | (-) | (-) | (-) | (- ) | (%) | (%) | (%) | (%) | (%) | (%) |
| Multilayer film 10 | 1.66 | 1.62 | 1.49 | 1.67 | 1.51 | 92 | 9 | 10 | 21 | 32 | 6 |
| Multilayer film 11 | 1.67 | 1.62 | 1.49 | 1.67 | 1.50 | 92 | 10 | 11 | 25 | 38 | 8 |
| Multilayer film 12 | 1.67 | 1.62 | 1.49 | 1.67 | 1.50 | 92 | 11 | 12 | 28 | 41 | 10 |

(Polarization control layer)

As the polarization control layer, a polarizing plate, a λ/2 retardation plate, and a λ/4 retardation plate were used as described below.

[Polarizing plate]
Edmund Optics, Japan Co., Ltd.: visible polarized light film (XP38) was used.
[λ/2 retardation plate]

Edmund Optics, Japan Co., Ltd.: λ/2 polymer retardation film was used.
Retardation at wavelength 560 nm was 280 nm.

[λ/4 retardation plate]

Edmund Optics, Japan Co., Ltd.: λ/4 polymer retardation film was used.
Retardation at wavelength 588 nm was 147 nm.

(Production of A4-size projected image display members 1 to 8, and 10 to 15)

For an A4-size float glass plate having a thickness of 2 mm, multilayer films 1 to 12, metal layer film 1, and film 1, the following coating material A was applied to the surface of each film with a bar coater and dried in a hot air convection dryer at 90°C for 1 minute to remove solvent to form an adhesive layer having a thickness of 15 μm. Thereafter, the surface of the adhesive layer and the float glass plate were bonded together using a roll laminator (MRK-600) manufactured by MCK Corporation to make the configurations shown in Table 3, thereby producing the projected image display members (referred to as projected image display members 1 to 8 and 10 to 15). For the metal layer film 1, the film 1 side was bonded to the glass plate.

[Coating material A]

Acrylic adhesive SK Dyne 2094 (Soken Chemical & Engineering Co., Ltd.) 200 parts by mass
Crosslinking agent E-5XM (manufactured by Soken Chemical & Engineering Co., Ltd.) 0.5 parts by mass
Crosslinking agent L-45 (manufactured by Soken Chemical & Engineering Co., Ltd.) 0.7 parts by mass
Toluene 30 parts by mass
MEK (methyl ethyl ketone) 30 parts by mass.

(Production of A4-size projected image display member 9)

The following coating material B was applied to the surface of a multilayer film 3 using a bar coater, dried in a hot air convection dryer at 90°C for 1 minute to remove solvent, and then irradiated with UV light at 80 W/cm and a conveying speed of 20 m/min to form a hard coat (HC) layer having a thickness of 5 μm on the surface of the multilayer film 3. After the hard coat was formed, the non-hard coat-formed surface and an A4-size float glass plate having a thickness of 2 mm were bonded with an adhesive layer having a thickness of 15μm formed in the same manner as in the method of producing the projected image display member 1 described above so as to obtain the configuration shown in Table 3, thereby producing a projected image display member.

[Coating material B]

Urethane acrylate UA-122P (SHIN-NAKAMURA CHEMICAL Co., Ltd.): 50 parts by mass
Urethane acrylate U-15HA (SHIN-NAKAMURA CHEMICAL Co., Ltd.): 50 parts by mass
Photoinitiator "Irgacure" (registered trademark)184 (Ciba Specialty Chemicals): 5 parts by mass
MEK:110 parts by mass.

[Table 3]

[Table 3]

| | Configuration of projected image display member | Optical characteristics | | | | | | Pencil hardness |
|---|---|---|---|---|---|---|---|---|
| | | Transmittance of light incident perpendicularly | Reflectance of P-polarized light component | | | | Variation in azimuth angle of Rp60 | |
| | | | Rp20 | Rp40 | Rp60 | Rp70 | | |
| | | (%) | (%) | (%) | (%) | (%) | (%) | (- ) |
| Projected image display member 1 | Glass/Adhesive layer/Multilayer film 1 | 91 | 8 | 11 | 22 | 33 | 2 | B |
| Projected image display member 2 | Glass/Adhesive layer/Multilayer film 2 | 91 | 9 | 13 | 33 | 48 | 3 | B |
| Projected image display member 3 | Glass/Adhesive layer/Multilayer film 3 | 91 | 9 | 18 | 44 | 58 | 3 | B |
| Projected image display member 4 | Glass/Adhesive layer/Multilayer film 4 | 86 | 11 | 32 | 56 | 70 | 4 | B |
| Projected image display member 5 | Glass/Adhesive layer/Multilayer film 5 | 86 | 14 | 23 | 56 | 68 | 13 | B |
| Projected image display member 6 | Glass/Adhesive layer/Multilayer film 6 | 92 | 7 | 8 | 16 | 28 | 2 | B |
| Projected image display member 7 | Glass/Adhesive layer/Multilayer film 7 | 92 | 9 | 20 | 49 | 63 | 3 | B |
| Projected image display member 8 | Glass/Adhesive layer/Metal layer film 1 | 78 | 18 | 14 | 10 | 16 | 1 | HB |
| Projected image display member 9 | Glass/Adhesive layer/Multilayer film 3/HC | 92 | 9 | 17 | 44 | 58 | 3 | 2H |
| Projected image display member 10 | Glass/Adhesive layer/Film 1 | 92 | 7 | 3 | 0 | 10 | 3 | B |

(continued)

| | Configuration of projected image display member | Optical characteristics | | | | | | Pencil hardness |
|---|---|---|---|---|---|---|---|---|
| | | Transmittance of light incident perpendicularly | Reflectance of P-polarized light component | | | | Variation in azimuth angle of Rp60 | |
| | | | Rp20 | Rp40 | Rp60 | Rp70 | | |
| | | (%) | (%) | (%) | (%) | (%) | (%) | (- ) |
| Projected image display member 11 | Glass/Adhesive layer/Multilayer film 8 | 48 | 53 | 62 | 75 | 80 | 4 | B |
| Projected image display member 12 | Glass/Adhesive layer/Multilayer film 9 | 45 | 100 | 100 | 100 | 100 | 51 | B |
| Projected image display member 13 | Glass/Adhesive layer/Multilayer film 10 | 92 | 9 | 10 | 21 | 31 | 6 | B |
| Projected image display member 14 | Glass/Adhesive layer/Multilayer film 11 | 92 | 10 | 11 | 25 | 37 | 8 | B |
| Projected image display member 15 | Glass/Adhesive layer/Multilayer film 12 | 92 | 11 | 12 | 28 | 40 | 10 | B |

(Production of automobile's windshield-size projected image display members 16 to 23, and 25 to 30)

Two concave glass plates measuring 1,000 mm long x 1,500 mm wide x 2 mm thick with a maximum curvature depth of 50 mm were used and laminated with the concave surfaces facing up in the following order: glass plate/760 $\mu$m thick PVB (polyvinyl butyrate) layer/glass plate. Thereafter, the obtained glass laminate was placed in a rubber vacuum bag and held at 60°C for 30 minutes while being subjected to suction under reduced pressure, and further held at 100°C for 60 minutes for preliminary crimping. The glass laminate which had been subjected to preliminary crimping was placed in an autoclave and processed under high temperature and pressure at 140°C and 13 atm for 30 minutes to obtain laminated glass. Next, an acrylic optical adhesive layer TD-06 manufactured by TOMOEGAWA CORPORATION having a thickness of 25 $\mu$m and a multilayer film were laminated in this order on the outermost concave surface of the laminated glass. Furthermore, a tempered glass plate of the same shape having a release treatment film formed thereon was laminated on the multilayer film such that the release treatment surface faced the multilayer film side, thereby constructing a glass laminate. The glass laminate was placed in a rubber vacuum bag again and degassed for 10 minutes while being subjected to suction under reduced pressure, and held at 130°C for 5 minutes for preliminary crimping. Next, the glass laminate which had been subjected to preliminary crimping was treated under high temperature and pressure at 140°C and 13 atm (1.3 $\times$ 10$^6$) for 15 minutes to perform main crimping. Thereafter, the glass laminate after completion of the main crimping was removed from the autoclave and allowed to cool, and the tempered glass plate was removed to obtain a desired windshield-size projected image display member.

(Production of automobile's windshield-size projected image display member 24)

The coating material B described above was applied to the surface of a multilayer film 3 using a bar coater, dried in a hot air convection dryer at 90°C for 1 minute to remove solvent, and then irradiated with UV light at 80 W/cm and a conveying speed of 20 m/min to form a hard coat (HC) layer having a thickness of 5 $\mu$m on the surface of the multilayer film 3. After the hard coat was formed, the films were bonded in the same manner as in the method of producing a windshield-size image display unit 1 described above, to obtain the structure shown in Table 4, thereby producing a projected image display member.

[Table 4]

[Table 4]

| | Configuration of projected image display member | Area A | In-plane retardance | | Variation in orientation angle |
|---|---|---|---|---|---|
| | | | Average | Variation | |
| | | (nm·%) | (nm) | (-) | (°) |
| Projected image display member 16 | Laminated glass/Adhesive layer/-Multilayer film 1 | 300 | 1100 | 0.22 | 34 |
| Projected image display member 17 | Laminated glass/Adhesive layer/-Multilayer film 2 | 450 | 1100 | 0.22 | 32 |
| Projected image display member 18 | Laminated glass/Adhesive layer/-Multilayer film 3 | 600 | 1100 | 0.22 | 32 |
| Projected image display member 19 | Laminated glass/Adhesive layer/-Multilayer film 4 | 800 | 1100 | 0.22 | 31 |
| Projected image display member 20 | Laminated glass/Adhesive layer/-Multilayer film 5 | 4200 | 2100 | 0.1 | 12 |
| Projected image display member 21 | Laminated glass/Adhesive layer/-Multilayer film 6 | 200 | 1800 | 0.25 | 33 |
| Projected image display member 22 | Laminated glass/Adhesive layer/-Multilayer film 7 | 700 | 1200 | 0.22 | 31 |
| Projected image display member 23 | Laminated glass/Adhesive layer/-Metal layer film 1 | 0 | 20 | 0.5 | 0 |
| Projected image display member 24 | Laminated glass/Adhesive layer/-Multilayer film 3/HC | 600 | 1100 | 0.22 | 32 |
| Projected image display member 25 | Laminated glass/Adhesive layer/-Film 1 | 0 | 1200 | 0.38 | 36 |
| Projected image display member 26 | Laminated glass/Adhesive layer/-Multilayer film 8 | 80 | 1100 | 0.21 | 29 |
| Projected image display member 27 | Laminated glass/Adhesive layer/-Multilayer film 9 | 26000 | 13000 | 0.02 | 1 |
| Projected image display member 28 | Laminated glass/Adhesive layer/-Multilayer film 10 | 2200 | 2600 | 0.08 | 10 |
| Projected image display member 29 | Laminated glass/Adhesive layer/-Multilayer film 11 | 2500 | 3200 | 0.04 | 6 |
| Projected image display member 30 | Laminated glass/Adhesive layer/-Multilayer film 12 | 2500 | 3600 | 0.03 | 3 |

(Examples 1 to 48, Comparative Examples 1 to 16)

Table 5 shows the state of the light emitted by the light source, the relation between the combination of the material for polarization control layer and the azimuth angle of its main orientation axis or transmission axis, the installation conditions of various head-up displays, and the orientation angle of the projected image display members, as well as the evaluation results of the displayed image visibility, for A4-size projected image display members 1 to 15 as well as projected image display members 16 to 30 using automobile's windshield-size laminated glass.

[Table 5-1]

[Table 5-1]

[Table 5-1]

| | Configuration of projected image display member | Light emitted from light source | | | Polarization control layer | | | Angle 02 | Evaluation of head-up display | | | | | |
|---|---|---|---|---|---|---|---|---|---|---|---|---|---|---|
| | | Type of polarized light | Azimuth angle of polarized light | Rotation direction | Material | Azimuth angle of main orientation axis | Azimuth angle of transmission axis | | Sratio 1 | Sratio 2 | Pratio 2 | Display performance of projected image | Visibility of double image of projected image | Visibility of background |
| | | (-) | (°) | (-) | (-) | (°) | (°) | (°) | (-) | (-) | (-) | (-) | (-) | (-) |
| Example 1 | Projected image display member 1 | Linear polarized light | 90 | - | λ/2 retardation plate | 45 | - | 60 | 1.0 | 0.0 | 1.0 | B | A | A |
| Example 2 | Projected image display member 2 | Linear polarized light | 90 | - | λ/2 retardation plate | 45 | - | 60 | 1.0 | 0.0 | 1.0 | A | A | A |
| Example 3 | Projected image display member 3 | Linear polarized light | 90 | - | λ/2 retardation plate | 45 | - | 60 | 1.0 | 0.0 | 1.0 | A | A | A |
| Example 4 | Projected image display member 4 | Linear polarized light | 90 | - | λ/2 retardation plate | 45 | - | 60 | 1.0 | 0.0 | 1.0 | A | A | B |
| Example 5 | Projected image display member 5 | Linear polarized light | 90 | - | λ/2 retardation plate | 45 | - | 60 | 1.0 | 0.0 | 1.0 | A | A | B |

(continued)

| Configuration of projected image display member | Light emitted from light source | | | Polarization control layer | | | | Evaluation of head-up display | | | | | |
|---|---|---|---|---|---|---|---|---|---|---|---|---|---|
| | Type of polarized light | Azimuth angle of polarized light | Rotation direction | Material | Azimuth angle of main orientation axis | Azimuth angle of transmission axis | Angle 02 | Sratio 1 | Sratio 2 | Pratio 2 | Display performance of projected image | Visibility of double image of projected image | Visibility of background |
| | (-) | (°) | (-) | (-) | (°) | (°) | (°) | (-) | (-) | (-) | (-) | (-) | (-) |
| Example 6 | Projected image display member 6 | Linear polarized light | 90 | - | $\lambda/2$ retardation plate | 45 | - | 60 | 1.0 | 0.0 | 1.0 | B | A | A |
| Example 7 | Projected image display member 7 | Linear polarized light | 90 | - | $\lambda/2$ retardation plate | 45 | - | 60 | 1.0 | 0.0 | 1.0 | A | A | B |
| Example 8 | Projected image display member 8 | Linear polarized light | 90 | - | $\lambda/2$ retardation plate | 45 | - | 60 | 1.0 | 0.0 | 1.0 | B | A | B |
| Example 9 | Projected image display member 3 | Linear polarized light | 90 | - | $\lambda/2$ retardation plate | 35 | - | 60 | 1.0 | 0.3 | 0.73 | A | B | A |
| Example 10 | Projected image display member 3 | Linear polarized light | 90 | - | $\lambda/2$ retardation plate | 55 | - | 60 | 1.0 | 0.3 | 0.73 | A | B | A |
| Example 11 | Projected image display member 3 | Linear polarized light | 45 | - | Polarizing plate | - | 0 | 60 | 0.5 | 0.0 | 1.0 | A | A | A |

| | Configuration of projected image display member | Light emitted from light source | | | Polarization control layer | | | Angle 02 | Evaluation of head-up display | | | | | |
|---|---|---|---|---|---|---|---|---|---|---|---|---|---|---|
| | | Type of polarized light | Azimuth angle of polarized light | Rotation direction | Material | Azimuth angle of main orientation axis | Azimuth angle of transmission axis | | Sratio 1 | Sratio 2 | Pratio 2 | Display performance of projected image | Visibility of double image of projected image | Visibility of background |
| | | (-) | (°) | (-) | (-) | (°) | (°) | (°) | (- ) | (-) | (-) | (-) | (-) | (-) |
| Example 12 | Projected image display member 3 | Linear polarized light | 45 | - | Polarizing plate | - | -20 | 60 | 0.5 | 0.3 | 0.73 | A | B | A |
| Example 13 | Projected image display member 3 | Linear polarized light | 45 | - | Polarizing plate | - | 20 | 60 | 0.5 | 0.3 | 0.73 | A | B | A |
| Example 14 | Projected image display member 3 | Circular polarization | - | Counterclockwise | λ/4 retardation plate | 45 | - | 60 | 0.5 | 0.0 | 1.0 | A | A | A |
| Example 15 | Projected image display member 3 | Circular polarization | | Counterclockwise | λ/4 retardation plate | 25 | - | 60 | 0.5 | 0.3 | 0.73 | A | B | A |
| Example 16 | Projected image display member 3 | Circular polarization | | Counterclockwise | λ/4 retardation plate | 65 | - | 60 | 0.5 | 0.3 | 0.73 | A | B | A |
| Example 17 | Projected image display member 9 | Linear polarized light | 90 | - | λ/2 retardation plate | 45 | - | 60 | 1.0 | 0.0 | 1.0 | A | A | A |

EP 4 692 895 A1

(continued)

| | Configuration of projected image display member | Light emitted from light source | | | Polarization control layer | | | Angle 02 | Evaluation of head-up display | | | | | |
|---|---|---|---|---|---|---|---|---|---|---|---|---|---|---|
| | | Type of polarized light | Azimuth angle of polarized light | Rotation direction | Material | Azimuth angle of main orientation axis | Azimuth angle of transmission axis | | Sratio 1 | Sratio 2 | Pratio 2 | Display performance of projected image | Visibility of double image of projected image | Visibility of background |
| | | (-) | (°) | (-) | (-) | (°) | (°) | (°) | (- ) | (-) | (-) | (-) | (-) | (-) |
| Example 18 | Projected image display member 13 | Linear polarized light | 90 | - | λ/2 retardation plate | 45 | - | 60 | 1.0 | 0.0 | 1.0 | A | A | A |
| Example 19 | Projected image display member 14 | Linear polarized light | 90 | - | λ/2 retardation plate | 45 | - | 60 | 1.0 | 0.0 | 1.0 | A | A | A |
| Example 20 | Projected image display member 14 | Linear polarized light | 90 | - | λ/2 retardation plate | 55 | - | 60 | 1.0 | 0.3 | 0.73 | A | A | A |
| Example 21 | Projected image display member 14 | Linear polarized light | 45 | - | Polarizing plate | - | 0 | 60 | 0.5 | 0.0 | 1.0 | A | A | A |
| Example 22 | Projected image display member 14 | Circular polarization | - | Counterclockwise | λ/4 retardation plate | 45 | - | 60 | 0.5 | 0.0 | 1.0 | A | A | A |
| Example 23 | Projected image display member 15 | Linear polarized light | 90 | - | λ/2 retardation plate | 45 | - | 60 | 1.0 | 0.0 | 1.0 | A | A | A |

| | Configuration of projected image display member | Light emitted from light source | | | Polarization control layer | | | Angle 02 | Evaluation of head-up display | | | | | |
|---|---|---|---|---|---|---|---|---|---|---|---|---|---|---|
| | | Type of polarized light | Azimuth angle of polarized light | Rotation direction | Material | Azimuth angle of main orientation axis | Azimuth angle of transmission axis | | Sratio 1 | Sratio 2 | Pratio 2 | Display performance of projected image | Visibility of double image of projected image | Visibility of background |
| | | (-) | (°) | (-) | (-) | (°) | (°) | (°) | (-) | (-) | (-) | (-) | (-) | (-) |
| Example 24 | Projected image display member 15 | Linear polarized light | 90 | - | λ/2 retardation plate | 45 | - | 45 | 1.0 | 0.0 | 1.0 | A | B | A |
| Comparative Example 1 | Projected image display member 10 | Linear polarized light | 90 | - | λ/2 retardation plate | 45 | - | 60 | 1.0 | 0.0 | 1.0 | C | D | A |
| Comparative Example 2 | Projected image display member 11 | Linear polarized light | 90 | - | λ/2 retardation plate | 45 | - | 60 | 1.0 | 0.0 | 1.0 | A | A | C |
| Comparative Example 3 | Projected image display member 12 | Linear polarized light | 90 | - | λ/2 retardation plate | 45 | - | 60 | 1.0 | 0.0 | 1.0 | A | A | C |
| Comparative Example 4 | Projected image display member 3 | Linear polarized light | 90 | - | - | - | - | 60 | 1.0 | 1.0 | 0.0 | A | C | A |
| Comparative Example 5 | Projected image display member 3 | Linear polarized light | 45 | - | - | - | - | 60 | 0.5 | 0.5 | 0.50 | A | C | A |

EP 4 692 895 A1

| | Configuration of projected image display member | Light emitted from light source | | | | Polarization control layer | | | | Evaluation of head-up display | | | | | |
|---|---|---|---|---|---|---|---|---|---|---|---|---|---|---|---|
| | | Type of polarized light | Azimuth angle of polarized light | Rotation direction | Material | Azimuth angle of main orientation axis | Azimuth angle of transmission axis | Angle 02 | Sratio 1 | Sratio 2 | Pratio 2 | Display performance of projected image | Visibility of double image of projected image | Visibility of background |
| | | (-) | (°) | (-) | (-) | (°) | (°) | (°) | (-) | (-) | (-) | (-) | (-) | (-) |
| Comparative Example 6 | Projected image display member 3 | Circular polarization | - | Counterclockw ise | - | - | - | 60 | 0.5 | 0.5 | 0.50 | A | C | A |
| Comparative Example 7 | Projected image display member 3 | Linear | 90 | - | λ/2 retardati on plate | 90 | - | 60 | 1.0 | 1.0 | 0.0 | A | C | A |
| Comparative Example 8 | Projected image display member 3 | Circular polarization | - | Counterclockw ise | λ/4 retardati on plate | -45 | - | 60 | 0.5 | 1.0 | 0.0 | A | C | A |

EP 4 692 895 A1

[Table 5-2]

[Table 5-2]

Table 5 (continued)

| | Configuration of projected image display member | Light emitted from light source | | | Polarization control layer | | | Angle θ formed by orientation axis of projected image display member and reference axis | | | Angle 02 | Angle formed by electric field oscillating plane of P-polarized light orientation axis at point C | Evaluation of head-up display | | | | |
|---|---|---|---|---|---|---|---|---|---|---|---|---|---|---|---|---|---|
| | | Type of polarized light | Azimuth angle of polarized light | Rotation direction | Material | Azimuth angle of main orientation axis | Azimuth angle of transmission axis | MAX value | MIN value | Do orientation angles at five points satisfy 0° ≤ θ ≤ 30°? | | | Srati o1 | Srati o2 | Prati o2 | Visibility of double image over wide range of projected image | Iridescent irregularities when wearing polarized sunglasses |
| | | (-) | (°) | (-) | (-) | (°) | (°) | (°) | (°) | (-) | (°) | (°) | (-) | (-) | (-) | (-) | (-) |
| Example 25 | Projected image display member 16 | Linear polarized light | 90 | - | λ/2 retardation plate | 45 | - | 36 | 2 | No | 60 | 67 | 1.0 | 0.0 | 1.0 | D | C |
| Example 26 | Projected image display member 17 | Linear polarized light | 90 | - | λ/2 retardation plate | 45 | - | 32 | 0 | No | 60 | 67 | 1.0 | 0.0 | 1.0 | D | C |
| Example 27 | Projected image display member 18 | Linear polarized light | 90 | - | λ/2 retardation plate | 45 | - | 32 | 0 | No | 60 | 67 | 1.0 | 0.0 | 1.0 | C | C |
| Example 28 | Projected image display member 19 | Linear polarized light | 90 | - | λ/2 retardation plate | 45 | - | 32 | 1 | No | 60 | 67 | 1.0 | 0.0 | 1.0 | C | C |
| Example 29 | Projected image display member 20 | Linear polarized light | 90 | - | λ/2 retardation plate | 45 | - | 12 | 0 | Yes | 60 | 80 | 1.0 | 0.0 | 1.0 | B | C |

| | | Light emitted from light source | | | Polarization control layer | | | Angle θ formed by orientatio n axis of projected image display member and reference axis | | Do orientat ion angles at five points satisfy 0° ≤ θ ≤ 30°? | Ang le 02 | Angle formed by electric field oscillati ng plane of P- polariz ed light orientat ion axis at point C | Evaluation of head-up display | | | | |
|---|---|---|---|---|---|---|---|---|---|---|---|---|---|---|---|---|---|
| | Configura tion of projected image display member | Type of polarize d light | Azimu th angle of polari zed light | Rotati on directi on | Materia 1 | Azimut h angle of main orientat ion axis | Azimuth angle of transmis sion axis | MA X valu e | MI N val ue | | | | Srati o1 | Srati o2 | Prati o2 | Visibil ity of double image over wide range of project ed image | Iridescen t irregulari ties when wearing polarized sunglass es |
| | | (- ) | (°) | (- ) | (-) | (°) | (°) | (°) | (°) | (- ) | (°) | (°) | (-) | (-) | (-) | (-) | (-) |
| Example 30 | Projected image dis- play member 21 | Linear po- larize d light | 90 | - | λ/2 retardat ion plate | 45 | - | 34 | 1 | No | 60 | 66 | 1.0 | 0.0 | 1.0 | D | C |
| Example 31 | Projected image dis- play member 22 | Linear po- larize d light | 90 | - | λ/2 retardat ion plate | 45 | - | 32 | 1 | No | 60 | 68 | 1.0 | 0.0 | 1.0 | C | C |
| Example 32 | Projected image dis- play member 23 | Linear po- larize d light | 90 | - | λ/2 retardat ion plate | 45 | - | 0 | 0 | Yes | 60 | 90 | 1.0 | 0.0 | 1.0 | A | A |
| Example 33 | Projected image dis- play member 18 | Linear po- larize d light | 90 | - | λ/2 retardat ion plate | 35 | - | 32 | 0 | No | 60 | 67 | 1.0 | 0.3 | 0.73 | D | C |
| Example 34 | Projected image dis- play member 18 | Linear po- larize d light | 90 | - | λ/2 retardat ion plate | 55 | - | 32 | 0 | No | 60 | 67 | 1.0 | 0.3 | 0.73 | D | C |
| Example 35 | Projected image dis- play member 18 | Linear po- larize d light | 45 | - | Polarizi ng plate | - | 0 | 32 | 0 | No | 60 | 67 | 0.5 | 0.0 | 1.0 | C | C |

Table 5 (continued)

54

EP 4 692 895 A1

(continued)

| | | Light emitted from light source | | | Polarization control layer | | | Angle θ formed by orientation axis of projected image display member and reference axis | | Do orientation angles at five points satisfy 0° ≤ θ ≤ 30°? | Angle 02 | Angle formed by electric field oscillating plane of P-polarized light orientation axis at point C | Evaluation of head-up display | | | | |
|---|---|---|---|---|---|---|---|---|---|---|---|---|---|---|---|---|---|
| | Configuration of projected image display member | Type of polarized light | Azimuth angle of polarized light | Rotation direction | Material | Azimuth angle of main orientation axis | Azimuth angle of transmission axis | MAX value | MIN value | | | | Sratio1 | Sratio2 | Pratio2 | Visibility of double image over wide range of projected image | Iridescent irregularities when wearing polarized sunglasses |
| | | (-) | (°) | (-) | (-) | (°) | (°) | (°) | (°) | (-) | (°) | (°) | (-) | (-) | (-) | (-) | (-) |
| Example 36 | Projected image display member 18 | Linear polarized light | 45 | - | Polarizing plate | - | -20 | 32 | 0 | No | 60 | 67 | 0.5 | 0.3 | 0.73 | D | C |
| Example 37 | Projected image display member 18 | Linear polarized light | 45 | - | Polarizing plate | - | 20 | 32 | 0 | No | 60 | 67 | 0.5 | 0.3 | 0.73 | D | C |
| Example 38 | Projected image display member 18 | Circular polarization | - | Counter-clockwise | λ/4 retardation plate | 45 | - | 32 | 0 | No | 60 | 67 | 0.5 | 0.0 | 1.0 | C | C |
| Example 39 | Projected image display member 18 | Circular polarization | - | Counter-clockwise | λ/4 retardation plate | 25 | - | 32 | 0 | No | 60 | 67 | 0.5 | 0.3 | 0.73 | D | C |
| Example 40 | Projected image display member 18 | Circular polarization | - | Counter-clockwise | λ/4 retardation plate | 65 | - | 32 | 0 | No | 60 | 67 | 0.5 | 0.3 | 0.73 | D | C |
| Example 41 | Projected image display member 24 | Linear polarized light | 90 | - | λ/2 retardation plate | 45 | - | 32 | 0 | No | 60 | 67 | 1.0 | 0.0 | 1.0 | C | C |

Table 5 (continued)

EP 4 692 895 A1

(continued)

EP 4 692 895 A1

| | Configuration of projected image display member | Light emitted from light source | | | Polarization control layer | | | Angle θ formed by orientation axis of projected image display member and reference axis | | Do orientation angles at five points satisfy 0° ≤ θ ≤ 30°? | Angle 02 | Angle formed by electric field oscillating plane of P-polarized light orientation axis at point C | Evaluation of head-up display | | | | |
|---|---|---|---|---|---|---|---|---|---|---|---|---|---|---|---|---|---|
| | | Type of polarized light | Azimuth angle of polarized light | Rotation direction | Materia 1 | Azimuth angle of main orientation axis | Azimuth angle of transmission axis | MAX value | MIN value | | | | Sratio1 | Sratio2 | Pratio2 | Visibility of double image over wide range of projected image | Iridescent irregularities when wearing polarized sunglasses |
| | | (-) | (°) | (-) | (-) | (°) | (°) | (°) | (°) | (-) | (°) | (°) | (-) | (-) | (-) | (-) | (-) |
| Example 42 | Projected image display member 28 | Linear polarized light | 90 | - | λ/2 retardation plate | 45 | - | 10 | 0 | Yes | 60 | 83 | 1.0 | 0.0 | 1.0 | B | B |
| Example 43 | Projected image display member 29 | Linear polarized light | 90 | - | λ/2 retardation plate | 45 | - | 6 | 0 | Yes | 60 | 87 | 1.0 | 0.0 | 1.0 | B | A |
| Example 44 | Projected image display member 29 | Linear polarized light | 90 | - | λ/2 retardation plate | 55 | - | 6 | 0 | Yes | 60 | 87 | 1.0 | 0.3 | 0.73 | C | B |
| Example 45 | Projected image display member 29 | Linear polarized light | 45 | - | Polarizing plate | - | 0 | 6 | 0 | Yes | 60 | 87 | 0.5 | 0.0 | 1.0 | B | A |
| Example 46 | Projected image display member 29 | Circular polarization | - | Counter-clockwise | λ/4 retardation plate | 45 | - | 6 | 0 | Yes | 60 | 87 | 0.5 | 0.0 | 1.0 | B | A |
| Example 47 | Projected image display member 30 | Linear polarized light | 90 | - | λ/2 retardation plate | 45 | - | 3 | 0 | Yes | 60 | 89 | 1.0 | 0.0 | 1.0 | A | A |

Table 5 (continued)

| Table 5 (continued) | | | | | | | | | | | | | | | |
|---|---|---|---|---|---|---|---|---|---|---|---|---|---|---|---|
| | | Light emitted from light source | | | Polarization control layer | | | Angle θ formed by orientation axis of projected image display member and reference axis | | Do orientation angles at five points satisfy 0° ≤ θ ≤ 30°? | Angle 02 | Angle formed by electric field oscillating plane of P-polarized light orientation axis at point C | Evaluation of head-up display | | | | |
| | Configuration of projected image display member | Type of polarized light | Azimuth angle of polarized light | Rotation direction | Material | Azimuth angle of main orientation axis | Azimuth angle of transmission axis | MAX value | MIN value | | | | Sratio1 | Sratio2 | Pratio2 | Visibility of double image over wide range of projected image | Iridescent irregularities when wearing polarized sunglasses |
| | | (- ) | (°) | (- ) | (-) | (°) | (°) | (°) | (°) | (- ) | (°) | (°) | (-) | (-) | (-) | (-) | (-) |
| Example 48 | Projected image display member 30 | Linear polarized light | 90 | - | λ/2 retardation plate | 45 | - | 3 | 0 | Yes | 45 | 89 | 1.0 | 0.0 | 1.0 | C | A |
| Comparative Example 9 | Projected image display member 25 | Linear polarized light | 90 | - | λ/2 retardation plate | 45 | - | 39 | 3 | No | 60 | 60 | 1.0 | 0.0 | 1.0 | E | C |
| Comparative Example 10 | Projected image display member 26 | Linear polarized light | 90 | - | λ/2 retardation plate | 45 | - | 31 | 2 | No | 60 | 69 | 1.0 | 0.0 | 1.0 | B | C |
| Comparative Example 11 | Projected image display member 27 | Linear polarized light | 90 | - | λ/2 retardation plate | 45 | - | 90 | 89 | Yes | 60 | 1 | 1.0 | 0.0 | 1.0 | A | A |
| Comparative Example 12 | Projected image display member 18 | Linear polarized light | 90 | - | - | - | - | 32 | 0 | No | 60 | 67 | 1.0 | 1.0 | 0.0 | D | C |
| Comparative Example 13 | Projected image display member 18 | Linear polarized light | 45 | - | - | - | - | 32 | 0 | No | 60 | 67 | 0.5 | 0.5 | 0.50 | D | C |

EP 4 692 895 A1

57

(continued)

| | | Light emitted from light source | | | Polarization control layer | | | Angle θ formed by orientatio n axis of projected image display member and reference axis | | Do orientat ion angles at five points satisfy 0° ≤ θ ≤ 30°? | Ang le 02 | Angle formed by electric field oscillati ng plane of P-polariz ed light orientat ion axis at point C | Evaluation of head-up display | | | | |
|---|---|---|---|---|---|---|---|---|---|---|---|---|---|---|---|---|---|
| | Configura tion of projected image display member | Type of polarize d light | Azimu th angle of polari zed light | Rotati on directi on | Materia 1 | Azimut h angle of main orientat ion axis | Azimuth angle of transmis sion axis | MA X valu e | MI N val ue | | | | Srati o1 | Srati o2 | Prati o2 | Visibil ity of double image over wide range of project ed image | Iridescen t irregulari ties when wearing polarized sunglass es |
| | | (- ) | (°) | (- ) | (-) | (°) | (°) | (°) | (°) | (- ) | (°) | (°) | (-) | (-) | (-) | (-) | (-) |
| Comparative Ex-ample 14 | Projected image dis-play member 18 | Circular polarizat ion | - | Counte r-clockw ise | - | - | - | 32 | 0 | No | 60 | 67 | 0.5 | 0.5 | 0.50 | D | C |
| Comparative Ex-ample 15 | Projected image dis-play member 18 | Linear | 90 | - | λ/2 retardat ion plate | 90 | - | 32 | 0 | No | 60 | 67 | 1.0 | 1.0 | 0.0 | D | C |
| Comparative Ex-ample 16 | Projected image dis-play member 18 | Circular polarizat ion | - | Counte r-clockw ise | λ/4 retardat ion plate | -45 | - | 32 | 0 | No | 60 | 67 | 0.5 | 1.0 | 0.0 | D | C |

Table 5 (continued)

58

EP 4 692 895 A1

Industrial Applicability

According to the present invention, by controlling the polarized light emitted from the light source to increase the percentage of the P-polarized light components in the image projected onto the projected image display member, it is possible to suppress double images in a wide range of configurations of head-up displays. The head-up display of the present invention can be suitably used as a head-up display (HUD) for vehicles such as automobiles, aircraft, digital signage, building windows, game devices, etc.

Reference Signs List

1 Head-up display
2 Light source
3 Projected image display member
4 Polarization control layer
5 Image (light) emitted from light source
6 Image reflected by projected image display member and visually recognized by user
7 User
8 Dashboard
9 Reflective layer
10 Part of vehicle
11 Steering wheel
12 Transparent cover
13 Plane mirror
14 Concave mirror
15 Aperture window
16 Transparent substrate
17 Adhesive layer
18 Conventional projected image display member using glass or transparent plastic film
19 Projected image display member
20 Reflectance of P-polarized light
21 Reflectance of S-polarized light
22 Direction of electric field's oscillation of P-polarized light component when projected image display member serves as reflective surface
23 Direction of electric field's oscillation having maximum intensity in light emitted from light source
24 Azimuth angle of linear polarized light emitted from light source
25 Main orientation axis of $\lambda/2$ retardation plate
26 Azimuth angle of main orientation axis of $\lambda/2$ retardation plate
27 Direction of electric field's oscillation after linear polarized light emitted from light source passes through $\lambda/2$ retardation plate
28 Rotational direction (counterclockwise) of polarized light emitted from light source
29 Main orientation axis of $\lambda/4$ retardation plate
30 Azimuth angle of main orientation axis of $\lambda/4$ retardation plate
31 Direction of electric field's oscillation with maximum light intensity of elliptical polarization after elliptical polarization (or circular polarization) emitted from light source passes through $\lambda/4$ retardation plate or direction of electric field's oscillation of linear polarized light
32 Rotational direction (clockwise) of polarized light emitted from light source
33 Incident angle of light as source of image
34: Light that provides information about the surrounding scenery
35 Point C
36 Horizontal plane passing through point C
37 Orientation axis at point C
38 Angle $\theta$ formed at point C by orientation axis and reference axis C
39 Point X1
40 Point X2
41 Point Y1
42 Point Y2

43 Optical spectrum A
44 Optical spectrum B
45 Main surrounding region (area A)
46 Area of a partial region surrounded by the range from wavelength n to wavelength n+1
47 Ghost image
48 Image from reflective layer

**Claims**

1. A head-up display comprising: a light source projecting an image; a projected image display member on which the image from the light source is projected; and a polarization control layer,

   wherein the polarization control layer is arranged between the light source and the projected image display member, and has a function of changing a polarization state of a light emitted from the light source,
   a polarized light component which is a S-polarized light with respect to the incidence plane (this polarized light component is referred to as a "S-polarized light component" for convenience) when the projected image display member serves as a reflective surface and a polarized light component which is a P-polarized light with respect to the incidence plane (this polarized light component is referred to as a "P-polarized light component" for convenience) when the projected image display member serves as a reflective surface satisfy the following formulas (1) and (2), and
   the projected image display member has an average reflectance of 5% or more and 100% or less at wavelength range from 400 nm to 700 nm when a linear polarized light containing only the P-polarized light component is incident at an incident angle of 60°, and a transmittance of 50% or more and 100% or less in the visible light wavelength range when a natural light is incident at an incident angle of 0°.

$$Sratio2 < Sratio1 \qquad \text{formula (1)}$$

$$Pratio2 \geq 0.51 \qquad \text{formula (2)}$$

   where Sratio 1 is a ratio of the S-polarized light component to the light emitted from the light source [(intensity of S-polarized light component)/(intensity of S-polarized light component + intensity of P-polarized light component)], Sratio2 is a ratio of the S-polarized light component to the light incident on the projected image display member [(intensity of S-polarized light component)/(intensity of S-polarized light component + intensity of P-polarized light component)], and Pratio2 is a ratio of the P-polarized light component to the light incident on the projected image display member [(intensity of P-polarized light component)/(intensity of S-polarized light component + intensity of P-polarized light component)].

2. The head-up display according to claim 1, wherein the projected image display member comprises at least a transparent substrate and a reflective layer.

3. The head-up display according to claim 2, wherein the projected image display member is a unit further comprising an adhesive layer and a hard coat layer, in which a transparent substrate, an adhesive layer, a reflective layer, and a hard coat layer are laminated in this order.

4. The head-up display according to claim 2 or 3, wherein the reflective layer comprises at least one of a multilayer laminated film consisting of 51 or more layers of different types of thermoplastic resins layered alternately, a metal layer, and a hologram layer.

5. The head-up display according to any one of claims 1 to 3,

   wherein the following relation is satisfied:

$$Rp20 \leq Rp40 < Rp60 < Rp70$$

   where Rp20, Rp40, Rp60, and Rp70 are the average reflectance (%) in a wavelength range from 400 nm to 700 nm when the linear polarized light containing only the P-polarized light component is incident on the projected image display member at angles of 20°, 40°, 60° and 70°, respectively, and
a variation in azimuth angle of the Rp60 is 10% or less.

6. The head-up display according to any one of claims 1 to 3,

wherein for orientation axes on a surface of the projected image display member at points C, X1, X2, Y1, and Y2, the maximum angle among those formed by these orientation axes is 0° or more and 30° or less,
where the point C is the center of the projected image display member,
the point X1 is a midpoint between the point C and an upper end of an intersection line between a plane that includes the vertical direction and is orthogonal to the surface of the projected image display member at the point C and the surface of the projected image display member, the intersection line passing through the point C,
the point X2 is a midpoint between the point C and a lower end of the same intersection line as that described for the point X1,
the point Y1 is a midpoint between the point C and a left end of an intersection line between a plane that includes the horizontal direction and is orthogonal to the surface of the projected image display member at the point C and the surface of the projected image display member, the intersection line passing through the point C, and
the point Y2 is a midpoint between the point C and a right end of the same intersection line as that described for the point Y1.

7. The head-up display according to claim 6,
wherein in the projected image display member, an area (area A, nm·%), surrounded by optical spectra which are an optical spectrum at wavelength range from 400 to 700 nm obtained by making the linear polarized light containing only the P-polarized light component incident at an incident angle of 60° along an incidence plane including an orientation axis at the point C, when a tangent plane including the point C serves as a reflective surface; and an optical spectrum at wavelength range from 400 to 700 nm obtained by making the linear polarized light containing only the P-polarized light component incident at an incident angle of 60° along the incidence plane including an axis orthogonal to the orientation axis at the point C when a tangent plane including the point C serves as a reflective surface, satisfies the following relation:

$$1,000 \leq \text{area A} \leq 4,500.$$

8. The head-up display according to claim 6,
wherein for each of the points C, X1, X2, Y1, and Y2, when an angle is determined, which is formed by an orientation axis at the point and an intersection line between the surface of the projected image display member and a plane that includes the horizontal direction and is orthogonal to the surface of the projected image display member at the point, the intersection line passing through the point, the maximum angle is 20° or less.

9. The head-up display according to claim 6, wherein in the projected image display member, an in-plane retardation determined for each of the points C, X1, X2, Y1, and Y2 is 3,000 nm or more and 10,000 nm or less, and a variation (standard deviation/average) in the values at these five points is 0.1 or less.

10. The head-up display according to claim 6, wherein in the projected image display member, an angle formed by an orientation axis at the point C of the projected image display member and an intersection line between a plane including a direction of electric field's oscillation of the P-polarized light component and a tangent plane including the point C is 70° or more and 90° or less.

11. The head-up display according to any one of claims 1 to 3, wherein the polarization control layer comprises either or both of a polarizing plate and a retardation plate.

12. The head-up display according to any one of claims 1 to 3,

wherein the polarization control layer has a polarizing plate, and
an angle formed by a transmission axis of a polarizing plate and an intersection line between a plane including a direction of electric field's oscillation of the P-polarized light component and a surface of the polarizing plate on an incidence plane when the projected image display member serves as a reflective surface is 15° or less, and the light emitted from the light source is a light including at least one selected from the group consisting of a linear polarized light having an electric field oscillating plane that forms a dihedral angle from -85° to -16° or from 16° to 85° with the plane including a direction of electric field's oscillation of the P-polarized light component on the incidence plane when the projected image display member serves as a reflective surface, an elliptical polarization, and a circular polarization.

13. The head-up display according to any one of claims 1 to 3,

wherein the polarization control layer has a $\lambda/2$ retardation plate,
the light emitted from the light source is a linear polarized light, and
the polarization control layer is placed to satisfy the following relation:

$$\theta_L/2 - 5\ (°) < \theta_{\lambda/2}\ (°) < \theta_L/2 + 5\ (°)$$

where $\theta_L$ (°) is a dihedral angle formed by an oscillating plane of the linear polarized light and a plane including a direction of electric field's oscillation of the P-polarized light component on the incidence plane when the projected image display member serves as a reflective surface, and
$\theta_{\lambda/2}$ (°) is an angle formed by a main orientation axis of the $\lambda/2$ retardation plate and an intersection line between the plane including a direction of electric field's oscillation of the P-polarized light component and a surface of the $\lambda/2$ retardation plate on the incidence plane when the projected image display member serves as a reflective surface.

14. The head-up display according to any one of claims 1 to 3,

wherein the polarization control layer has a $\lambda/4$ retardation plate, and
the light emitted from the light source is a light including either an elliptical polarization or circular polarization, and satisfies the following condition 1 or condition 2:

Condition 1: The light emitted from the light source is an elliptical polarization or a circular polarization in which an electric field vector of an oscillating plane of the light rotates counterclockwise from the light source toward the projected image display member, and the head-up display is placed such that an angle formed by the main orientation axis of the polarization control layer and an intersection line between the surface of the polarization control layer and a plane including a direction of electric field's oscillation of the P-polarized light component on the incidence plane when the projected image display member serves as a reflective surface is in the range of 45° ± 15°;
Condition 2: The light emitted from the light source is an elliptical polarization or a circular polarization in which an electric field vector of an oscillating plane of the light rotates clockwise from the light source toward the projected image display member, and the head-up display is placed such that an angle formed by the main orientation axis of the polarization control layer and an intersection line between the surface of the polarization control layer and the plane including a direction of electric field's oscillation of the P-polarized light component on the incidence plane when the projected image display member serves as a reflective surface is in the range of - 45° ± 15°.

15. The head-up display according to any one of claims 1 to 3, wherein the Sratio2 is 0.2 or less.

16. The head-up display according to any one of claims 1 to 3, further comprising a case that houses the light source, the case having an aperture window with a transparent cover fitted therein through which a light from the light source passes.

17. The head-up display according to claim 16, wherein the polarization control layer is laminated on the transparent cover.

18. The head-up display according to claim 16, wherein the transparent cover has a function of the polarization control layer.

19. The head-up display according to claim 16, wherein the transparent cover further has a heat shielding function.

20. A transport equipment comprising the head-up display according to any one of claims 1 to 3, wherein the light source and the projected image display member are arranged such that a part or all of the light emitted from the light source toward the projected image display member is incident at an angle of 50° to 75° with respect to a tangent plane that is tangent to the center of the surface of the projected image display member.

21. A transport equipment comprising the head-up display according to any one of claims 1 to 3, wherein 02 (°), an incident angle of the light emitted from the light source with respect to a tangent plane that is tangent to the center of the surface of the projected image display member, is 35° or more and 70° or less, and an angle formed by the orientation axis of the projected image display member at the point C and the intersection line between a plane including a direction of electric field's oscillation of the P-polarized light component and the surface of the projected image display member is 70° or more and 90° or less.

22. A building comprising the head-up display according to any one of claims 1 to 3.

Fig. 1

Fig. 2

A          B          C

D          E

Fig. 3

A

S wave      P wave

B

S wave      P wave

Fig. 4

Fig. 5

Fig. 6

Fig. 7

Fig. 8

Fig. 9

Fig. 10

Fig. 11

Fig. 12

Fig. 13

Fig. 14

Fig. 15

Fig. 16

Fig. 17

Fig. 18

Fig. 19

## INTERNATIONAL SEARCH REPORT

| International application No. |
|---|
| **PCT/JP2024/010707** |

| A. | CLASSIFICATION OF SUBJECT MATTER |
|---|---|

*G02B 27/01*(2006.01)i; *B60K 35/23*(2024.01)i
FI:   G02B27/01; B60K35/23

According to International Patent Classification (IPC) or to both national classification and IPC

| B. | FIELDS SEARCHED |
|---|---|

Minimum documentation searched (classification system followed by classification symbols)

G02B27/01; B60K35/23-35/235

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2018-189837 A (CALSONIC KANSEI CORPORATION) 29 November 2018 (2018-11-29) paragraphs [0013]-[0042], fig. 1-8 | 1-2, 11, 13, 15-16, 20 |
| Y | | 3-6, 8, 10, 19, 21-22 |
| A | | 7, 9, 12, 14, 17-18 |
| Y | JP 2021-54061 A (TORAY INDUSTRIES, INC.) 08 April 2021 (2021-04-08) paragraphs [0011]-[0102], fig. 1-3 | 3-6, 8, 10, 19, 21-22 |
| Y | WO 2020/022300 A1 (KONICA MINOLTA, INC.) 30 January 2020 (2020-01-30) paragraphs [0007]-[0018], fig. 1 | 19 |
| Y | WO 2022/179817 A1 (SAINT-GOBAIN GLASS FRANCE) 01 September 2022 (2022-09-01) p. 19, lines 9-16 | 22 |

☑ Further documents are listed in the continuation of Box C.     ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **30 May 2024** | **11 June 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**EP 4 692 895 A1**

## INTERNATIONAL SEARCH REPORT

| | International application No. |
|---|---|
| | **PCT/JP2024/010707** |

### C. DOCUMENTS CONSIDERED TO BE RELEVANT

| Category* | Citation of document, with indication, where appropriate, of the relevant passages | Relevant to claim No. |
|---|---|---|
| P, X | JP 2023-136360 A (KOITO MANUFACTURING CO., LTD.) 29 September 2023 (2023-09-29) paragraphs [0022]-[0049], fig. 1-4 | 1-4, 11, 13, 15-18, 20 |
| P, Y | | 6, 8, 10, 21 |
| A | US 2018/0284431 A1 (E-LEAD ELECTRONIC CO., LTD.) 04 October 2018 (2018-10-04) entire text, all drawings | 1-22 |
| A | WO 2021/161829 A1 (CENTRAL GLASS CO., LTD.) 19 August 2021 (2021-08-19) entire text, all drawings | 1-22 |

Form PCT/ISA/210 (second sheet) (July 2022)

73

## INTERNATIONAL SEARCH REPORT
### Information on patent family members

International application No.

**PCT/JP2024/010707**

| Patent document cited in search report | | | Publication date (day/month/year) | Patent family member(s) | | | Publication date (day/month/year) |
|---|---|---|---|---|---|---|---|
| JP | 2018-189837 | A | 29 November 2018 | (Family: none) | | | |
| JP | 2021-54061 | A | 08 April 2021 | (Family: none) | | | |
| WO | 2020/022300 | A1 | 30 January 2020 | (Family: none) | | | |
| WO | 2022/179817 | A1 | 01 September 2022 | JP paragraph [0076] EP KR CN | 2024-504722 4297967 10-2023-0137957 115250617 | A A1 A A | |
| JP | 2023-136360 | A | 29 September 2023 | WO paragraphs [0022]-[0049], fig. 1-4 | 2023/176507 | A1 | |
| US | 2018/0284431 | A1 | 04 October 2018 | (Family: none) | | | |
| WO | 2021/161829 | A1 | 19 August 2021 | CN | 115066645 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005017600 A
- WO 2019198635 A
- JP 2009037235 A

- JP 2007307893 A
- JP 4691910 B
- JP 4816419 B